# EUROPEAN PATENT APPLICATION

(11) **EP 4 485 981 A1**
(43) Date of publication of application: **01.01.2025**
(21) Application number: 23769448.4
(22) Date of filing: 19.01.2023
(51) Int. Cl.: H04W 4/24

(54) **CHARGING METHOD AND COMMUNICATION APPARATUS**

(30) Priority: 17.03.2022 CN 202210262669
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN); LIAO, Ting, Shenzhen, Guangdong 518129 (CN); ZHENG, Xiaochun, Shenzhen, Guangdong 518129 (CN)
(74) Representative: Thun, Clemens
(86) International application number: PCT/CN2023/073131
(87) International publication number: WO 2023/173937

(57) **Abstract**

Embodiments of this application provide a charging method and a communication apparatus. The method includes: receiving a first message from an application network element of an application, where the first message is used to request to execute a first operation for a target terminal; sending a second message, where the second message is used to request to start charging for the first operation for the target terminal; and sending first charging information, where the first charging information includes execution information of one or more terminals in the target terminal, and the first charging information is used to charge for a process in which the first operation is executed for the one or more terminals. According to this solution, charging is implemented for a terminal management process.

## Description

This application claims priority to Chinese Patent Application No. 202210262669.2, filed on March 17, 2022 and entitled "CHARGING METHOD AND COMMUNICATION APPARATUS", which is incorporated herein by reference in its entirety.

### TECHNICAL FIELD

Embodiments of this application relate to the communication field, and more specifically, to a charging method and a communication apparatus.

### BACKGROUND

Passive internet of things (passive Internet of things, P-IoT) terminals have an application prospect in large-scale deployment, and it is predicted that hundreds of billions of devices will be covered in the future.

Currently, a new passive internet of things technology is proposed to integrate a card reader into an access network device. An enterprise having a terminal management requirement manages the passive internet of things terminals over a deployed 3rd generation partnership project (3rd generation partnership project, 3GPP) network. Using this technology can increase a communication distance and manage the terminals in a unified manner, and provide technical support for large-scale deployment of passive internet of things terminals.

In this new passive internet of things technology, operators will charge enterprises having the terminal management requirement. How to implement charging for a terminal management process is a problem worthy of concern.

### SUMMARY

Embodiments of this application provide a charging method and a communication apparatus, to implement charging for a terminal management process.

According to a first aspect, a charging method is provided. The method may be performed by a terminal management function network element, or may be performed by a chip or a circuit configured in the terminal management function network element. This is not limited in this application.

The method includes: receiving a first message from an application network element of an application, where the first message is used to request to execute a first operation for a target terminal; sending a second message, where the second message is used to request to start charging for the first operation for the target terminal; and sending first charging information, where the first charging information includes execution information of one or more terminals in the target terminal, and the first charging information is used to charge for a process in which the first operation is executed for the one or more terminals.

Based on the foregoing technical solution, the terminal management function network element may initiate a charging request to a charging network element based on the first message, and send charging information to the charging network element after execution of the first operation for the one or more terminals is completed, so that the charging network element can charge, based on the charging request and the charging information, for the process in which the first operation is executed for the one or more terminals. According to this solution, charging is implemented for a terminal management process.

The execution information of the one or more terminals is information obtained by executing the first operation for the one or more terminals.

With reference to the first aspect, in some implementations of the first aspect, the one or more terminals include a first terminal, and the method further includes: obtaining first information, where the first information indicates that execution of the first operation for the first terminal is completed; or the first information includes execution information of the first terminal.

Based on the foregoing solution, after receiving an indication indicating that the execution of the first operation for the first terminal is completed or after receiving the execution information of the first terminal, the terminal management function network element may send execution charging information of the first terminal to the charging network element, so that the charging network element can charge for a process in which the first operation is executed for the first terminal. According to this solution, charging can be implemented at a terminal granularity, to help improve charging flexibility.

With reference to the first aspect, in some implementations of the first aspect, the one or more terminals include at least two first terminals, and the method further includes: obtaining first information, where the first information indicates that execution of the first operation for the first terminals is completed; or the first information includes execution information of the first terminals.

Based on the foregoing solution, after receiving an indication indicating that the execution of the first operation for the at least two first terminals is completed or after receiving the execution information of the at least two first terminals, the terminal management function network element may send execution charging information of the at least two first terminals to the charging network element, so that the charging network element can charge for a process in which the first operation is executed for the at least two first terminals. According to this solution, charging can be implemented for any quantity of terminals, to help improve charging flexibility.

With reference to the first aspect, in some implementations of the first aspect, the first information is from a first access network device or the application network element, and the first access network device is configured to execute the first operation for the first terminal.

Based on the foregoing solution, the method in this application is applicable to a plurality of different architectures, and has high scalability.

With reference to the first aspect, in some implementations of the first aspect, the execution information of the first terminal includes at least one of the following: an identifier of the first terminal and an execution result of executing the first operation for the first terminal.

Based on the foregoing solution, the first charging information may include the execution information of the first terminal, to help improve charging accuracy.

With reference to the first aspect, in some implementations of the first aspect, the one or more terminals include a terminal within a coverage area of a first access network device, and the method further includes: receiving second information from the first access network device, where the second information indicates that execution of the first operation for the terminal, in the target terminal, within the coverage area of the first access network device is completed; or the second information includes execution information of the terminal, in the target terminal, within the coverage area of the first access network device.

Based on the foregoing solution, after receiving an indication indicating that the execution of the first operation for the terminal within the coverage area of the first access network device is completed or after receiving the execution information of the terminal within the coverage area of the first access network device, the terminal management function network element may send, to the charging network element, the execution information of the terminal within the coverage area of the first access network device, so that the charging network element can charge for a process in which the first operation is executed for the terminal within the coverage area of the first access network device. According to this solution, charging can be implemented at an access network device granularity, to help improve charging flexibility.

With reference to the first aspect, in some implementations of the first aspect, the one or more terminals include terminals within coverage areas of at least two first access network devices, and the method further includes: receiving second information from the at least two first access network devices, where the second information indicates that execution of the first operation for the terminals, in the target terminal, within the coverage areas of the first access network devices is completed; or the second information includes execution information of the terminals, in the target terminal, within the coverage areas of the first access network devices.

Based on the foregoing solution, after receiving, from the at least two first access network devices, indications indicating that the execution of the first operation for the terminals within the coverage areas of the first access network devices is completed or after receiving, from the at least two first access network devices, the execution information of the terminals within the coverage areas of the first access network devices, the terminal management function network element may send, to the charging network element, the execution information of the terminals within the coverage areas of the at least two first access network devices, so that the charging network element can charge for a process in which the first operation is executed for the terminals within the coverage areas of the at least two first access network devices. According to this solution, charging can be implemented for an inventory process of any quantity of access network devices, to help improve charging flexibility.

With reference to the first aspect, in some implementations of the first aspect, the execution information of the terminal, in the target terminal, within the coverage area of the first access network device includes at least one of the following: an identifier list of the terminal obtained by the first access network device, a quantity of terminals obtained by the first access network device, and an execution result of executing the first operation for the terminal obtained by the first access network device.

Based on the foregoing solution, the first charging information may include the execution information of the terminal, in the target terminal, within the coverage area of the first access network device, to help improve charging accuracy.

With reference to the first aspect, in some implementations of the first aspect, the method further includes: determining that execution of the first operation for the target terminal is completed; and sending a third message, where the third message is used to request to stop the charging for the first operation for the target terminal.

Based on the foregoing solution, when the execution of the first operation for the target terminals is completed, the terminal management function network element may request to stop the charging for the first operation for the target terminal, to avoid a waste of resources.

With reference to the first aspect, in some implementations of the first aspect, the method further includes: determining one or more access network devices based on the first message; and the determining that execution of the first operation for the target terminal is completed includes: determining, based on second information of the one or more access network devices, that the execution of the first operation for the target terminal is completed, where the second information indicates that execution of the first operation for terminals, in the target terminal, within coverage areas of the one or more access network devices is completed.

With reference to the first aspect, in some implementations of the first aspect, the method further includes: when receiving the first message, starting a timer for executing the first operation for the target terminal; and when the timer expires, sending a third message, where the third message is used to request to stop the charging for the first operation for the target terminal.

Based on the foregoing solution, the terminal management function network element may request, by using the timer, to stop the charging for the first operation for the target terminal when the timer expires, to avoid a waste of resources.

With reference to the first aspect, in some implementations of the first aspect, the first charging information includes an identifier of a first access network device, and the first access network device is configured to execute the first operation for one or more terminals.

Based on the foregoing solution, the first charging information may include the identifier of the first access network device that executes the first operation for the one or more terminals, to help improve charging accuracy.

With reference to the first aspect, in some implementations of the first aspect, the method further includes: sending a policy rule to a terminal management user plane function network element, where the policy rule is used for the first information or the second information, and the terminal management user plane function network element is configured to transmit execution information of the one or more terminals to the application.

Based on the foregoing solution, the terminal management function network element may send a detection rule of the first information or the second information to the terminal management user plane function network element, so that the terminal management user plane function network element can identify the first information or the second information, and further send the first information or the second information to the terminal management function network element. This helps improve accuracy.

With reference to the first aspect, in some implementations of the first aspect, the first message and the second message include at least one of the following: indication information of the first operation, an operation parameter corresponding to the first operation, first indication information, identification information of the target terminal, identification information of the application, address information of the application network element, and first tunnel information, where the first indication information indicates an area in which the first operation is to be executed, and the first tunnel information indicates a user plane port used by a server of the application to receive data.

Based on the foregoing technical solution, the second message may include information different from that in the first message, to provide more charging-related information and improve charging performance.

With reference to the first aspect, in some implementations of the first aspect, the identification information of the target terminal includes at least one of the following information: indication information of any one of the target terminal, a value interval to which an identifier of the target terminal belongs, an identifier list of the target terminal, a group identifier of a terminal group to which the target terminal belongs, identification information of a user to which the target terminal belongs, or identification information of an application to which the target terminal belongs.

Based on the foregoing technical solution, the identification information of the target terminal may be in a plurality of different forms. This improves flexibility of the solution.

With reference to the first aspect, in some implementations of the first aspect, the first operation includes at least one of the following operations: querying a terminal identifier, reading, writing, killing, locking, blockwriting, blockerasing, accessing, encrypting, or decrypting.

According to a second aspect, a charging method is provided. The method may be performed by a session management network element, or may be performed by a chip, a chip system, or a circuit in the session management network element. This is not limited in this application.

The method includes: receiving a fourth message, where the fourth message is used to request to establish a first session, the first session is used for transmission of execution information of executing a first operation for one or more terminals in a target terminal, the fourth message includes a first identifier, and the first identifier identifies charging initiated by a terminal management function network element for the first operation for the target terminal; sending a fifth message, where the fifth message is used to request to start the charging for the first operation for the target terminal, and the fifth message includes the first identifier; and sending second charging information, where the second charging information includes the execution information of the one or more terminals in the target terminal, and the second charging information is used to charge for a process in which the first operation is executed for the one or more terminals.

Based on the foregoing technical solution, the session management network element may initiate a charging request to a charging network element based on the fourth message, and send charging information to the charging network element after execution of the first operation for the one or more terminals is completed, so that the charging network element can charge, based on the charging request and the charging information, for the process in which the first operation is executed for the one or more terminals. According to this solution, charging is implemented for a terminal management process.

The execution information of the one or more terminals is information obtained by executing the first operation for the one or more terminals.

With reference to the second aspect, in some implementations of the second aspect, the one or more terminals include a first terminal, and the method further includes: obtaining first information, where the first information indicates that execution of the first operation for the first terminal is completed; or the first information includes execution information of the first terminal.

Based on the foregoing solution, after receiving an indication indicating that the execution of the first operation for the first terminal is completed or after receiving the execution information of the first terminal, the session management network element may send execution charging information of the first terminal to the charging network element, so that the charging network element can charge for a process in which the first operation is executed for the first terminal. According to this solution, charging can be implemented at a terminal granularity, to help improve charging flexibility.

With reference to the second aspect, in some implementations of the second aspect, the one or more terminals include at least two first terminals, and the method further includes: obtaining first information, where the first information indicates that execution of the first operation for the first terminals is completed; or the first information includes execution information of the first terminals.

Based on the foregoing solution, after receiving an indication indicating that the execution of the first operation for the at least two first terminals is completed or after receiving the execution information of the at least two first terminals, the session management network element may send execution charging information of the at least two first terminals to the charging network element, so that the charging network element can charge for a process in which the first operation is executed for the at least two first terminals. According to this solution, charging can be implemented for any quantity of terminals, to help improve charging flexibility.

With reference to the second aspect, in some implementations of the second aspect, the first information is from a first access network device or an application network element, and the first access network device is configured to execute the first operation for the first terminal.

Based on the foregoing solution, the method in this application is applicable to a plurality of different architectures, and has high scalability.

With reference to the second aspect, in some implementations of the second aspect, the execution information of the first terminal includes at least one of the following: an identifier of the first terminal and an execution result of executing the first operation for the first terminal.

Based on the foregoing solution, first charging information may include the execution information of the first terminal, to help improve charging accuracy.

With reference to the second aspect, in some implementations of the second aspect, the one or more terminals include a terminal within a coverage area of a first access network device, and the method further includes: receiving second information from the first access network device, where the second information indicates that execution of the first operation for the terminal, in the target terminal, within the coverage area of the first access network device is completed; or the second information includes execution information of the terminal, in the target terminal, within the coverage area of the first access network device.

Based on the foregoing solution, after receiving an indication indicating that the execution of the first operation for the terminal within the coverage area of the first access network device is completed or after receiving the execution information of the terminal within the coverage area of the first access network device, the session management network element may send, to the charging network element, the execution information of the terminal within the coverage area of the first access network device, so that the charging network element can charge for a process in which the first operation is executed for the terminal within the coverage area of the first access network device. According to this solution, charging can be implemented at an access network device granularity, to help improve charging flexibility.

With reference to the second aspect, in some implementations of the second aspect, the one or more terminals include terminals within coverage areas of at least two first access network devices, and the method further includes: receiving second information from the at least two first access network devices, where the second information indicates that execution of the first operation for the terminals, in the target terminal, within the coverage areas of the first access network devices is completed; or the second information includes execution information of the terminals, in the target terminal, within the coverage areas of the first access network devices.

Based on the foregoing solution, after receiving, from the at least two first access network devices, indications indicating that the execution of the first operation for the terminals within the coverage areas of the first access network devices is completed or after receiving, from the at least two first access network devices, the execution information of the terminals within the coverage areas of the first access network devices, the session management network element may send, to the charging network element, the execution information of the terminals within the coverage areas of the at least two first access network devices, so that the charging network element can charge for a process in which the first operation is executed for the terminals within the coverage areas of the at least two first access network devices. According to this solution, charging can be implemented for an inventory process of any quantity of access network devices, to help improve charging flexibility.

With reference to the second aspect, in some implementations of the second aspect, the execution information of the terminal, in the target terminal, within the coverage area of the first access network device includes at least one of the following: an identifier list of the terminal obtained by the first access network device, a quantity of terminals obtained by the first access network device, and an execution result of executing the first operation for the terminal obtained by the first access network device.

Based on the foregoing solution, the first charging information may include the execution information of the terminal, in the target terminal, within the coverage area of the first access network device, to help improve charging accuracy.

With reference to the second aspect, in some implementations of the second aspect, the method further includes: sending a sixth message, where the sixth message is used to request to stop the charging for the first operation for the target terminal.

Based on the foregoing solution, when the execution of the first operation for the target terminal is completed, the session management network element may request to stop the charging for the first operation for the target terminal, to avoid a waste of resources.

With reference to the second aspect, in some implementations of the second aspect, the second charging information includes an identifier of a first access network device, and the first access network device is configured to execute the first operation for one or more terminals.

Based on the foregoing solution, the second charging information may include the identifier of the first access network device that executes the first operation for the one or more terminals, to help improve charging accuracy.

With reference to the second aspect, in some implementations of the second aspect, the method further includes: sending a policy rule to a user plane network element, where the policy rule is used for the first information or the second information, and the user plane network element is configured to transmit execution information of the one or more terminals to an application.

Based on the foregoing solution, the session management network element may send a detection rule of the first information or the second information to the user plane network element, so that the user plane network element can identify the first information or the second information, and further send the first information or the second information to the session management network element. This helps improve accuracy.

With reference to the second aspect, in some implementations of the second aspect, the fourth message and the fifth message include at least one of the following: first tunnel information, identification information of the target terminal, and identification information of the application, where the first tunnel information indicates a user plane port used by a server of the application to receive data.

Based on the foregoing technical solution, the fifth message may include information different from that in the fourth message, to provide more charging-related information and improve charging performance.

With reference to the second aspect, in some implementations of the second aspect, the identification information of the target terminal includes at least one of the following information: indication information of any one of the target terminal, a value interval to which an identifier of the target terminal belongs, an identifier list of the target terminal, a group identifier of a terminal group to which the target terminal belongs, identification information of a user to which the target terminal belongs, or identification information of an application to which the target terminal belongs.

Based on the foregoing technical solution, the identification information of the target terminal may be in a plurality of different forms. This improves flexibility of the solution.

With reference to the second aspect, in some implementations of the second aspect, the first operation includes at least one of the following operations: querying a terminal identifier, reading, writing, killing, locking, blockwriting, blockerasing, accessing, encrypting, or decrypting.

According to a third aspect, a charging method is provided. The method may be performed by a first user plane network element, or may be performed by a chip, a chip system, or a circuit in the first user plane network element. This is not limited in this application. For ease of description, an example in which the first user plane network element performs the method is used below for description.

It should be understood that the first user plane network element may be the user plane network element in the method described in the first aspect or the terminal management user plane network element in the third aspect.

The method includes: receiving first data, where the first data includes first information or second information; and sending the first information or the second information, where
the first information indicates that execution of a first operation for a first terminal is completed, or the first information includes execution information of the first terminal; and
the second information indicates that execution of the first operation for a terminal within a coverage area of a first access network device is completed, or the second information includes execution information of the terminal within the coverage of the first access network device.

Based on the foregoing technical solution, the first user plane network element may forward the received first information or second information, so that a terminal management function network element or a session management network element can obtain the first information or the second information, and further send charging information to a charging network element. This solution can be used to support charging for a terminal management process.

The sending the first information or the second information includes: sending the first information or the second information to the terminal management function network element, or sending the first information or the second information to the session management network element.

With reference to the third aspect, in some implementations of the third aspect, the first user plane network element is the terminal management user plane function network element or the user plane network element.

Based on the foregoing solution, the method in this application is applicable to a plurality of different architectures, and has high scalability.

With reference to the third aspect, in some implementations of the third aspect, the execution information of the first terminal includes at least one of the following: an identifier of the first terminal and an execution result of executing the first operation for the first terminal.

Based on the foregoing solution, first charging information may include the execution information of the first terminal, to help improve charging accuracy.

With reference to the third aspect, in some implementations of the third aspect, execution information of a terminal within a coverage area of a first access network device includes at least one of the following:
an identifier list of the terminal obtained by the first access network device, a quantity of terminals obtained by the first access network device, and an execution result of executing the first operation for the terminal obtained by the first access network device.

Based on the foregoing solution, the first charging information may include the execution information of the terminal, in the target terminal, within the coverage area of the first access network device, to help improve charging accuracy.

With reference to the third aspect, in some implementations of the third aspect, the method further includes: receiving a policy rule, where the policy rule is used to detect the first information or the second information.

Based on the foregoing solution, the terminal management user plane function network element can identify the first information or the second information based on the policy rule, and further send the first information or the second information to the terminal management function network element. This helps improve accuracy.

With reference to the third aspect, in some implementations of the third aspect, the first operation includes at least one of the following operations: querying a terminal identifier, reading, writing, killing, locking, blockwriting, blockerasing, accessing, encrypting, or decrypting.

According to a fourth aspect, a charging method is provided. The method is performed by a system including a terminal management function network element, a session management network element, and a charging network element. The method includes:

The terminal management function network element receives a seventh message from an application network element of an application. The seventh message is used to request to execute a first operation for a target terminal.

The terminal management function network element sends an eighth message to the charging network element. The eighth message is used to request to start charging for the first operation for the target terminal. The eighth message includes a first identifier. The first identifier identifies the charging initiated by the terminal management function network element for the first operation for the target terminal.

The terminal management function network element sends a ninth message to an access and mobility management network element. The ninth message is used to request to execute the first operation for the target terminal, and the ninth message includes the first identifier.

The access and mobility management network element sends a fourth message to the session management network element. The fourth message is used to request to establish a first session. The first session is used for transmission of execution information of one or more terminals in the target terminal. The fourth message includes the first identifier.

The session management network element sends a fifth message to the charging network element. The fifth message is used to request to start the charging for the first operation for the target terminal, and the fifth message includes the first identifier.

The charging network element associates the eighth message with the fifth message based on the first identifier.

Based on the foregoing technical solution, the terminal management function network element may initiate the eighth message to the charging network element based on a first message, and the session management network element may initiate the fifth message to the charging network element based on the fourth message, so that the charging network element can manage the eighth message and the fifth message based on the first identifier. According to this solution, charging is implemented for a terminal management process.

With reference to the fourth aspect, in some implementations of the fourth aspect, the one or more terminals include a first terminal, and the method further includes:

The session management network element receives first information. The first information indicates that execution of the first operation for the first terminal is completed, or the first information includes execution information of the first terminal.

The session management network element sends second charging information. The second charging information includes the execution information of the first terminal.

The charging network element generates, based on the second charging information, a charging data record for executing the first operation for the first terminal.

Based on the foregoing technical solution, after the execution of the first operation for the first terminal is completed, charging information is sent to the charging network element, so that the charging network element can charge, based on the charging information, for a process in which the first operation is executed for the first terminal. According to this solution, charging can be implemented at a terminal granularity, to help improve charging flexibility.

With reference to the fourth aspect, in some implementations of the fourth aspect, the execution information of the first terminal includes at least one of the following: an identifier of the first terminal and an execution result of executing the first operation for the first terminal.

Based on the foregoing solution, first charging information may include the execution information of the first terminal, to help improve charging accuracy.

With reference to the fourth aspect, in some implementations of the fourth aspect, the one or more terminals include a terminal within a coverage area of a first access network device, and the method further includes:

The first access network device sends second information to the session management network element. The second information indicates that execution of the first operation for the terminal, in the target terminal, within the coverage area of the first access network device is completed, or the second information includes execution information of the terminal, in the target terminal, within the coverage area of the first access network device.

The session management network element sends second charging information. The second charging information includes the execution information of the terminal within the coverage area of the first access network device.

The charging network element generates, based on the second charging information, a charging data record for executing the first operation for the terminal, in the target terminal, within the coverage area of the first access network device.

Based on the foregoing solution, after receiving an indication indicating that the execution of the first operation for the terminal within the coverage area of the first access network device is completed or after receiving the execution information of the terminal within the coverage area of the first access network device, the session management network element may send, to the charging network element, the execution information of the terminal within the coverage area of the first access network device, so that the charging network element can charge for a process in which the first operation is executed for the terminal within the coverage area of the first access network device. According to this solution, charging can be implemented at an access network device granularity, to help improve charging flexibility.

With reference to the fourth aspect, in some implementations of the fourth aspect, the execution information of the terminal within the coverage area of the first access network device includes at least one of the following: an identifier list of the terminal obtained by the first access network device, a quantity of terminals obtained by the first access network device, and an execution results of executing the first operation for the terminal obtained by the first access network device.

Based on the foregoing solution, the second charging information may include the execution information of the terminal, in the target terminal, within the coverage area of the first access network device, to help improve charging accuracy.

With reference to the fourth aspect, in some implementations of the fourth aspect, the method further includes: The session management network element sends a sixth message to the charging network element. The sixth message is used to request to stop the charging for the first operation for the target terminal.

Based on the foregoing solution, when the execution of the first operation for the target terminal is completed, the session management network element may request to stop the charging for the first operation for the target terminal, to avoid a waste of resources.

With reference to the fourth aspect, in some implementations of the fourth aspect, the method further includes:

The terminal management function network element determines that the execution of the first operation for the target terminal is completed. The terminal management function network element sends a tenth request message to the charging network element. The tenth request message is used to request to stop the charging for the first operation for the target terminal.

Based on the foregoing solution, when the execution of the first operation for the target terminal is completed, the terminal management function network element may request to stop the charging for the first operation for the target terminal, to avoid a waste of resources.

With reference to the fourth aspect, in some implementations of the fourth aspect, the method further includes: When receiving a seventh message, the terminal management function network element starts a timer for executing the first operation for the target terminal. When the timer expires, the terminal management function network element sends a tenth request message to the charging network element. The tenth request message is used to request to stop the charging for the first operation for the target terminal.

Based on the foregoing solution, the terminal management function network element may request, by using the timer, to stop the charging for the first operation for the target terminal when the timer expires, to avoid a waste of resources.

With reference to the fourth aspect, in some implementations of the fourth aspect, the seventh message and the eighth message include at least one of the following: indication information of the first operation, an operation parameter corresponding to the first operation, first indication information, identification information of the target terminal, identification information of the application, and first tunnel information, where the first indication information indicates an area in which the first operation is to be executed, and the first tunnel information indicates a user plane port used by a server of the application to receive data.

Based on the foregoing technical solution, the eighth message may include information different from that in the seventh message, to provide more charging-related information and improve charging performance.

With reference to the fourth aspect, in some implementations of the fourth aspect, the fourth message and the fifth message include at least one of the following: first tunnel information, identification information of the target terminal, and identification information of the application.

Based on the foregoing technical solution, the fifth message may include information different from that in the fourth message, to provide more charging-related information and improve charging performance.

With reference to the fourth aspect, in some implementations of the fourth aspect, the identification information of the target terminal includes at least one of the following information: indication information of any one of the target terminal, a value interval to which an identifier of the target terminal belongs, an identifier list of the target terminal, a group identifier of a terminal group to which the target terminal belongs, identification information of a user to which the target terminal belongs, or identification information of an application to which the target terminal belongs.

Based on the foregoing technical solution, the identification information of the target terminal may be in a plurality of different forms. This improves flexibility of the solution.

With reference to the fourth aspect, in some implementations of the fourth aspect, the first operation includes at least one of the following operations: querying a terminal identifier, reading, writing, killing, locking, blockwriting, blockerasing, accessing, encrypting, or decrypting.

According to a fifth aspect, a communication apparatus is provided. The communication apparatus includes a processor, configured to implement functions of the terminal management function network element in the method described in the first aspect.

Optionally, the communication apparatus may further include a memory. The memory is coupled to the processor. The processor is configured to implement the functions of the terminal management function network element in the method described in the first aspect.

In a possible implementation, the memory is configured to store program instructions and data. The memory is coupled to the processor. The processor may invoke and execute the program instructions stored in the memory, to implement the functions of the terminal management function network element in the method described in the first aspect.

Optionally, the communication apparatus may further include a communication interface. The communication interface is used by the communication apparatus to communicate with another device. When the communication apparatus is the terminal management function network element, the communication interface is a transceiver, an input/output interface, a circuit, or the like.

In a possible design, the communication apparatus includes a processor and a communication interface, configured to implement functions of the terminal management function network element in the method described in the first aspect. Details are as follows:

The processor communicates with outside through the communication interface.

The processor is configured to run a computer program, to enable the apparatus to implement any method described in the first aspect.

It may be understood that the outside may be an object other than the processor or an object other than the apparatus.

In another possible design, the communication apparatus is a chip or a chip system. The communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a communication apparatus is provided. The communication apparatus includes a processor, configured to implement functions of the session management network element in the method described in the second aspect.

Optionally, the communication apparatus may further include a memory. The memory is coupled to the processor. The processor is configured to implement the functions of the session management network element in the method described in the second aspect.

In a possible implementation, the memory is configured to store program instructions and data. The memory is coupled to the processor. The processor may invoke and execute the program instructions stored in the memory, to implement the functions of the session management network element in the method described in the second aspect.

Optionally, the communication apparatus may further include a communication interface. The communication interface is used by the communication apparatus to communicate with another device. When the communication apparatus is the session management network element, the transceiver may be a communication interface or an input/output interface.

In a possible design, the communication apparatus includes a processor and a communication interface, configured to implement functions of the session management network element in the method described in the second aspect. Details are as follows:

The processor communicates with outside through the communication interface.

The processor is configured to run a computer program, to enable the apparatus to implement any method described in the second aspect.

It may be understood that the outside may be an object other than the processor or an object other than the apparatus.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a communication apparatus is provided. The communication apparatus includes a processor, configured to implement functions of the first user plane network element in the method described in the third aspect.

Optionally, the communication apparatus may further include a memory. The memory is coupled to the processor. The processor is configured to implement the functions of the first user plane network element in the method described in the third aspect.

In a possible implementation, the memory is configured to store program instructions and data. The memory is coupled to the processor. The processor may invoke and execute the program instructions stored in the memory, to implement the functions of the first user plane network element in the method described in the third aspect.

Optionally, the communication apparatus may further include a communication interface. The communication interface is used by the communication apparatus to communicate with another device. When the communication apparatus is the first user plane network element, the transceiver may be a communication interface or an input/output interface.

In a possible design, the communication apparatus includes a processor and a communication interface, configured to implement functions of the first user plane network element in the method described in the third aspect. Details are as follows:

The processor communicates with outside through the communication interface.

The processor is configured to run a computer program, to enable the apparatus to implement any method described in the third aspect.

It may be understood that the outside may be an object other than the processor or an object other than the apparatus.

In another implementation, when the communication apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a computer-readable storage medium is provided. The computer-readable storage medium stores a computer program. When the computer program is executed by a communication apparatus, the communication apparatus is enabled to implement the method in any one of the possible implementations of the first aspect to the third aspect.

According to a ninth aspect, a computer program product including instructions is provided. When the instructions are executed by a computer, a communication apparatus is enabled to implement the method in any one of the possible implementations of the first aspect to the third aspect.

According to a tenth aspect, a chip is provided. The chip includes a processor and a communication interface. The processor reads, through the communication interface, instructions stored in a memory, to perform the method provided in the first aspect, any one of the foregoing implementations of the first aspect, the second aspect, any one of the foregoing implementations of the second aspect, the third aspect, or any one of the foregoing implementations of the third aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in the first aspect, any one of the foregoing implementations of the first aspect, the second aspect, any one of the foregoing implementations of the second aspect, the third aspect, or any one of the foregoing implementations of the third aspect.

### BRIEF DESCRIPTION OF DRAWINGS

FIG. 1 is a diagram of a communication system applicable to an embodiment of this application;
FIG. 2 is a diagram of a network architecture of a passive internet of things;
FIG. 3 is a diagram of a charging method according to an embodiment of this application;
FIG. 4 is another diagram of a charging method according to an embodiment of this application;
FIG. 5 is another diagram of a charging method according to an embodiment of this application;
FIG. 6 is another diagram of a charging method according to an embodiment of this application;
FIG. 7 is another diagram of a charging method according to an embodiment of this application;
(a) to (d) in FIG. 8 are diagrams of network architectures according to an embodiment of this application;
FIG. 9 is another diagram of a charging method according to an embodiment of this application;
FIG. 10A and FIG. 10B are another diagram of a charging method according to an embodiment of this application;
(a) to (d) in FIG. 11 are diagrams of network architectures according to an embodiment of this application;
FIG. 12A and FIG. 12B are another diagram of a charging method according to an embodiment of this application;
FIG. 13A and FIG. 13B are another diagram of a charging method according to an embodiment of this application;
(a) to (d) in FIG. 14 are diagrams of network architectures according to an embodiment of this application;
FIG. 15 is a schematic block diagram of a communication apparatus according to this application; and
FIG. 16 is another diagram of a communication apparatus according to this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system.

The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC) communication, and an internet of things (Internet of things, IoT) communication system or another communication system.

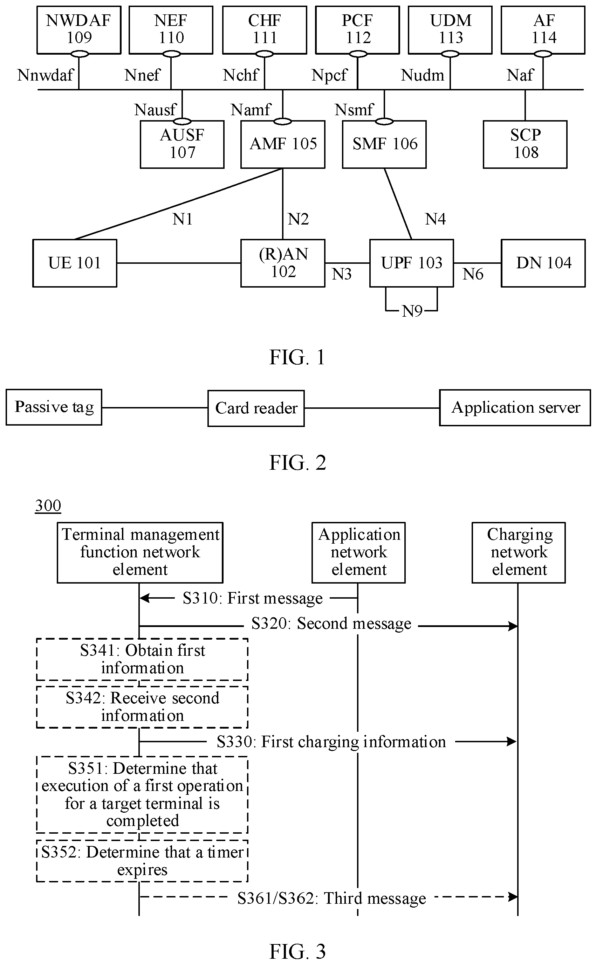

For example, FIG. 1 shows a network architecture applicable to an embodiment of this application.

As shown in FIG. 1, the 5G system (the 5th generation system, 5GS) is used as an example of the network architecture 100. The network architecture may include but is not limited to: user equipment (user equipment, UE) 101, a (radio) access network device ((radio) access network, RAN) 102, a user plane function (user plane function, UPF) network element 103, a data network (data network, DN) network element 104, an access and mobility management function (access and mobility management function, AMF) network element 105, a session management function (session management function, SMF) network element 106, an authentication server function (authentication server function, AUSF) network element 107, a service communication proxy (service communication proxy, SCP) network element 108, a network data analytics function (network data analytics function, NWDAF) network element 109, a network exposure function (network exposure function, NEF) network element 110, a charging function (charging function, CHF) network element 111, a policy control function module (policy control function, PCF) network element 112, a unified data management (unified data management, UDM) network element 113, an application function (application function, AF) network element 114, and the like.

The DN may be internet. The UPF, the AUSF, the AMF, the SMF, the SCP, the NWDAF, the NEF, the CHF, the PCF, the UDM, and the AF are network elements in a core network. Because the 5G system is used as an example in FIG. 1, the core network may be referred to as a 5G core network (5G core network, 5GC or 5GCN).

The following briefly describes network elements shown in FIG. 1.
1. The user equipment (user equipment, UE) 101 may be referred to as a terminal device, a terminal, an access terminal, a subscriber unit, a subscriber station, a mobile station, a remote station, a remote terminal, a mobile device, a user terminal, a wireless communication device, a user agent, or a user apparatus.

The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network or a terminal device in a future evolved public land mobile communication network (public land mobile network, PLMN) or in a non-terrestrial network (non-terrestrial network, NTN), or the like, may be an end device, a logical entity, or an intelligent device, for example, a terminal device such as a mobile phone or an intelligent terminal, or may be a communication device such as a server, a gateway, a base station, or a controller, or an internet of things (internet of things, IoT) device such as a tag, a passive tag, an active tag, a semi-active tag, a semi-passive tag, a sensor, an electric meter, or a water meter. The UE may alternatively be an uncrewed aerial vehicle (unmanned aerial vehicle or uncrewed aerial vehicle, UAV) having a communication function. When the terminal is a passive, semi-active, or semi-passive terminal or tag, the terminal may obtain energy to receive or send data. The energy may be obtained from radio frequency, radio, solar energy, light energy, wind energy, water energy, heat energy, kinetic energy, and the like. A manner of obtaining the energy by the passive, semi-active, or semi-passive terminal is not limited in this application. It may be understood that when the terminal is the passive terminal, the terminal is not equipped with or does not depend on a power supply device such as a battery, but obtains energy from an environment for functions such as data sensing, transmission, and distributed computing. When the terminal is the semi-active terminal, the terminal may have a built-in battery, but the battery is configured to supply power to an internal circuit, and is not configured to actively transmit a signal. When the terminal is the semi-passive terminal, the terminal may have a built-in capacitor. The capacitor may store the energy obtained by the terminal. For example, the terminal may obtain the energy from the solar energy, and store the energy in the capacitor.

It should be noted that the tag in this application may be a tag form, or may be any terminal form.

It should be noted that the terminal device and the access network device may communicate with each other using an air interface technology (for example, an NR technology or an LTE technology). Terminal devices may also communicate with each other using an air interface technology (for example, an NR technology or an LTE technology).

In embodiments of this application, an apparatus configured to implement a function of the terminal device may be a terminal device, or may be an apparatus, for example, a chip system or a chip, that can support the terminal device in implementing the function. The apparatus may be mounted in the terminal device. In embodiments of this application, the chip system may include a chip, or may include the chip and another discrete component.

2. The (radio) access network ((radio) access network, (R)AN) device 102 may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, an AN device is used below for representation.

The AN device may use different radio access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next-generation base station node (next generation Node Base station, gNB) or a next-generation radio access network (next generation radio access network, NG-RAN) device. The non-3GPP access technology may include an air interface technology represented by an access point (access point, AP) in wireless fidelity (wireless fidelity, Wi-Fi), worldwide interoperability for microwave access (worldwide interoperability for microwave access, WiMAX), code division multiple access (code division multiple access, CDMA), or the like. The AN device may allow interconnection and interworking between a terminal device and a 3GPP core network by using the non-3GPP technology.

The AN device can be responsible for radio resource management, quality of service (quality of service, QoS) management, data compression, encryption on an air interface side, and other functions. The AN device provides an access service for the terminal device, to complete forwarding of a control signal and user data between the terminal device and the core network.

For example, the AN device may include but is not limited to a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission reception point (transmission reception point, TRP); or may be a gNB or a transmission point (TRP or TP) in a 5G (for example, NR) system, or one antenna panel or a group of antenna panels (including a plurality of antenna panels) of a base station in the 5G system; or may be a network node including a gNB or a transmission point, for example, a distributed unit (distributed unit, DU), or a base station in a next-generation 6G communication system. Neither of a specific technology and a specific device form used for the AN device is limited in embodiments of this application.

3. A user plane network element is configured for packet routing and forwarding, quality of service (quality of service, QoS) handling for user plane data, or the like.

In the 5G communication system, the user plane network element may be the user plane function (user plane function, UPF) network element 103. In a future communication system, the user plane network element may still be a UPF network element, or may have another name. This is not limited in this application.

4. A data network is configured to provide a network for data transmission.

In the 5G communication system, the data network may be the data network (data network, DN) 104. In the future communication system, the data network may still be a DN, or may have another name. This is not limited in this application.

5. An access and mobility management network element is configured for routing and forwarding of user plane data, quality of service (quality of service, QoS) handling for user plane data, or the like.

In the 5G communication system, the access and mobility management network element may be the access and mobility management function (access and mobility management function, AMF) network element 105. In the future communication system, the access and mobility management network element may still be an AMF network element, or may have another name. This is not limited in this application.

6. A session management network element may be configured for session management, internet protocol (internet protocol, IP) address allocation and management of the terminal device, selection and control of a user plane function, termination of interfaces towards policy control and charging functions, downlink data notification, and the like.

In the 5G communication system, the session management network element may be the session management function (session management function, SMF) network element 106. In the future communication system, the session management network element may still be an SMF network element, or may have another name. This is not limited in this application.

7. An authentication server network element is mainly responsible for providing an authentication service.

In the 5G communication system, the authentication server network element may be the authentication server function (authentication server function, AUSF) network element 107. In the future communication system, the authentication service network element may still be an AUSF network element, or may have another name. This is not limited in this application.

8. A service communication proxy network element is mainly responsible for indirect communication between a network element and a corresponding network element service.

In the 5G communication system, the service communication proxy network element may be the service communication proxy (service communication proxy, SCP) network element 108. In the future communication system, the session management network element may still be an SCP network element, or may have another name. This is not limited in this application.

9. A network data analytics network element is responsible for network data collection, statistics, and analysis and decision feedback, and providing network data collection and analysis functions based on technologies including big data, artificial intelligence, and the like.

In the 5G communication system, the network data analytics network element may be the network data analytics function (network data analytics function, NWDAF) network element 109. In the future communication system, the session management network element may still be an NWDAF network element, or may have another name. This is not limited in this application.

10. A network exposure network element is mainly configured to support exposure of capabilities and events.

In the 5G communication system, the network exposure network element may be the network exposure function (network exposure function, NEF) network element 110. In the future communication system, the network exposure network element may still be a NEF network element, or may have another name. This is not limited in this application.

11. A charging network element serves as a control node for online charging and/or offline charging, and performs online charging and/or offline charging rate processing on various services of user equipment.

In the 5G communication system, the charging network element may be the charging function (charging function, CHF) network element 111. Specifically, the CHF network element may be a converged charging function (converged charging function) network element or an offline only charging function (offline only charging function) network element. In the future communication system, the charging network element may still be a CHF network element, or may have another name. This is not limited in this application.

12. A policy control network element is configured to support a unified policy framework to govern network behavior, provide policy rule information to a network element (for example, the AMF or SMF network element) or the terminal device, and the like.

In the 5G communication system, the policy control network element may be the policy control function (policy control function, PCF) network element 112. In the future communication system, the policy control network element may still be a PCF network element, or may have another name. This is not limited in this application.

13. A data management network element is configured for terminal device identification handling, access authentication, registration, mobility management, and the like.

In the 5G communication system, the data management network element may be the unified data management (unified data management, UDM) network element 113. In the future communication system, the unified data management network element may still be a UDM network element, or may have another name. This is not limited in this application.

14. An application network element is configured to: perform application influence on traffic routing, access a network exposure function network element, interact with a policy framework for policy control, and the like.

In the 5G communication system, the application network element may be the application function (application function, AF) network element. In the future communication system, the application network element may still be an AF network element 114, or may have another name. This is not limited in this application.

It may be understood that the foregoing network element or function may be a network element in a hardware device, a software function running on dedicated hardware, or a virtualized function instantiated on a platform (for example, a cloud platform). A specific form of the network element is not limited in this application. It should be further understood that the AMF, the SMF, the UPF, the PCF, the NEF, and the like shown in FIG. 1 may be understood as network elements configured to implement different functions, for example, may be combined as required to form a network slice. These network elements may be independent of each other, or may be integrated into a same device to implement different functions.

For ease of description, in subsequent descriptions, an example in which the access and mobility management function network element is an AMF network element, the session management network element is an SMF network element, and the policy control network element is an AF network element is used for description in this application. Further, the AMF network element is briefly referred to as an AMF, the SMF network element is briefly referred to as an SMF, and the AF network element is briefly referred to as an AF. To be specific, in subsequent descriptions of this application, each AMF may be replaced with an access and mobility management network element, each SMF may be replaced with a session management network element, and each AF may be replaced with an application network element.

In the network architecture shown in FIG. 1, the network elements may communicate with each other through interfaces. For example, N1 is an interface between the UE 101 and the AMF 105; N2 is an interface between the (R)AN 102 and the AMF 105, and is configured to send a (non-access stratum, NAS) message and the like; N3 is an interface between the RAN 102 and the UPF 103, and is configured for transmission of user plane data and the like; N4 is an interface between the SMF 106 and the UPF 103, and is configured for transmission of information such as tunnel identification information of an N3 connection, data buffering indication information, and a downlink data notification message; an N6 interface is an interface between the UPF 103 and the DN 104, and is configured for transmission of the user plane data and the like; and N9 is an interface between UPFs. Namf is a service-based interface exhibited by the AMF 105; Nsmf is a service-based interface exhibited by the SMF 106; Nausf is a service-based interface exhibited by the AUSF 107; Nnwdaf is a service-based interface exhibited by the NWDAF 109; Nnef is a service-based interface exhibited by the NEF 110; Nchf is a service-based interface exhibited by the CHF 111; Npcf is a service-based interface exhibited by the PCF 112; Nudm is a service-based interface exhibited by the UDM 113; and Naf is a service-based interface exhibited by AF 114.

It should be noted that names of the network elements and the communication interfaces between the network elements in FIG. 1 are briefly described by using an example specified in a current protocol. However, this does not mean that embodiments of this application can be applied only to a currently known communication system. Therefore, standard names used when the current protocol is used as an example for description are all functional descriptions. A specific name of a network element, an interface, signaling, or the like is not limited in this application, and represents only a function of the network element, the interface, or the signaling, and may be correspondingly extended to another system, for example, a 2G, 3G, 4G, or future communication system.

It should be understood that the network architecture shown in FIG. 1 is merely an example for description, and a network architecture applicable to embodiments of this application is not limited thereto. Any network architecture that can implement functions of the foregoing network elements is applicable to embodiments of this application.

In an internet of things technology, passive internet of things (passive Internet of things, P-IoT) tags (tags) (for example, a radio frequency identification (radio frequency identification, RFID), also referred to as passive tag) have an application prospect of large-scale deployment. It is predicted that hundreds of billions of devices will be covered in the future. The passive internet of things means that some network nodes may be passive. These nodes are not equipped with or do not depend on power supply devices such as batteries, but obtain energy from an ambient environment for functions such as data sensing, transmission, and distributed computing. Application scenarios of the passive internet of things may be as follows.
(1) Warehouse/Transportation/Materials: Passive tags are embedded or attached to goods. During storage and logistics, related information of the goods is automatically collected by a reader. Management personnel can quickly query a system for information about the goods, to reduce a risk of goods being lost or stolen. This can improve a goods handover speed, improve accuracy, prevent unauthorized sales, and achieve anti-counterfeiting.
(2) Fixed asset management: In places with large assets or valuables, for example, libraries, art museums, and museums, passive tags are attached to books or the valuables. When storage information of a book or a valuable changes abnormally, an administrator is notified by a system immediately. In this way, the administrator can handle this situation in a timely manner.

FIG. 2 is a diagram of a network architecture of a passive internet of things. As shown in FIG. 2, the network architecture includes a passive tag, a card reader (reader), and an operation requester.

The card reader may also be referred to as a reader or a reader/writer. The card reader interacts with the passive tag using a radio frequency signal or a radio signal. The operation requester may be an application server (server) or an application function (application function, AF). The operation requester may be understood as a device that sends operation instructions. The operation requester corresponds to a specific type of user. The specific type of user includes an enterprise, a tenant, a third party, or a company. This is not limited. That the operation requester corresponds to a specific type of user may be understood as that the operation requester belongs to the specific type of user and is managed by the specific type of user.

In the architecture of the passive internet of things, the card reader may manage the passive tag based on an indication of the operation requester. Tag management may also be referred to as tag inventory, and includes but is not limited to at least one of the following: querying (query) a tag identifier, performing an operation such as a read (read) operation, a write (write) operation, an access (access) operation, or a kill (kill) operation on the tag, and the like. It should be noted that the foregoing "tag" may also be understood as a terminal.

The read operation means that data is read from the tag. The write operation means that data is written to a storage area of the tag. An invalidation operation means that the tag is invalid. After the invalidation operation is completed, the tag becomes invalid. In addition, no inventory or another operation is performed on the tag, for example, a message is exchanged with the invalid tag.

Currently, a new passive internet of things technology is proposed to integrate a card reader into an access network device. A passive internet of things tag is used as a terminal device. An enterprise having a tag management requirement completes inventory of the passive internet of things tag by using a deployed 3rd generation partnership project (3rd generation partnership project, 3GPP) network. Using this technology can increase a communication distance, and manage tags in a unified manner, and provide technical support for large-scale deployment of passive internet of things tags.

In this new passive internet of things technology, operators will charge enterprises having the tag management requirement. How to implement charging for a tag inventory process is a problem worthy of concern.

In view of this, this application provides a charging method and a communication apparatus, to implement the charging for the tag inventory process.

It should be noted that the communication method in this application is described by using the passive internet of things as an example. The method in this application is not limited to being used in the passive internet of things technology, and may also be used in another technology, for example, a semi-active internet of things technology, a semi-passive internet of things technology, or an active internet of things technology. Correspondingly, the tag in the network architecture may be a semi-active tag, a semi-passive tag, or an active tag.

FIG. 3 is a diagram of a charging method according to an embodiment of this application. As shown in FIG. 3, the method 300 includes the following steps.

S310: An application network element AF of an application sends a first message to a terminal management function network element. Correspondingly, the terminal management function network element receives the first message.

The terminal management function network element in this embodiment of this application may be a new function network element that is independently disposed in a 5G core (5G core, 5GC) network, or may be a network element that is co-located with an existing network element in the 5GC (for example, co-located with a NEF or an AMF). That the terminal management function network element is co-located with an existing network element may be understood as function enhancement of the existing network element, so that the existing network element has a terminal management function.

It should be further understood that, in embodiments of this application, the terminal management function network element may also be referred to as a terminal management control plane function network element, and is configured to process, receive, and send signaling in a terminal management process.

The first message is used to request to execute a first operation for a target terminal.

Specifically, the first message may be understood as a request message used to request the terminal management function network element to perform inventory for the target terminal, and may be referred to as an inventory request message. In this application, the inventory indicates to execute the first operation for the target terminal.

For example, the first operation includes at least one of the following: querying a terminal identifier, reading, writing, killing, locking, block writing, block erasing, accessing, encrypting, decrypting, or the like.

The first message may include at least one of the following: indication information of the first operation, an operation parameter corresponding to the first operation, first indication information, identification information of the target terminal, identification information of the application, address information of the application network element, and first tunnel information.

The indication information of the first operation indicates a to-be-executed first operation, and includes but is not limited to:
an identifier of the first operation, a value interval to which the identifier of the first operation belongs, an identifier list of the first operation, a group identifier of an operation group to which the first operation belongs, and the like.

For example, the to-be-executed operation includes one operation, and an identifier of the operation is an operation #1. The indication information of the first operation may be the identifier of the first operation, for example, the operation #1.

For another example, the to-be-executed operation includes three operations, and identifiers of the three operations are an operation #1, an operation #2, and an operation #3. The indication information of the first operation may be an identifier list of the operations, for example, the operation #1, the operation #2, and the operation #3.

For still another example, the to-be-executed operation includes three operations, which belong to one operation group, and a group identifier of the operation group is an operation group #1. The indication information of the first operation may be the group identifier of the operation group to which the operations belong, for example, the operation group #1.

It should be understood that the first operation may include one or more operations. When the first operation includes a plurality of operations (for example, the operation #1 and the operation #2), the indication information of the first operation may include indication information indicating the plurality of operations (for example, indication information indicating the operation #1 and indication information indicating the operation #2).

It should be noted that the foregoing merely describes, by using examples, possible forms of the indication information of the to-be-executed operation, and does not constitute any limitation on the protection scope of this application. Other indication information that can indicate an operation in which inventory is to be performed also falls within the protection scope of this application. Examples are not described one by one herein.

For example, in some cases, the first message may not include the indication information of the first operation. For example, the AF has no command for executing an operation. For another example, the first operation is querying a terminal identifier by default, and no additional indication needs to be performed by using the indication information of the first operation.

When the indication information of the first operation indicates that the first operation is an operation other than querying a terminal identifier, the first message further includes the operation parameter corresponding to the first operation.

For example, when the indication information of the first operation indicates to execute a read operation, the indication information of the first operation may be referred to as a read command. Specifically, for the read command, the operation parameter includes a read storage area, a start byte address of the read storage area, a quantity of bytes, and the like.

For another example, when the indication information of the first operation indicates to execute a write operation, the indication information of the first operation may be referred to as a write command. Specifically, for the write command, the operation parameter includes a write storage area, a start byte of the read storage area, and written data.

Optionally, for written information, same written information may be carried for all target terminals, or different written information may be carried for different target terminals.

It should be noted that the indication information and the operation parameter that are of the first operation and that may be included in the first message are not limited in this embodiment of this application. Reference may be made to indication information and an operation parameter that are of an operation and that are received by a card reader in a conventional technology. Alternatively, the indication information and the operation parameter may be indication information and an operation parameter that are of an operation and that are received by a card reader after development of technologies in the future. Details are not described herein again.

The first indication information indicates an area in which the first operation is to be executed.

For example, the area that is indicated by the first indication information and in which the first operation is to be executed includes a location of a target terminal for which inventory is to be performed. The first indication information includes but is not limited to a geographical location, a municipal location, and 3GPP location information. For example, the 3GPP location information may be a tracking area (trace area, TA) list (list), a cell list (cell list), or the like.

For example, there are three target terminals for which the inventory is to be performed, which are located in a cell #1, a cell #2, and a cell #3. The first indication information may be 3GPP location information of the terminals, for example, the cell #1, the cell #2, and the cell #3.

It should be noted that a specific form indicating the first indication information is not limited in this embodiment of this application, provided that the location of the target terminal for which the inventory is to be performed can be indicated.

The identification information of the target terminal indicates the target terminal for which the inventory is to be performed. The identification information of the target terminal includes but is not limited to: indication information of any one of the target terminal, a value interval to which an identifier of the target terminal belongs, an identifier list of the target terminal, a group identifier of a terminal group to which the target terminal belongs, identification information of a user to which the target terminal belongs, a type of the target terminal, identification information of an application to which the target terminal belongs, or the like.

For example, there are three target terminals for which the inventory is to be performed, and identifiers of the three terminals are a terminal #1, a terminal #2, and a terminal #3. The identification information of the target terminals may be an identifier list of the terminals, for example, the terminal #1, the terminal #2, and the terminal #3.

For another example, there are three target terminals for which the inventory is to be performed, and identifiers of the three terminals are 100, 101, and 102. The identification information of the target terminals may be an interval of the identifiers of the terminals, for example, 100 to 102.

For another example, there are three target terminals for which the inventory is to be performed, and identifiers of the three terminals are a terminal #1, a terminal #2, and a terminal #3. The indication information of any one of the target terminals indicates to perform the inventory for all the three terminals.

For another example, there are three terminals for which the inventory is to be performed, the three terminals belong to one terminal group, and a group identifier of the terminal group is a terminal group #1. The identification information of the target terminals may be the group identifier of the terminal group to which the target terminals belong, for example, the terminal group #1.

For another example, there are three terminals for which the inventory is to be performed, the three terminals belong to one user, and an identifier of the user is a user #1. The identification information of the target terminals may be the identifier of the user to which the target terminals belong, for example, the user #1.

For another example, there are three terminals for which the inventory is to be performed, and the three terminals are all passive terminals or semi-passive terminals. The identification information of the target terminals may be the passive terminals or the semi-passive terminals.

For another example, there are three terminals for which the inventory is to be performed, the three terminals belong to one application, and an application identifier of the application is an application #1. The identification information of the target terminals may be the identifier of the application to which the target terminals belong, for example, the application #1.

It should be noted that the foregoing merely describes, by using examples, possible forms of the identification information of the terminal for which the inventory is to be performed, and does not constitute any limitation on the protection scope of this application. Other identification information that can identify the terminal for which the inventory is to be performed also falls within the protection scope of this application. Examples are not described one by one herein.

For example, in some cases, the first message may not include the identification information of the target terminal. For example, the first message includes the first indication information, and the first indication information indicates to perform the inventory for a terminal in an area. For another example, the first message triggers only an inventory procedure, and a specific target terminal for which the inventory is to be performed may be all terminals managed by the terminal management function network element. Similarly, the first message may alternatively include the identification information of the target terminal, but does not include the first indication information.

The identification information of the application identifies the application that initiates an inventory request.

For example, an identifier of the AF that initiates the inventory request is AF #1, and the foregoing application identifier may be the AF #1.

The address information of the application network element may also be referred to as a notification address, and indicates an address at which the AF receives terminal information and a command execution result, for example, an address of the AF.

The first tunnel information indicates a user plane port used by a server of the application to receive data. For example, the first tunnel information may indicate an address of the application server.

Optionally, the first message may further include an association identifier, and the association identifier is used to associate the first message with a response message for the first message.

For example, in some cases, the first message may not include the first tunnel information. For example, the first message includes the address information of the application network element, and the address information of the application network element indicates that an execution result of the first operation is sent to the address of the application network element via control plane signaling.

Similarly, in some cases, the first message may not include the address information of the application network element. For example, the first message includes the first tunnel information, and the first tunnel information indicates that the execution result of the first operation is sent to the application server via user plane data.

S320: The terminal management function network element sends a second message to a charging network element. Correspondingly, the charging network element receives the second message.

The charging network element may be a converged charging function network element, or may be an offline only charging function network element. This is not limited in this application.

The second message is used to request to start charging for the first operation for the target terminal. In other words, the second message is used to start charging for the inventory request initiated in S310.

Specifically, the second message may be a converged charging create request (Nchf_ConvergedCharging_Create Request) message, and a request uniform resource identifier (universal resource identifier, URI) is {apiRoot}/nchf-convergedcharging/{apiVersion}/chargingdata. The charging network element creates a corresponding individual charging data resource (Individual Charging Data Resource) based on the second message, and generates a corresponding URI #1. For example, the URI #1 is { apiRoot}/nchf-convergedcharging/{ apiVersion }/chargingdata/{ChargingDataRef1}. The charging network element returns the URI #1 to the terminal management function network element.

Alternatively, the second message may be an offline only charging create request (Nchf_OfflineOnlyCharging_Create Request) message, and a request URI is {apiRoot}/nchf-offlineonlycharging/ {apiVersion }/offlinechargingdata. The charging network element creates corresponding individual offline only charging data (Individual Offline Only Charging Data) based on the second message, and generates a corresponding resource identifier URI #2. For example, the URI #2 is {apiRoot}/nchf-offlineonlycharging/ {apiVersion }/offlinechargingdata/ {OfflineChargingDataRefl}. The charging network element returns the URI #2 to the terminal management function network element.

Optionally, the second message may include a start (start) indication, and the charging network element starts the charging based on the start indication.

Specifically, the second message includes the start indication, and the charging network element may start the charging based on the start indication. Alternatively, the second message does not include the start indication, but the second message may represent the start indication, and the charging network element starts the charging based on the second message.

Optionally, the second message may include at least one of the indication information of the first operation, the operation parameter corresponding to the first operation, the first indication information, the identification information of the target terminal, the identification information of the application, the address information of the application network element, and the first tunnel information.

In other words, the terminal management function network element may send information in the first message to the charging network element, and the charging network element charges, based on the information, for the inventory request initiated in S310.

S330: The terminal management function network element sends first charging information to the charging network element. Correspondingly, the charging network element receives the first charging information.

Specifically, if the second message is the converged charging create request message, the terminal management function network element may send a converged charging update request (Nchf_ConvergedCharging_Update Request) message to the charging network element, and the request URI is {apiRoot}/nchf-convergedcharging/{apiVersion}/chargingdata/{ChargingDataRef1}/update. The converged charging update request message includes the first charging information. The charging network element updates a previously created individual charging data resource based on the request URI, stores the first charging information, generates a charging data record (charging data record, CDR) based on the first charging information, and sends the CDR to an accounting system.

If the second message is the offline only charging create request message, the terminal management function network element may send an offline only charging update request (Nchf_OfflineOnlyCharging _Update Request) message to the charging network element, and a request URI is {apiRoot}/nchf-offlineonlycharging/ {apiVersion} /offlinechargingdata/ { OfflineChargingDataRef2 } /update. The offline only charging update request message includes the first charging information. The charging network element updates previously created individual offline only charging data based on the request URI, stores the first charging information, generates a CDR based on the first charging information, and sends the CDR to the accounting system.

Optionally, the first charging information includes an interim (interim) indication or an update (update) indication, and the interim indication or the update indication indicates the charging network element to update charging information.

Specifically, the first charging information includes the interim indication or the update indication, and the charging network element may update the CDR based on the interim indication or the update indication. Alternatively, the first charging information does not include the interim indication or the update indication, but the first charging information is the interim indication or the update indication, and the charging network element updates the CDR based on the first charging information.

The first charging information includes execution information of one or more terminals. The execution information of the one or more terminals is information obtained by executing the first operation for the one or more terminals.

Specifically, the execution information of the one or more terminals includes at least one of the following: execution results of executing the first operation for the one or more terminals, identification information of the one or more terminals, or a quantity of the one or more terminals.

In an example, when the indication information of the first operation indicates that the first operation is querying a terminal identifier, the execution information of the one or more terminals includes the identification information of the one or more terminals and/or the quantity of the one or more terminals.

In another example, when the indication information of the first operation indicates that the first operation is an operation other than querying a terminal identifier, the execution information of the one or more terminals includes the execution results of executing the first operation for the one or more terminals. For example, when the indication information of the first operation indicates that the first operation is read, the execution result includes read data. For another example, when the indication information of the first operation indicates that the first operation is write, the execution result includes an indication of a write success or a write failure.

Any first operation other than querying a terminal identifier may also be referred to as an execution command. A result obtained by executing any first operation other than querying a terminal identifier may also be referred to as an execution result.

In an implementation of the foregoing embodiment, the one or more terminals include a first terminal, and the first terminal is a random terminal in the target terminal for which the inventory is to be performed. In other words, the first terminal is any terminal in the target terminal for which the inventory is to be performed. "One or more terminals" in S330 refer to the first terminal.

In this implementation, the execution information of the one or more terminals includes execution information of the first terminal. The execution information of the first terminal includes at least one of the following: an identifier of the first terminal, a quantity 1, and an execution result of executing the first operation for the first terminal.

In another implementation of the foregoing embodiment, the one or more terminals include a terminal within a coverage area of a first access network device. In other words, a terminal group includes the terminal, in the target terminal, within the coverage of the first access network device. "One or more terminals" in S330 refer to a terminal in the terminal group.

In this implementation, the execution information of the one or more terminals includes execution information of the terminal, in the target terminal, within the coverage area of the first access network device. The execution information of the terminal, in the target terminal, within the coverage area of the first access network device includes at least one of the following: an identifier list of the terminal obtained by the first access network device, a quantity of terminals obtained by the first access network device, and an execution result of executing the first operation for the terminal obtained by the first access network device.

The first charging information is used to charge for a process in which the first operation is executed for the one or more terminals.

Specifically, in an implementation of the foregoing embodiment, the charging network element may generate, based on the first charging information, a charging data record of a process in which the first operation is executed for the first terminal.

The charging data record may also be understood as a CDR.

In an example, when the execution information of the one or more terminals includes the identifier of the first terminal and/or the quantity 1, the CDR generated by the charging network element includes one or more of the following: the identification information of the application, the identification information of the target terminal, the indication information of the first operation, the operation parameter corresponding to the first operation, the first tunnel information, the address information of the application network element, and the identifier of the first terminal. Alternatively, the CDR includes at least one of the following: the identification information of the application, the identification information of the target terminal, the indication information of the first operation, the operation parameter corresponding to the first operation, the address information of the application network element, the first tunnel information, and the quantity 1.

In another example, when the execution information of the one or more terminals includes the execution result of executing the first operation for the first terminal, the CDR generated by the charging network element includes the identification information of the application, the identification information of the target terminal, the indication information of the first operation, the operation parameter corresponding to the first operation, the address information of the application network element, the first tunnel information, the identifier of the first terminal, and the execution result of executing the first operation for the first terminal.

Specifically, in another implementation of the foregoing embodiment, the charging network element may generate, based on the first charging information, a CDR of a process in which the first operation is executed for the terminal, in the target terminal, within the coverage area of the first access network device.

In an example, when the execution information of the one or more terminals includes the identifier list of the terminal or terminal quantity obtained by the first access network device, the CDR generated by the charging network element includes at least one of the following: the identification information of the application, the identification information of the target terminal, the indication information of the first operation, the operation parameter corresponding to the first operation, the address information of the application network element, the first tunnel information, and the identifier list of the obtained terminal. Alternatively, the CDR includes at least one of the following: the identification information of the application, the identification information of the target terminal, the indication information of the first operation, the operation parameter corresponding to the first operation, the address information of the application network element, the first tunnel information, and the quantity of obtained terminals.

In another example, when the execution information of the one or more terminals includes the execution result of executing the first operation for the terminal obtained by the first access network device, the CDR generated by the charging network element includes at least one of the following: the identification information of the application, the identification information of the target terminal, the indication information of the first operation, the operation parameter corresponding to the first operation, the address information of the application network element, the first tunnel information, and a list of a combination of an identifier of the obtained terminal and a corresponding execution result.

The charging network element may generate a CDR based on each piece of received first charging information, or generate a CDR based on a plurality of pieces of first charging information and according to a network policy or the like.

Based on the solution in the foregoing embodiment, the terminal management function network element may initiate the charging request to the charging network element based on the first message, and send the charging information to the charging network element after execution of the first operation for the one or more terminals is completed, so that the charging network element can charge, based on the charging request and the charging information, for the process in which the first operation is executed for the one or more terminals. According to this solution, charging is implemented for a terminal management process.

Optionally, in an implementation of the foregoing embodiment, before S330, the method 300 further includes S341: The terminal management function network element obtains first information. The first information indicates that execution of the first operation for the first terminal is completed, or the first information includes execution information of the first terminal.

In other words, after obtaining the first information, the terminal management function network element sends the first charging information to the charging network element, where the first charging information includes the execution information of the first terminal.

That the terminal management function network element obtains first information includes:

The terminal management function network element receives the first information from the application network element, the terminal management function network element receives the first information from the first access network device, or the terminal management function network element determines the first information.

In other words, the first information may be from the first access network device, the application network element, or the terminal management function network element. The first access network device is configured to execute the first operation for the first terminal.

In an example, the first information indicates that the execution of the first operation for the first terminal is completed, and the first information is from the application network element.

Specifically, when the application network element initiates an execution command to the first terminal, after receiving the execution result of executing the first operation for the first terminal, the application network element determines, based on the execution result, that the execution of the first operation for the first terminal is completed, to send the first information to the terminal management function network element.

That the application network element sends the first information to the terminal management function network element includes: The application network element sends the first information to the first access network device by using a control plane, where the first information passes through the terminal management function network element; or the application network element sends the first information to the first access network device by using a user plane, where the first information passes through a terminal management user plane function network element, and the terminal management user plane function network element sends the first information to a terminal management control plane function network element.

In another example, the first information includes the execution information of the first terminal, and the first information is from the first access network device.

Specifically, when the first access network device initiates an execution command to the first terminal, after receiving the execution result of executing the first operation for the first terminal, the first access network device determines, based on the execution result, that the execution of the first operation for the first terminal is completed, to send the first information to the terminal management function network element.

That the first access network device sends the first information to the terminal management function network element includes: The first access network device sends the first information to the application network element by using a control plane, where the first information passes through the terminal management function network element; or the first access network device sends the first information to the application server by using a user plane, where the first information passes through a terminal management user plane function network element, and the terminal management user plane function network element sends the first information to a terminal management control plane function network element.

In still another example, the first information indicates that the execution of the first operation for the first terminal is completed, and the first information is from the terminal management function network element.

Specifically, when the terminal management function network element initiates an execution command to the first terminal, after receiving the execution result of executing the first operation for the first terminal, the terminal management function network element determines, based on the execution result, that the execution of the first operation for the first terminal is completed, namely, obtains the first information.

It should be understood that a source of the first information is not necessarily related to content of the first information, and the foregoing several examples are merely examples for description. This is not limited in this application.

Optionally, in another implementation of the foregoing embodiment, the terminal management function network element may send the first charging information to the charging control network element after receiving first information corresponding to at least two first terminals. In this case, the first charging information includes an identifier list of the at least two first terminals or a quantity of the at least two first terminals.

In other words, in this implementation, "one or more terminals" in S330 refer to the at least two first terminals.

Optionally, in an implementation of the foregoing embodiment, before S330, the method 300 further includes S342: The terminal management function network element receives second information. The second information indicates that execution of the first operation for the terminal, in the target terminal, within the coverage area of the first access network device is completed, or the second information includes execution information of the terminal, in the target terminal, within the coverage of the first access network device.

In other words, the terminal management function network element sends the first charging information to the charging network element after receiving the second information, where the first charging information includes the execution information of the terminal within the coverage area of the first access network device.

The second information is from the first access network device.

It should be understood that the first access network device may determine, based on an inventory process, that inventory for a target terminal within the coverage of the first access network device is completed, to send the second information to the terminal management function network element.

In an example, after determining that the inventory for the target terminal within the coverage of the first access network device is completed, the first access network device may send dedicated indication information to the terminal management function network element, to indicate that the execution of the first operation for the terminal, in the target terminal, within the coverage area of the first access network device is completed.

In another example, after determining that the inventory for the target terminal within the coverage of the first access network device is completed, the first access network device may send the execution information of the terminal within the coverage area of the first access network device to the terminal management function network element.

Optionally, in another implementation of the foregoing embodiment, the terminal management function network element may send the first charging information to the charging control network element after receiving corresponding second information from at least two first access network devices. In this case, the first charging information includes a list of target terminals within coverage areas of the at least two first access network devices, the list of the target terminals within the coverage areas of the at least two first access network devices, or a quantity of the target terminals within the coverage areas of the at least two first access network devices.

In other words, in this implementation, "one or more terminals" in S330 refer to the terminals within the coverage areas of the at least two first access network devices.

Optionally, in an implementation, the method 300 further includes S351: The terminal management function network element determines that the execution of the first operation for the target terminal is completed.

Specifically, after receiving the first message, the terminal management function network element determines, based on the first message, one or more access and mobility management network elements and one or more access network devices corresponding to each access and mobility management network element. The terminal management function network element sends a first inventory request to the one or more access and mobility management network elements. The first inventory request is used to request to execute the first operation for the target terminal. Each access and mobility management network element sends a second inventory request to the one or more access network devices within an area managed by the access and mobility management network element. The second inventory request is used to request to execute the first operation for the target terminal. Each access network device executes, based on a third inventory request, the first operation for a terminal within a coverage area of the access network device.

After determining that the execution of the first operation for the terminal within the coverage area of each access network device is completed, the access network device sends the second information to the terminal management function network element via the access and mobility management network element. The terminal management function network element determines, based on the second information of the one or more access network devices determined by the terminal management function network element, that the execution of the first operation for the target terminal is completed.

In an example, the access network device executes the first operation for the terminal within the coverage area of the access network device, that is, the access network device triggers the inventory procedure based on the third inventory request. Specifically, the following steps are included.

The access network device sends radio frequency information to all terminals within the coverage area, to provide an excitation signal for all the terminals within the coverage area of the access network device, so that the terminals can send signals to the access network device.

Next, the access network device sends a selection message to all the terminals within the coverage area. The selection message is used to select, from all the terminals, one or more terminals for which the inventory is to be performed. The terminals for which the inventory is to be performed are determined based on the third inventory request.

Then, the access network device sends a query request message to the selected terminals in all the terminals. The query request message is used to obtain identifiers of the selected terminals. The selected terminals are terminals that are in all the terminals and for which the inventory is to be performed. The selected target terminals initiate a random access process, and one of the terminal devices, which is the first terminal in this embodiment, succeeds in random access. A specific random access process may be as follows: The access network device includes a first random number in a first query message, and the selected terminals locally set second random numbers based on the first random number. If a second random number set by one terminal is 0, the terminal sends a third random number to the access network device. If the access network device can correctly receive the third random number, the access network device sends the third random number to the terminal device. When the terminal receives the third random number, the terminal device determines that random access succeeds. After determining that the random access succeeds, the terminal sends identification information of the terminal to the RAN.

Finally, the access network device receives the identifier from the first terminal.

A specific inventory procedure is not described in detail in this application. For details, refer to descriptions of a current inventory procedure.

In the foregoing implementation, the method 300 further includes S361: The terminal management function network element sends a third message to the charging network element. Correspondingly, the charging network element receives the third message.

The third message is used to request to stop (namely, end) the charging for the first operation for the target terminals. In other words, the third message is used to end the charging for the inventory request initiated in S310.

Specifically, if the second message is the converged charging create request message, the third message may be a converged charging release request (Nchf_ConvergedCharging_Release Request) message, and a request URI is {apiRoot}/nchf-convergedcharging/{apiVersion}/chargingdata/{ChargingDataRef1}/release. The charging network element deletes a previously created individual charging data resource based on the request URI. If the charging network element still has a CDR that is not stopped, the charging network element sends the CDR to the accounting system.

If the second message is the offline only charging create request message, the third message may be an offline charging only release request (Nchf_OfflineOnlyCharging_Release Request) message, and a request URI is {apiRoot}/nchf-offlineonlycharging/{apiVersion}/offlinechargingdata/{ OfflineChargingDataRef2}/release. The charging network element deletes previously created individual offline only charging data based on the request URI. If the charging network element still has a CDR that is not stopped, the CHF sends the CDR to the accounting system.

Optionally, the third message may include a stop (stop) indication, and the charging network element stops the charging based on the stop indication.

Specifically, the third message includes the stop indication, and the charging network element may stop the charging based on the stop indication. Alternatively, the third message does not include the stop indication, but the third message is the stop indication, and the charging network element stops the charging based on the third message.

Optionally, in another implementation, the method 300 further includes S352: The terminal management function network element determines that a timer expires.

When receiving the first message, the terminal management function network element starts a timer for executing the first operation for the target terminal. The timer is used to determine when to end the charging for the first operation for the target terminal. When the timer expires, the terminal management function network element may stop the charging. This manner helps improve charging accuracy and reduce resource consumption.

Duration of the timer may be default duration. For example, the duration of the timer may be 5 minutes. If the terminal management function network element does not receive another first message within default duration of receiving the first message, the terminal management function network element ends the charging for the first operation for the target terminal.

Optionally, the method 300 further includes: The terminal management function network element sends a policy rule to the terminal management user plane function network element. The policy rule is used to detect that the execution of the first operation for the target terminal is completed, or is used to detect the execution result of executing the first operation for the target terminal. The policy rule includes the identification information of the target terminal.

In other words, the policy rule is used to detect the first information or the second information.

Specifically, the terminal management function network element may send the detection rule of the first information or the second information to the terminal management user plane function network element, so that the terminal management user plane function network element can identify the first information or the second information according to the detection rule, and further send the first information or the second information to the terminal management function network element.

When the timer expires, the method 300 further includes S362: The terminal management function network element sends a third message to the charging network element. Correspondingly, the charging network element receives the third message.

For specific descriptions of S362, refer to the foregoing descriptions of S361. Details are not described herein again.

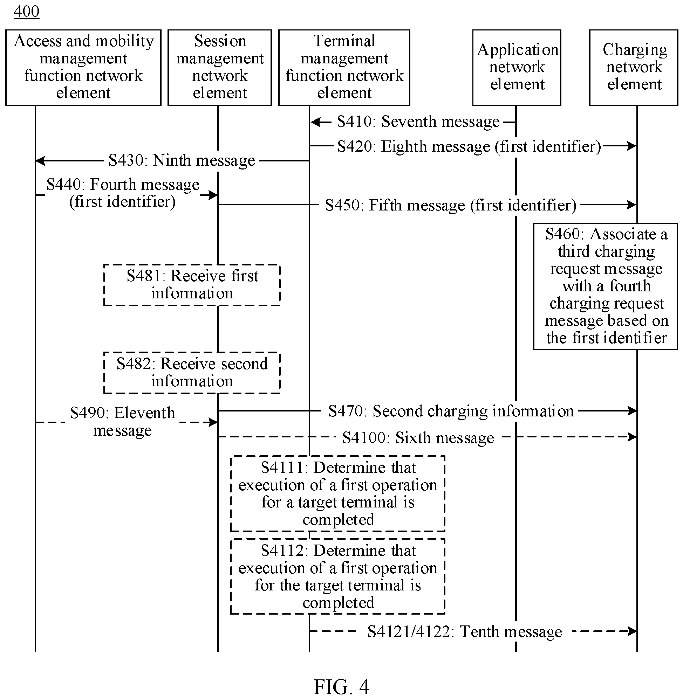

FIG. 4 is another diagram of a charging method according to an embodiment of this application. As shown in FIG. 4, the method 400 includes the following steps.

S410: An application network element AF of an application sends a seventh message to a terminal management function network element. Correspondingly, the terminal management function network element receives the seventh message.

The seventh message is used to request to execute a first operation for a target terminal.

Specifically, the seventh message may be understood as a request message used to request the terminal management function network element to perform inventory for the target terminal, and may be referred to as an inventory request message. In this application, the inventory indicates to execute the first operation for the target terminal.

For example, the first operation includes at least one of the following: querying a terminal identifier, reading, writing, killing, locking, block writing, block erasing, accessing, encrypting, decrypting, or the like.

The seventh message may include at least one of the following: indication information of the first operation, an operation parameter corresponding to the first operation, first indication information, identification information of the target terminal, identification information of the application, and first tunnel information.

For descriptions of the indication information of the first operation, the operation parameter corresponding to the first operation, the first indication information, the identification information of the target terminal, the identification information of the application, and the first tunnel information, refer to the foregoing descriptions of S310. Details are not described herein again.

S420: The terminal management function network element sends an eighth message to a charging network element. Correspondingly, the charging network element receives the eighth message.

The charging network element may be a converged charging function network element, or may be an offline only charging function network element. This is not limited in this application.

The eighth message is used to request to start charging for the first operation for the target terminal.

Specifically, the eighth message may be an Nchf_ConvergedCharging_Create Request message, and a request URI is {apiRoot}/nchf-convergedcharging/{apiVersion}/chargingdata. The charging network element creates a corresponding individual charging data resource based on the eighth message, and generates a corresponding URI #1. For example, the URI #1 is { apiRoot}/nchf-convergedcharging/{ apiVersion}/chargingdata/{ChargingDataRef1}. The charging network element returns the URI #1 to the terminal management function network element.

Specifically, the eighth message may alternatively be an Nchf_OfflineOnlyCharging_Create Request message, and a request URI is {apiRoot}/nchf-offlineonlycharging/ {apiVersion }/offlinechargingdata. The charging network element creates corresponding individual offline only charging data based on the eighth message, and generates a corresponding resource identifier URI #12. For example, a URI #2 is {apiRoot}/nchf-offlineonlycharging/ {apiVersion }/offlinechargingdata/ {OfflineChargingDataRefl}. The charging network element returns the URI #2 to the terminal management function network element.

Optionally, the eighth message may include a start (start) indication, and the charging network element starts the charging based on the start indication.

Specifically, the eighth message includes the start indication, and the charging network element may start the charging based on the start indication. Alternatively, the eighth message does not include the start indication, but the eighth message may represent the start indication, and the charging network element starts the charging based on the eighth message.

The eighth message further includes a first identifier. The first identifier identifies the charging initiated by the terminal management function network element for the first operation for the target terminal.

Specifically, the first identifier may also be referred to as a charging identifier (charging ID), and identifies the eighth message.

The first identifier is allocated by the terminal management function network element. For example, for different first messages sent by the application network element, the terminal management function network element may allocate different first identifiers, and include a corresponding first identifier in the eighth message, to identify a current charging request.

Specifically, the eighth message further includes a type of a network element sending the message, and the network element type herein is a terminal management function network element.

Optionally, the eighth message may include at least one of the indication information of the first operation, the operation parameter corresponding to the first operation, the first indication information, the identification information of the target terminal, the identification information of the application, and the first tunnel information.

In other words, the terminal management function network element may send information in a ninth message to the charging network element, and the charging network element charges, based on the information, for the inventory request initiated in S410.

S430: The terminal management function network element sends a ninth message to an access and mobility management network element. Correspondingly, the access and mobility management network element receives the ninth message.

The ninth message is used to request to execute the first operation for the target terminal.

Specifically, after receiving a first message, the terminal management function network element determines, based on the first message, one or more access and mobility management network elements and one or more access network devices corresponding to each access and mobility management network element, and sends the ninth message to the one or more access and mobility management network elements, to request the access and mobility management network element to execute the first operation for the target terminal within areas managed by the access and mobility management network element.

The ninth message includes the first identifier.

In addition, the ninth message further includes at least one of the indication information of the first operation, the operation parameter corresponding to the first operation, second indication information, the identification information of the target terminal, the identification information of the application, and the first tunnel information. For descriptions of the information, refer to S410.

The second indication information indicates an area in which the first operation is to be executed.

Specifically, the area that is indicated by the second indication information and in which the first operation is to be executed includes a location of a target terminal for which the inventory is to be performed. The second indication information includes 3GPP location information, for example, a TA list or a cell list.

It should be noted that, if an area provided by the application network element (for example, an area indicated by the first indication information included in the first message received by the terminal management function network element in S410) is a geographical location and/or a municipal location, the terminal management function network element needs to map the area indicated by the first indication information to a TA list or a cell list.

S440: The access and mobility management network element sends a fourth message to a session management network element. Correspondingly, the session management network element receives the fourth message.

Specifically, after receiving the ninth message, the access and mobility management network element determines, based on the identification information of the application, the first tunnel information, and the like in the ninth message, that a user plane tunnel needs to be established, and the access and mobility management network element sends the fourth message to the session management network element.

The fourth message is used to request to establish a first session, and the first session is used for transmission of execution information of one or more terminals in the target terminal.

It should be understood that, in some cases, the first session may refer to a tunnel. In other words, the execution information of the one or more terminals in the target terminal is communicated through the tunnel.

The execution information of the one or more terminals is information obtained by executing the first operation for the one or more terminals.

The fourth message includes the first identifier.

In addition, the fourth message further includes at least one of the following: the first tunnel information, the identification information of the target terminal, and the identification information of the application.

For specific descriptions of the execution information of the first or more terminals, the first tunnel information, the identification information of the target terminal, and the identification information of the application, refer to the foregoing descriptions of S330. Details are not described herein again.

S450: The session management network element sends a fifth message to the charging network element. Correspondingly, the charging network element receives the fifth message.

Specifically, after receiving the fourth message, the session management network element may determine a user plane network element based on the identification information of the application, and establish a user plane tunnel between the user plane network element and a server of the application jointly with the user plane network element and the application server. Further, the session management network element sends the fifth message to the charging network element.

The fifth message is used to request to start charging for the first operation for the target terminal.

Specifically, the fifth message may be an Nchf_ConvergedCharging_Create Request message, and a request URI is {apiRoot}/nchf-convergedcharging/{apiVersion}/chargingdata. The charging network element creates a corresponding individual charging data resource based on the fifth message, and generates a corresponding resource identifier URI #3. For example, the URI #3 is {apiRoot}/nchf-convergedcharging/{apiVersion}/chargingdata/{ChargingDataRef3}. The charging network element returns the URI #3 to the session management network element.

Alternatively, the fifth message may be an Nchf_OfflineOnlyCharging_Create Request message, and a request URI is {apiRoot}/nchf-offlineonlycharging/ {apiVersion }/offlinechargingdata. The charging network element creates corresponding individual offline only charging data based on the fifth message, and generates a corresponding resource identifier URI #4. For example, the URI #4 is {apiRoot}/nchf-offlineonlycharging/ {apiVersion }/offlinechargingdata/ {OfflineChargingDataRef4}. The charging network element returns the URI #4 to the session management network element.

The fifth message includes the first identifier.

Specifically, the fifth message further includes a type of a network element sending the message, and the network element type herein is a session management network element.

In addition, the fifth message may further include a start (start) indication, and the charging network element starts the charging based on the start indication.

Specifically, the fifth message includes the start indication, and the charging network element may start the charging based on the start indication. Alternatively, the fifth message does not include the start indication, but the fifth message may represent the start indication, and the charging network element starts the charging based on the fifth message.

In S430, the terminal management function network element determines the one or more access and mobility management network elements, where the one or more access and mobility management network elements correspond to one or more session management network elements, and the fifth message includes the first identifier, so that the charging network element can associate the eighth message with the fifth messages initiated by the one or more session management network elements.

Optionally, the fifth message further includes at least one of the following: the first tunnel information, the identification information of the target terminal, and the identification information of the application.

S460: The charging network element associates the eighth message with the fifth message based on the first identifier.

Specifically, the charging network element associates, based on the first identifier, a session initiated by the terminal management function network element with a session initiated by the session management network element. In other words, sessions including the same first identifier belong to a same inventory request. Subsequently, for charging requests including the same first identifier, the charging network element may generate a CDR by summarizing information obtained from the terminal management function network element and the session management network element.

Specifically, the charging network element associates, based on the first identifier, the resource whose identifier is the URI #1 with the resource whose identifier is the URI #3, or associates, based on the first identifier, the resource whose identifier is the URI #2 with the resource whose identifier is the URI #4.

S470: The session management network element sends second charging information. Correspondingly, the charging network element receives the second charging information.

Specifically, if the fifth message is a converged charging create request message, the session management network element sends an Nchf_ConvergedCharging _Update Request message to the charging network element, and a request URI is {apiRoot}/nchf-convergedcharging/{apiVersion}/chargingdata/{ ChargingDataRef3 }/update. The converged charging create request message includes the second charging information. The charging network element updates a previously created individual charging data resource based on the request URI, stores the second charging information, generates the CDR based on the second charging information and information carried in the fifth message, and sends the CDR to an accounting system.

Specifically, if the fifth message is an offline only charging create request message, the terminal management function network element sends an Nchf_OfflineOnlyCharging_Update Request message to the charging network element, and a request URI is {apiRoot}/nchf-offlineonlycharging/{apiVersion}/offlinechargingdata/{OfflineChargingDataRef2}/update. The offline only charging create request message includes the second charging information. The charging network element updates previously created individual offline only charging data based on the request URI, stores the second charging information, generates the CDR based on the second charging information and the information carried in the fifth message, and sends the CDR to the accounting system.

The second charging information includes the execution information of the one or more terminals in the target terminal.

Similar to S330, the execution information of the one or more terminals includes at least one of the following: execution results of executing the first operation for the one or more terminals, identification information of the one or more terminals, or a quantity of the one or more terminals.

For specific content of "execution information of one or more terminals" and "one or more terminals", refer to the descriptions of the first charging information in S330. Details are not described herein again.

The second charging information is used to charge for a process in which the first operation is executed for the one or more terminals.

For a specific manner in which the charging network element generates the charging data record CDR, refer to the foregoing descriptions in S340.

Specifically, in an implementation of the foregoing embodiment, the charging network element may generate, based on the first charging information, a CDR of a process in which the first operation is executed for a first terminal.

In an example, when the execution information of the one or more terminals includes an identifier of the first terminal and/or a quantity 1, the CDR generated by the charging network element includes one or more of the following: the identification information of the application, the identification information of the target terminal, the indication information of the first operation, the operation parameter corresponding to the first operation, the first tunnel information, the address information of the application network element, and the identifier of the first terminal. Alternatively, the CDR includes at least one of the following: the identification information of the application, the identification information of the target terminal, the indication information of the first operation, the operation parameter corresponding to the first operation, the address information of the application network element, the first tunnel information, and the quantity 1.

In another example, when the execution information of the one or more terminals includes an execution result of executing the first operation for the first terminal, the CDR generated by the charging network element includes the identification information of the application, the identification information of the target terminal, the indication information of the first operation, the operation parameter corresponding to the first operation, the address information of the application network element, the first tunnel information, an identifier of the first terminal, and the execution result of executing the first operation for the first terminal.

Specifically, in another implementation of the foregoing embodiment, the charging network element may generate, based on the first charging information, a CDR of a process in which the first operation is executed for a terminal, in the target terminal, within a coverage area of a first access network device.

In an example, when the execution information of the one or more terminals includes an identifier list of the terminal or a terminal quantity obtained by the first access network device, the CDR generated by the charging network element includes at least one of the following: the identification information of the application, the identification information of the target terminal, the indication information of the first operation, the operation parameter corresponding to the first operation, the address information of the application network element, the first tunnel information, and the identifier list of the obtained terminal. Alternatively, the CDR includes at least one of the following: the identification information of the application, the identification information of the target terminal, the indication information of the first operation, the operation parameter corresponding to the first operation, the address information of the application network element, the first tunnel information, and the quantity of obtained terminals.

In another example, when the execution information of the one or more terminals includes an execution result of executing the first operation for the terminal obtained by the first access network device, the CDR generated by the charging network element includes at least one of the following: the identification information of the application, the identification information of the target terminal, the indication information of the first operation, the operation parameter corresponding to the first operation, the address information of the application network element, the first tunnel information, and a list of a combination of an identifier of the obtained terminal and a corresponding execution result.

The charging network element may generate one CDR after receiving each piece of second charging information, or generate one CDR based on a plurality of pieces of second charging information after receiving the plurality of pieces of second charging information according to a network policy or the like.

Based on the solution in the foregoing embodiment, the session management network element may initiate the charging request to the charging network element based on the fourth message, and send charging information to the charging network element after the execution of the first operation for the one or more terminals is completed, so that the charging network element can charge, based on the charging request and the charging information, for the process in which the first operation is executed for the one or more terminals. According to this solution, charging is implemented for a terminal management process.

Optionally, in an implementation of the foregoing embodiment, before S470, the method 400 further includes S481: The session management network element receives first information. The first information indicates that the execution of the first operation for the first terminal is completed, or the first information includes execution information of the first terminal.

In other words, after receiving the first information, the session management network element sends the first charging information to the charging network element, where the first charging information includes the execution information of the first terminal.

That the session management network element receives first information includes:

The session management network element receives the first information from the application network element, or the session management network element receives the first information from the first access network device.

In other words, the first information may be from the first access network device or the application network element. The first access network device is configured to execute the first operation for the first terminal.

In an example, the first information indicates that the execution of the first operation for the first terminal is completed, and the first information is from the application network element.

Specifically, when the application network element initiates an execution command to the first terminal, after receiving the execution result of executing the first operation for the first terminal, the application network element determines, based on the execution result, that the execution of the first operation for the first terminal is completed, so that the application server sends the first information to the first access network device by using a user plane. The first information passes through the user plane network element. The user plane network element sends the first information to the session management network element.

In another example, the first information includes the execution information of the first terminal, and the first information is from the first access network device.

Specifically, when the first access network device initiates an execution command to the first terminal, after receiving the execution result of executing the first operation for the first terminal, the first access network device determines, based on the execution result, that the execution of the first operation for the first terminal is completed, to send the first information to the application server by using a user plane. The first information passes through the user plane network element. The user plane network element sends the first information to the session management network element.

It should be understood that a source of the first information is not necessarily related to content of the first information, and the foregoing several examples are merely examples for description. This is not limited in this application.

Optionally, in another implementation of the foregoing embodiment, the session management network element may send the first charging information to the charging control network element after receiving first information corresponding to at least two first terminals. In this case, the first charging information includes an identifier list of the at least two first terminals or a quantity of the at least two first terminals.

In other words, in this implementation, "one or more terminals" in S470 refer to the at least two first terminals. Optionally, in an implementation of the foregoing embodiment, before S470, the method 400 further includes S482: The session management network element receives second information. The second information indicates that the execution of the first operation for the terminal, in the target terminal, within the coverage area of the first access network device is completed, or the second information includes execution information of the terminal, in the target terminal, within the coverage of the first access network device.

In other words, after receiving the second information, the session management network element sends the first charging information to the charging network element, where the first charging information includes the execution information of the terminal within the coverage area of the first access network device.

The second information is from the first access network device.

It should be understood that the first access network device may determine, based on an inventory process, that inventory for a target terminal within the coverage of the first access network device is completed, and may send the second information to the session management network element.

In an example, after determining that the inventory for the target terminal within the coverage of the first access network device is completed, the first access network device may send dedicated indication information via the access and mobility management network element, to indicate that the execution of the first operation for the terminal, in the target terminal, within the coverage area of the first access network device is completed.

In another example, after determining that the inventory for the target terminal within the coverage of the first access network device is completed, the first access network device may send, to the application server by using the user plane, the execution information of the terminal within the coverage area of the first access network device. The execution information passes through the user plane network element. The user plane network element sends the execution information to the session management network element.

Optionally, in another implementation of the foregoing embodiment, the session management network element may send the first charging information to the charging control network element after receiving corresponding second information from at least two first access network devices. In this case, the first charging information includes a list of target terminals within coverage areas of the at least two first access network devices, the list of the target terminals within the coverage areas of the at least two first access network devices, or a quantity of the target terminals within the coverage areas of the at least two first access network devices.

In other words, in this implementation, "one or more terminals" in S470 refer to the terminals within the coverage areas of the at least two first access network devices.

Optionally, the method 400 further includes S490: The access and mobility management network element sends an eleventh message to the session management network element. Correspondingly, the session function network element receives the eleventh message.

Specifically, the access and mobility management network element determines, based on second information of an access network device within an area managed by the access and mobility management network element, that the execution of the first operation for the target terminal is completed, and the access and mobility management network element sends the eleventh message to the session management network element.

The eleventh message is used to request to release the first session.

Optionally, the method 400 further includes S4100: The session management network element sends a sixth message to the charging network element. Correspondingly, the charging network element receives the sixth message.

Specifically, after receiving the eleventh message, the session management network element releases the first session, and sends the sixth message to the charging network element.

The sixth message is used to request to stop the charging for the first operation for the target terminal.

Specifically, if the fifth message is a converged charging create request message, the sixth message may be an Nchf_ConvergedCharging_Release Request message, and a request URI is { apiRoot}/nchf-convergedcharging/{ apiVersion}/chargingdata/{ ChargingDataRef3 }/release. The charging network element deletes a previously created individual charging data resource based on the request URI. Optionally, the message may further include second charging information that is not reported.

Specifically, if the fifth message is an offline only charging create request message, the sixth message may be an Nchf_OfflineOnlyCharging _Release Request message, and a request URI is {apiRoot}/nchf-offlineonlycharging/{apiVersion}/offlinechargingdata/{OfflineChargingDataRef4}/release. The charging network element deletes previously created individual offline only charging data based on the request URI. Optionally, the message may further include second charging information that is not reported.

Similarly, the sixth message includes a stop (stop) indication, and the charging network element stops the charging based on the stop indication.

Optionally, in an implementation, the method 400 further includes S4111: The terminal management function network element determines that the execution of the first operation for the target terminal is completed.

In the foregoing implementation, the method 400 further includes S4121: The terminal management function network element sends a tenth request message to the charging network element. The tenth request message is used to request to stop the charging for the first operation for the target terminal.

Specifically, the terminal management function network element sends the Nchf_ConvergedCharging _Release Request message to the charging network element, and the request URI is {apiRoot}/nchf-convergedcharging/{apiVersion}/chargingdata/{ChargingDataRef11}/release. The charging network element deletes a previously created individual charging data resource based on the request URI. If the charging network element still has a CDR that is not stopped, the charging network element sends the CDR to the accounting system.

Specifically, the terminal management function network element sends the Nchf_OfflineOnlyCharging _Release Request message to the charging network element, and the request URI is {apiRoot}/nchf-offlineonlycharging/ {apiVersion}/offlinechargingdata/{OfflineChargingDataRef2}/release. The charging network element deletes previously created individual offline only charging data based on the request URI. If the charging network element still has a CDR that is not stopped, the charging network element sends the CDR to the accounting system.

For specific processes of S4111 and S4121, refer to S351 and S361.

Optionally, in another implementation, the method 400 further includes S4112: The terminal management function network element determines that a timer expires.

When receiving the seventh message, the terminal management function network element starts a timer for executing the first operation for the target terminal.

When the timer expires, the method 400 further includes S4122: The terminal management function network element sends the tenth request message to the charging network element. The tenth request message is used to request to stop the charging for the first operation for the target terminal. In this case, the charging for the first operation for the target terminal ends.

For specific processes of S4112 and S4122, refer to S352 and S362.

Optionally, the method 400 further includes: The session management network element sends a policy rule to the user plane network element. The policy rule is used to detect that the execution of the first operation for the target terminal is completed, or is used to detect the execution result of executing the first operation for the target terminal. The policy rule includes the identification information of the target terminal.

In other words, the policy rule is used to detect the first information or the second information.

Specifically, the session management network element may send the detection rule of the first information or the second information to the user plane network element, so that the user plane network element can identify the first information or the second information according to the detection rule, and further send the first information or the second information to the session management network element.

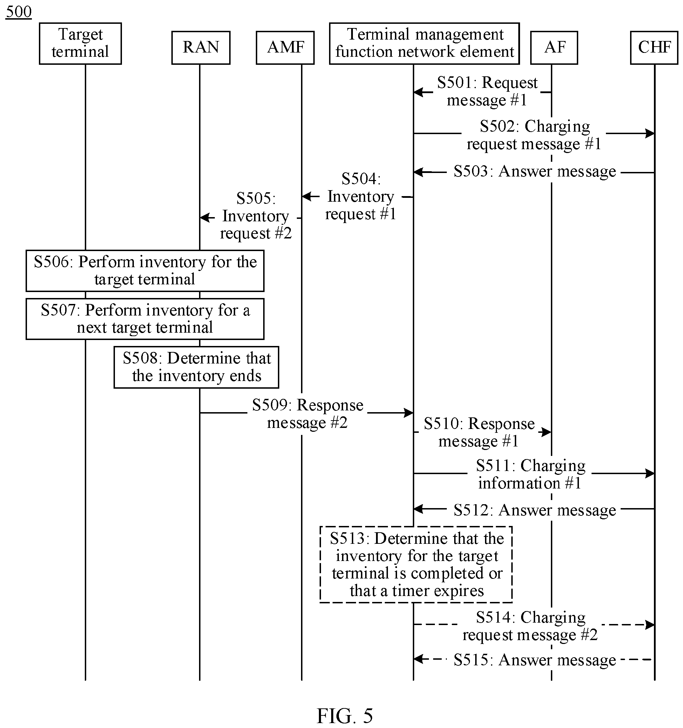

The charging method provided in embodiments of this application is described below in detail with reference to FIG. 5 to FIG. 14.

For ease of understanding, an example in which a charging network element is a CHF, an access network device is a RAN, an access and mobility management network element is an AMF, a terminal management user plane function network element is a terminal management function network element-UP, a session management network element is an SMF, an application network element of an application is an AF, a server of the application is an AS, and a user plane network element is a UPF is used below for description.

FIG. 5 is another schematic flowchart of a charging method according to this application. The method 500 shown in FIG. 5 may be considered as a specific implementation of the foregoing method 300. The method 500 shown in FIG. 5 describes charging in a scenario in which the terminal management function network element sends an execution command to the RAN, the RAN stores and initiates the execution command, and the RAN reports an inventory result by using a control plane.

S501: The AF of the application sends a request message #1 (an example of the first message) to the terminal management function network element.

The request message #1 is used to request to execute a first operation for a target terminal, and the request message #1 includes identification information of the target terminal, indication information of the first operation, and information about the application.

The information about the application includes identification information of the application or data network access identifier information of the application.

In this embodiment, when the request message #1 does not carry the indication information of the first operation, it indicates that the first operation is query (query), that is, querying a terminal identifier. Alternatively, when the request message #1 carries the indication information of the first operation and the indication information of the first operation includes the query, it indicates that the first operation is the query (query).

Optionally, when the indication information of the first operation indicates that the first operation is an operation other than querying a terminal identifier, any first operation other than querying a terminal identifier may be referred to as an execution command.

Optionally, the request message #1 further includes first indication information, an operation parameter, a notification address #1, and an association identifier #1.

The identification information of the target terminal, the indication information of the first operation, the first indication information, the operation parameter, the identification information of the application, and the notification address #1 are described above, and details are not described herein again.

For example, the association identifier #1 is used to associate the message #1 with a response message #1 for the message #1.

Optionally, when the terminal management function network element receives the request message #1, the terminal management function network element may start a timer.

For details, refer to the foregoing descriptions of S310.

S502: The terminal management function network element sends a charging request message #1 (an example of the second message) to the CHF.

The charging request message #1 includes a start indication.

Optionally, the charging request message #1 may further include the identification information of the target terminal, the indication information of the first operation, the operation parameter, the first indication information, the identification information of the application, and the notification address #1.

For details, refer to the foregoing descriptions of S320.

S503: The CHF returns an answer message.

Specifically, the CHF starts charging based on the charging request message #1, and sends the answer message to the terminal management function network element.

If the charging request message #1 is an Nchf_ConvergedCharging_Create Request message, the answer message may be an Nchf_ConvergedCharging_Create Response. Alternatively, if the charging request message #1 is an Nchf_OfflineOnlyCharging_Create Request message, the answer message may be an Nchf_OfflineOnlyCharging_Create Response.

S504: The terminal management function network element sends an inventory request #1 (an example of the first inventory request) to the AMF.

Specifically, after receiving the request message #1, the terminal management function network element may determine, based on information (for example, the identification information of the target terminal, the first indication information, and the identification information of the application) in the request message #1, the AMF and a RAN corresponding to the AMF. For example, the terminal management function network element determines the corresponding RAN or AMF based on the first indication information (for example, a cell identity), or determines, based on the identification information of the target terminal, the RAN or the AMF corresponding to the identification information.

In this embodiment of this application, the RAN is a RAN having a terminal inventory function.

Further, after the terminal management function network element determines the AMF, the terminal management function network element may send the inventory request #1 to the AMF.

The inventory request #1 is used to request to execute the first operation for the target terminal, and the inventory request #1 includes the identification information of the target terminal and the indication information of the first operation. The identification information of the target terminal and the indication information of the first operation are described above. Details are not described herein again.

Optionally, the inventory request #1 further includes second indication information.

For example, an area indicated by the second indication information includes an area managed by the AMF, and the second indication information includes 3GPP location information (for example, a TA list or a cell list).

If areas indicated by the first indication information are managed by different AMFs, the terminal management function network element needs to send the inventory request #1 to each AMF. The different inventory requests #1 include different second indication information, indicating the areas managed by the different AMPs.

Optionally, the inventory request #1 further includes an operation parameter. The operation parameter is described above. Details are not described herein again.

Optionally, the inventory request #1 further includes a notification address #2 and an association identifier #2.

For example, the notification address #2 indicates an address used by the terminal management function network element to receive terminal information and a command execution result, for example, an address of the terminal management function network element.

For example, the association identifier #2 is used to associate the inventory request #1 with a response message #2 for the inventory request #1.

S505: The AMF sends an inventory request #2 (an example of the second inventory request) to the RAN.

The inventory request #2 is used to request to execute the first operation for the target terminal, and the inventory request #2 includes the identification information of the target terminal and the indication information of the first operation. The identification information of the target terminal and the indication information of the first operation are described above. Details are not described herein again.

Optionally, the inventory request #2 further includes third indication information, the operation parameter, the notification address #2, and the association identifier #2.

For example, an area indicated by the third indication information includes an area managed by the RAN, and the third indication information includes 3GPP location information (for example, a TAlist or a cell list).

If areas indicated by the second indication information are managed by different RANs, the terminal management function network element needs to send the inventory request #2 to each RAN. The different inventory requests #2 include different third indication information, indicating the areas managed by the different RANs.

It should be noted that when the area managed by the AMF covers a plurality of RANs, the AMF sends the inventory request #2 to each of the plurality of RANs. A process of sending the inventory request #2 to different RANs is similar to the foregoing process of sending the inventory request #2 to a RAN, and a difference is that, for each of the different RANs, an area in which the RAN performs inventory needs to be determined.

It should be understood that another implementation of step S504 and step S505 may be as follows: The terminal management function network element determines to send the inventory request #2 to each RAN, and the terminal management function network element encapsulates the inventory request #2 in a message #A. The message #A further includes identification information of the RAN. After the AMF receives the message #A, the AMF obtains the inventory request #2 by decapsulating the message #A, encapsulates the inventory request #2 in a message #B, and sends the message #B to the RAN corresponding to the identification information of the RAN. It may be understood that the AMF transparently transmits the inventory request #2. In this case, the inventory request #1 includes the inventory request #2.

S506: The RAN performs inventory for the target terminal.

Specifically, the RAN sends a radio frequency signal to all terminals within a coverage area, to provide an excitation signal for the terminals within the coverage area of the RAN, so that the terminal devices send signals to the RAN.

Further, the RAN sends a selection message to the terminals within the coverage area of the RAN.

Subsequently, the RAN sends a query request to all selected terminals. Any target terminal within the coverage of the RAN, denoted as a terminal #1 (an example of the first terminal), sends identification information to the RAN.

It should be understood that this step is a random access process of the terminal #1. Any one of the target terminal performs the random access process.

Further, if the RAN receives another execution command in S505, the RAN sends the execution command to the terminal #1.

After completing the execution command, the terminal #1 sends an execution result to the RAN. For example, if the execution command is read, the execution result includes read data; or if the execution command is write, the execution result is an indication of a success or a failure and the execution result.

S507: The RAN determines that the inventory for the terminal #1 is completed, and the RAN sends a query request for a next tag to all selected tags, to proceed to step S506.

S508: The RAN determines that the inventory for all the selected terminals is completed.

That the RAN determines that the inventory for all the terminals selected within the coverage of the RAN is completed is specifically as follows: After performing step S506, if the RAN does not receive, within a configured period of time, a random access request message initiated by any terminal, the RAN determines that the inventory for the target terminal within the coverage of the RAN is completed (in other words, query is completed or a target operation is completed).

S509: The RAN sends a response message #2 to the terminal management function network element based on the notification address 2.

After determining that the inventory for all the terminals selected within the coverage of the RAN is completed, the RAN may send the response message #2 to the terminal management function network element based on the notification address #2.

Specifically, the response message #2 is a response to the inventory request #1 in S504, and the response message #2 includes the association identifier #2.

Specifically, after receiving an identifier and an execution result of the target terminal, the RAN may report the identifier and the execution result in two manners.

Manner 1: After determining that the terminal #1 completes step S506, the RAN sends the response message #2 to the terminal management function network element.

That is, each target terminal reports the identifier and the execution result of the target terminal.

In Manner 1, S509 may be performed after S506.

In Manner 1, the response message #2 includes execution information (an example of the first information) of the terminal #1, that is, an identifier of the terminal #1 and/or a quantity. It should be understood that in this case, a value of the quantity is 1.

Optionally, if the RAN sends the execution command and receives the execution result in S506, the execution information of the terminal #1 further includes the execution result.

Optionally, the response message #2 further includes an identifier of the RAN.

Optionally, the response message #2 further includes information #1, indicating that the inventory for the terminal #1 is completed.

For details, refer to the foregoing descriptions of S341.

Manner 2: After all received target terminals complete step S506, the RAN sends the response message #2 to the terminal management function network element.

That is, all the received target terminals report the identifiers and the execution results of the target terminals in a unified manner.

In Manner 2, S509 may be performed after S508.

In Manner 2, the response message #2 includes execution information (an example of the second information) of a terminal that is within the coverage area of the RAN and that is in the target terminal, that is, an identifier list of the terminal obtained by the RAN and/or a quantity of terminal obtained by the RAN. The terminal obtained by the RAN is a terminal that sends an identifier to the RAN, namely, the terminal that is within the coverage area of the RAN and that is in the target terminal.

Optionally, if the RAN sends the execution command and receives the execution result in S506, the execution information of the terminal that is within the coverage area of the RAN and that is in the target terminals further includes a list of an execution result corresponding to each terminal.

Optionally, the response message #2 further includes an identifier of the RAN.

Optionally, the response message #2 further includes information #2, indicating that the inventory for the target terminal within the coverage area of the RAN is completed, or that the RAN ends the inventory.

For details, refer to the foregoing descriptions of S342.

S510: The terminal management function network element sends the response message #1 to the AF.

After receiving the response message #2, the terminal management function network element sends the response message #1 to the AF.

Specifically, the response message #1 is a response to the request message #1 in S501, and the response message #1 includes the association identifier #1.

Optionally, the response message #2 further includes the identifier of the RAN.

The response message #1 further includes information in the response message #2. Specifically, for Manner 1 and Manner 2 in S509, the response message #1 includes different information.

For Manner 1, the response message #1 includes the execution information of the terminal #1, that is, at least one of the identifier of the terminal #1, the quantity 1, and the execution result.

For Manner 2, the response message #1 includes the execution information of the terminal that is within the coverage area of the RAN and that is in the target terminals, that is, at least one of the identifier list of the terminal obtained by the RAN, the quantity of terminals obtained by the RAN, and the list of the execution result corresponding to each terminal.

S511: The terminal management function network element sends charging information #1 (an example of the first charging information) to the CHF.

After receiving the response message #2, that is, after receiving the execution information of the terminal #1 or the execution information of the terminal that is within the coverage area of the RAN and that is in the target terminal, the terminal management function network element may send the charging information #1 to the CHF.

Specifically, the charging information #1 includes an interim (interim) indication or an update (update) indication. The interim indication or the update indication indicates the CHF to update charging information, to generate a charging data record for the charging information #1.

For information included in the response message #2, the charging information #1 may further include information about the terminal #1 in the target terminal, that is, at least one of the identifier of the terminal #1, the quantity 1, and the execution result, or the charging information #1 includes information about the terminal that is within the coverage area of the RAN and that is in the target terminal, that is, at least one of the identifier list of the terminal obtained by the RAN, the quantity of terminals obtained by the RAN, and the list of the execution result corresponding to each terminal.

Optionally, the charging information #1 further includes the identifier of the RAN.

For details, refer to the foregoing descriptions of S330.

It should be understood that the terminal management function network element may first send the response message #1 to the AF, or may first send the charging information #1 to the CHF. This is not limited in this application. In other words, there is no necessary sequence between S510 and S511.

S512: The CHF returns an answer message to the terminal management function network element.

Specifically, if the charging information #1 includes the execution information of the terminal #1, the CHF may generate, based on the charging information #1, a CDR of a process in which the RAN performs the inventory for the terminal #1.

Specifically, if the charging information #1 includes the execution information of the terminal that is within the coverage area of the RAN and that is in the target terminal, the CHF may generate, based on the charging information #1, a CDR of a process in which the RAN performs the inventory for the terminal within the coverage area of the RAN.

The CHF may generate a CDR based on each piece of received charging information #1, or generate a CDR based on a plurality of pieces of charging information #1 and according to a network policy or the like.

S513: The terminal management function network element determines that the inventory for the target terminal is completed or that a timer expires.

A specific manner in which the terminal management function network element determines that the inventory for the target terminal is completed may be that the terminal management function network element determines that all the RANs determined in S504 send the information #2.

For details, refer to the foregoing descriptions of S351.

Optionally, if the terminal management function network element starts the timer in S501, when the terminal management function network element determines that the timer expires, the terminal management function network element performs S514.

For details, refer to the foregoing descriptions of S352.

S514: The terminal management function network element sends a charging request message #2 (an example of the third message) to the CHF.

The charging request message #2 includes a stop indication, and the stop indication indicates the CHF to stop charging for the charging request message #1.

For details, refer to the foregoing descriptions of S361.

S515: The CHF returns an answer message to the terminal management function network element.

Specifically, the CHF may stop current charging based on the stop indication. If the CHF still has a CDR that is not stopped, the CHF sends the CDR to an accounting system.

It should be understood that S513 to S515 are optional steps. For example, in an always-online charging scenario, the terminal management function network element may not perform S513 and S514. In this case, the CHF does not perform S515 either.

The method 500 shown in FIG. 5 describes charging in an inventory scenario in which the RAN reports the inventory result by using the control plane. In addition, in the inventory scenario, the execution command is initiated by the RAN. Therefore, the charging method provided in this embodiment of this application can be applicable to various different inventory scenarios, and has better compatibility and flexibility.

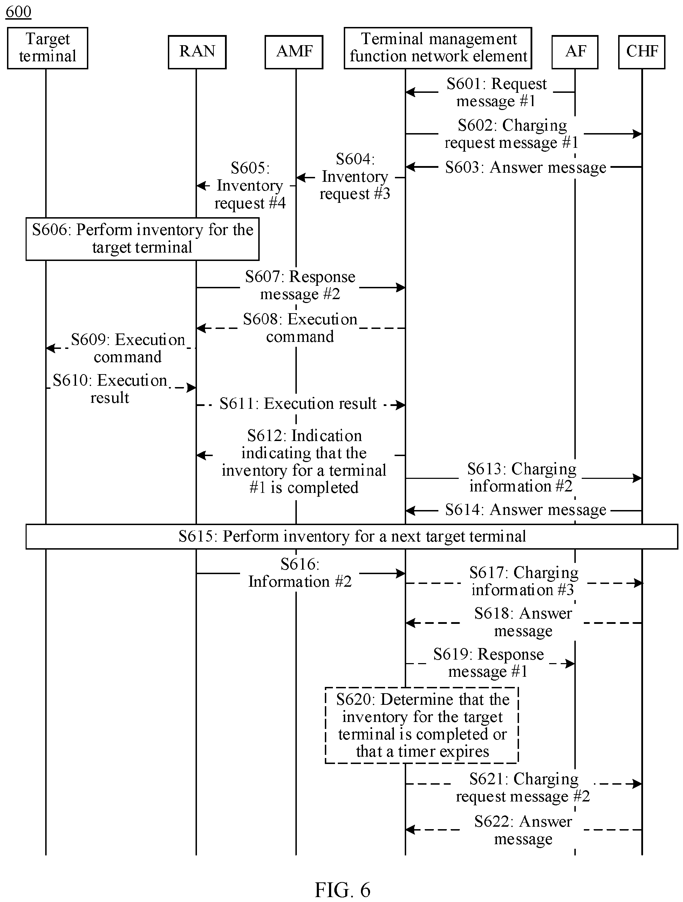

FIG. 6 is another schematic flowchart of a charging method according to this application. The method 600 shown in FIG. 6 may be considered as another specific implementation of the foregoing method 300. The method 600 shown in FIG. 6 describes charging in a scenario in which the terminal management function network element stores an execution command and initiates the execution command, and the RAN reports an inventory result by using a control plane.

S601: The AF of the application sends a request message #1 to the terminal management function network element.

S602: The terminal management function network element sends a charging request message #1 to the CHF.

S603: The CHF returns an answer message.

For S601 to S603, refer to S501 to S503. Details are not described herein again.

S604: The terminal management function network element sends an inventory request #3 (another example of the first inventory request) to the AMF.

Similar to S504, a difference lies in that if S601 includes the execution command, the terminal management function network element stores the execution command, and the inventory request #3 does not include the execution command. Therefore, the inventory request #3 does not include an operation parameter either.

S605: The AMF sends an inventory request #4 (another example of the second inventory request) to the RAN.

Similar to S505, a possible difference lies in that, compared with the inventory request #2, the inventory request #4 does not include the execution command and the operation parameter.

S606: The RAN performs inventory for a target terminal.

Similar to S506, an inventory process includes: The RAN sends a radio frequency signal, a selection message, and a query request, and a terminal #1 completes a random access process and sends identification information to the RAN.

A difference lies in that in S606, the RAN does not send the execution command to the terminal #1, and the terminal #1 does not send an execution result to the RAN either.

S607: The RAN sends a response message #2 to the terminal management function network element.

Specifically, the response message #2 in S607 is a response to the inventory request #4 in S605, and the response message #2 includes an association identifier #2.

The response message #2 includes execution information of the terminal #1, that is, an identifier of the terminal #1 and/or a quantity. It should be understood that in this case, a value of the quantity is 1.

Optionally, the response message #2 further includes an identifier of the RAN.

S608: If S601 includes the execution command, the terminal management function network element sends the execution command to the RAN.

S609: The RAN sends the execution command to the terminal #1.

S610: The terminal #1 sends the execution result to the RAN.

S611: The RAN sends the execution result to the terminal management function network element.

It should be understood that the execution result is also the execution information of the terminal #1.

S612: The terminal management function network element sends, to the RAN, an indication indicating that the inventory for the terminal #1 is completed.

If the terminal management function network element determines, based on the execution result, that execution of all execution commands is completed, namely, the terminal management function network element determines that the inventory for the terminal #1 is completed, the terminal management function network element sends, to the RAN, the indication (an example of the first information) indicating that the inventory for the terminal #1 is completed.

In the method 600, the indication indicating that the inventory for the terminal #1 is completed is the example of the first information, and S612 may be understood as a process in which the terminal management function network element determines the first information and sends the first information to the RAN.

S613: The terminal management function network element sends charging information #2 (another example of the first charging information) to the CHF.

After determining, based on the execution command in the request message #1, that the inventory for the terminal #1 is completed, namely, after determining the first information, the terminal management function network element may send the charging information #2 to the CHF. The charging information #2 includes an interim (interim) indication or an update (update) indication. The interim indication or the update indication indicates the CHF to update charging information, to generate a charging data record for the charging information #2.

The charging information #2 further includes the execution information of the terminal #1 in S607, that is, the identifier of the terminal #1 and/or the quantity 1.

Optionally, if S608 to S610 are performed, the execution information of the terminal #1 that is received by the terminal management function network element further includes the execution result. Therefore, the charging information #2 further includes the execution information of the terminal #1 in S611, namely, the execution result.

Optionally, the charging information #1 further includes the identifier of the RAN.

Optionally, S613 may not be performed. In other words, the terminal management function network element stores the received execution information of the terminal #1.

S614: The CHF returns an answer message to the terminal management function network element.

Specifically, the CHF may generate, based on the charging information #1, a charging data record of a process in which the RAN performs the inventory for the terminal #1.

It should be understood that if S613 is not performed, S614 is not performed either.

S615: The RAN determines that the inventory for the terminal #1 is completed, and the RAN sends a query request for a next tag to all selected tags, to proceed to step S606.

Specifically, the RAN may determine, based on the indication from the terminal management function network element in S612, that the inventory for the terminal #1 is completed.

Further, the RAN, the target terminal, the terminal management function network element, and the CHF may proceed to S607 to S614.

S616: The RAN determines that inventory for all the selected tags is completed, and sends information #2 (an example of the second information) to the terminal management function network element. The information #2 indicates that inventory for a target terminal within a coverage area of the RAN is completed, or that the RAN ends the inventory.

For a specific method for determining, by the RAN, that the inventory for all the selected tags is completed, refer to S508. Details are not described herein again.

In the method 600, the information #2 is the example of the second information, and S616 may be understood as a process in which the terminal management function network element receives the second information.

If S613 and S614 are not performed, after S616, the method 600 further includes S617 and S618.

S617: The terminal management function network element sends charging information #3 (another example of the first charging information) to the CHF.

After receiving the information #2, the terminal management function network element may send the charging information #1 to the CHF.

The charging information #3 includes an interim (interim) indication or an update (update) indication. The interim indication or the update indication indicates the CHF to generate a charging data record for the charging information #3.

The charging information #3 may further include execution information that is of a plurality of terminals #1 and that is stored by the terminal management function network element. It should be understood that the execution information of the plurality of terminals #1 is summarized into execution information of the terminal that is within the coverage area of the RAN and that is in the target terminal, that is, at least one of an identifier list of the terminal obtained by the RAN, a quantity of terminals obtained by the RAN, and a list of an execution result corresponding to each terminal.

Optionally, the charging information #3 further includes the identifier of the RAN.

In other words, after receiving the execution information of the terminal #1, the terminal management function network element may not send the charging information #2, but store the execution information of the terminal #1, and send the charging information #3 after receiving the information #2, where the charging information #3 includes the execution information that is of the plurality of terminals #1 and that is stored by the terminal management function network element, to request the CHF to charge for an inventory process of the target terminal within the coverage area of the RAN.

S618: The CHF returns an answer message to the terminal management function network element.

Specifically, if a message in the charging information #3 includes the execution information of the terminal that is within the coverage area of the RAN and that is in the target terminal, the CHF may generate, based on the charging information #3, a charging data record of a process in which the RAN performs the inventory for the terminal within the coverage area of the RAN.

S619: The terminal management function network element sends a response message #1 to the AF.

Specifically, the response message #1 in S619 is a response to the request message #1 in S601, and the response message #1 includes an association identifier #1.

The response message #1 includes at least one of the identifier list of the terminal obtained by the RAN, the quantity of terminals obtained by the RAN, the identifier of the RAN, and the list of the execution result corresponding to each terminal.

Optionally, the terminal management function network element may alternatively perform S619 after S613. To be specific, the terminal management function network element reports the execution information of the terminal #1 to the AF after the inventory for the terminal #1 is completed. In this case, the response message #1 may include at least one of the identifier of the terminal #1, the quantity 1, the identifier of the RAN, and the execution result. The terminal management function network element may perform S619 for an identifier and an execution result that are of each target terminal and that are reported by the RAN.

It should be understood that the terminal management function network element may first send the response message #1 to the AF, or may first send the charging information #1 to the CHF. This is not limited in this application. In other words, there is no necessary sequence between S617 and S619, and the terminal management function network element may first perform S617, or may first perform S619.

S620: The terminal management function network element determines that the inventory for the target terminal is completed or that a timer expires.

S621: The terminal management function network element sends a charging request message #2 to the CHF.

S622: The CHF returns an answer message to the terminal management function network element.

For S620 to S622, refer to the descriptions of S513 to S515. Details are not described herein again.

The method 600 shown in FIG. 6 describes charging in an inventory scenario in which the RAN reports the inventory result by using the control plane. In addition, in the inventory scenario, initiation of the execution command is decided by the terminal management function. Therefore, the charging method provided in this embodiment of this application can be applicable to various different inventory scenarios, and has better compatibility and flexibility.

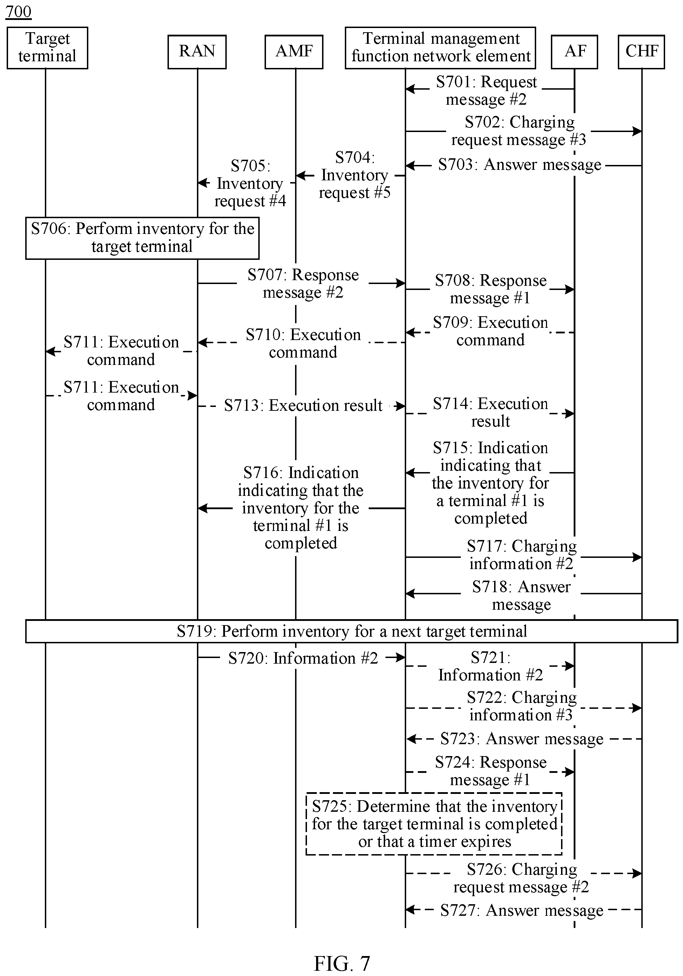

FIG. 7 is another schematic flowchart of a charging method according to this application. The method 700 shown in FIG. 7 may be considered as another specific implementation of the foregoing method 300. The method 700 shown in FIG. 7 describes charging in a scenario in which the AF determines an execution command and initiates the execution command, and a RAN reports an inventory result by using a control plane.

S701: The AF of the application sends a request message #2 (another example of the first message) to the terminal management function network element.

Refer to the descriptions of S501. A difference lies in that the request message #2 does not include the execution command that may be included in the request message #1.

S702: The terminal management function network element sends a charging request message #3 (an example of the second message) to the CHF.

Refer to the descriptions of S502. A difference lies in that the charging request message #3 does not include the execution command that may be included in the charging request message #1.

S703: The CHF returns an answer message.

Specifically, the CHF starts charging based on the charging request message #3, and sends the answer message to the terminal management function network element. The answer message may be a charging data answer message.

S704: The terminal management function network element sends an inventory request #5 (another example of the first inventory request) to the AMF.

Refer to the descriptions of S504. A possible difference lies in that the inventory request #5 does not include the execution command and the operation parameter.

S705: The AMF sends an inventory request #4 to the RAN.

S706: The RAN performs inventory for a target terminal.

S707: The RAN sends a response message #2 to the terminal management function network element.

For S705 to S707, refer to the descriptions of S605 to S607.

S708: The terminal management function network element sends a response message #1 to the AF.

Specifically, the response message #1 in S708 is a response to the request message #2 in S701, and the response message #1 includes an association identifier #1.

The response message #1 includes execution information of a terminal #1, that is, an identifier of the terminal #1 and/or a quantity 1.

Optionally, the response message #1 further includes an identifier of the RAN.

S709: If the AF still has a subsequent execution command, the AF sends the execution command to the terminal management function network element.

S710: The terminal management function network element sends the execution command to the RAN.

S711: The RAN sends the execution command to the terminal #1.

S712: The terminal #1 sends an execution result to the RAN.

S713: The RAN sends the execution result to the terminal management function network element.

For S711 to S713, refer to S609 to S611.

S714: The terminal management function network element sends the execution result to the AF.

In the method 700, the terminal management function network element reports the execution result of the terminal #1 to the AF after receiving the execution result of the terminal #1.

It should be understood that the execution result is also the execution information of the terminal #1.

S715: The AF sends, to the terminal management function network element, an indication (another example of the first information) indicating that the inventory for the terminal #1 is completed.

If the AF determines, based on the execution result of the terminal #1, that execution of all execution commands is completed, in other words, the AF determines that the inventory for the terminal #1 is completed, the AF sends, to the terminal management function network element, the indication indicating that the inventory for the terminal #1 is completed.

In the method 700, the indication indicating that the inventory for the terminal #1 is completed is the example of the first information, and S715 may be understood as a process in which the AF determines the first information and sends the first information to the terminal management function network element.

S716: The terminal management function network element sends, to the RAN, the indication indicating that the inventory for the terminal #1 is completed.

S717: The terminal management function network element sends charging information #2 to the CHF.

After receiving the first information, the terminal management function network element may send the charging information #1 to the CHF.

Optionally, the charging information #2 further includes the execution command received in S709.

Optionally, S717 may not be performed. In other words, the terminal management function network element stores the received execution information of the terminal #1.

S718: The CHF returns an answer message to the terminal management function network element.

It should be understood that if S717 is not performed, S718 is not performed either.

S719: The RAN determines that the inventory for the terminal #1 is completed, and the RAN sends a query request for a next tag to all selected tags, to proceed to step S706.

Further, the RAN, the target terminal, the terminal management function network element, the AF, and the CHF may proceed to S706 to S719.

S720: The RAN determines that inventory for all the selected tags is completed, and sends information #2 (an example of the second information) to the terminal management function network element. The information #2 indicates that inventory for a target terminal within a coverage area of the RAN is completed.

In the method 700, the information #2 is the example of the second information, and S720 may be understood as a process in which the terminal management function network element receives the second information.

For S717 to S720, refer to S613 to S616.

S721: The terminal management function network element sends the information #2 to the AF.

Optionally, the terminal management function network element may send, to the AF, an indication indicating that the RAN ends the inventory.

If S717 and S718 are not performed, after S721, the method 700 further includes S722 and S723.

S722: The terminal management function network element sends charging information #3 to the CHF.

Optionally, the charging information #3 further includes a plurality of execution commands received when S709 is repeatedly performed.

S723: The CHF returns an answer message to the terminal management function network element.

Optionally, after receiving the information #2, the terminal management function network element may first send the charging information #3 to the CHF, or may first send the information #2 to the AF. This is not limited in this application. In other words, there is no necessary sequence between S721 and S722.

S724: The terminal management function network element sends a response message #1 to the AF.

S725: The terminal management function network element determines that the inventory for the target terminal is completed or that a timer expires.

S726: The terminal management function network element sends a charging request message #2 to the CHF.

S727: The CHF returns an answer message to the terminal management function network element.

For S722 to S727, refer to S617 to S622. Details are not described herein again.

The method 700 shown in FIG. 7 describes charging in an inventory scenario in which the RAN reports the inventory result by using the control plane. In addition, in the inventory scenario, the execution command is initiated by the AF. Therefore, the charging method provided in this embodiment of this application can be applicable to various different inventory scenarios, and has better compatibility and flexibility.

In a possible implementation, the terminal management function network element in FIG. 5, FIG. 6, or FIG. 7 may be co-located with a NEF, and an action executed by the terminal management function network element may be understood as an action executed by the NEF.

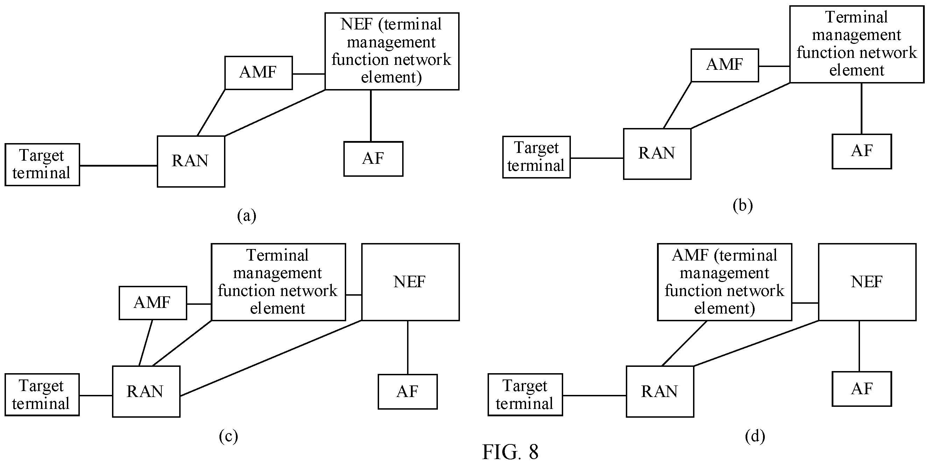

In this implementation, the method procedure shown in FIG. 5, FIG. 6, or FIG. 7 may be applied to a network architecture shown in (a) in FIG. 8.

In another possible implementation, the terminal management function network element in FIG. 5, FIG. 6, or FIG. 7 may be a new independent function network element, and can be configured to forward an inventory request and a response between the AF and the AMF.

In this implementation, the method procedure shown in FIG. 5, FIG. 6, or FIG. 7 may be applied to a network architecture shown in (b) in FIG. 8.

In still another possible implementation, the terminal management function network element in FIG. 5, FIG. 6, or FIG. 7 may be a new independent function network element, and can be configured to forward an inventory request and a response between the NEF and the AMF. In other words, the inventory request and the response between the terminal management function network element shown in FIG. 5, FIG. 6, or FIG. 7 and the AF needs to be forwarded via the NEF.

In this implementation, the method procedure shown in FIG. 5, FIG. 6, or FIG. 7 may be applied to a network architecture shown in (c) in FIG. 8.

In still another possible implementation, the terminal management function network element in FIG. 5, FIG. 6, or FIG. 7 may be co-located with the AMF, and interaction between the terminal management function network element and the AMF may be understood as internal interaction.

In this implementation, the method procedure shown in FIG. 5, FIG. 6, or FIG. 7 may be applied to a network architecture shown in (d) in FIG. 8.

The method information shown in FIG. 5, FIG. 6, or FIG. 7 describes a charging procedure in a scenario in which the RAN reports the inventory result via the AMF and the terminal management function network element.

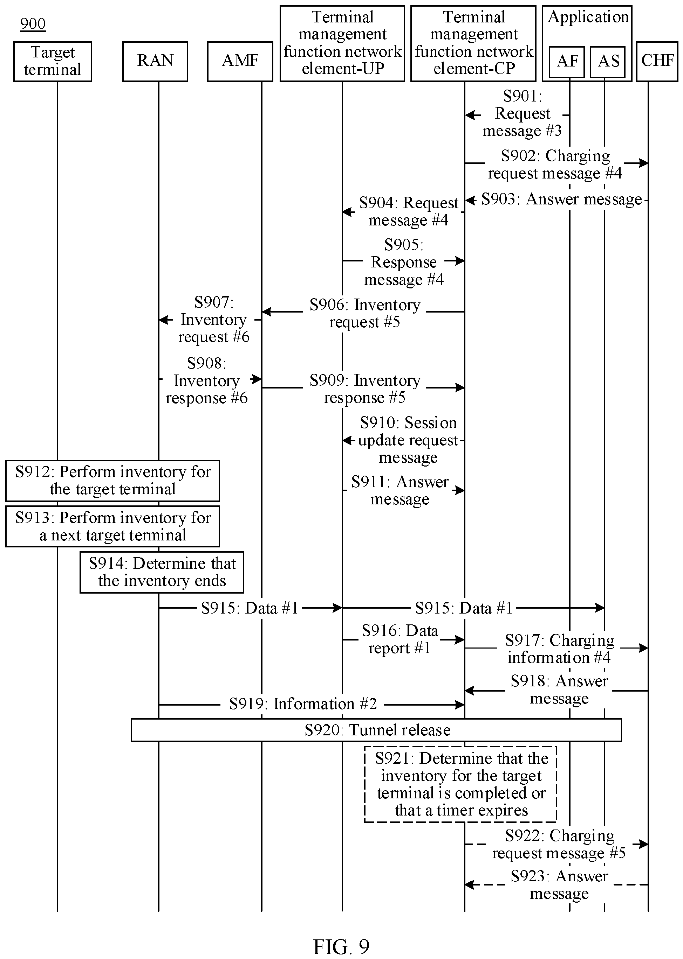

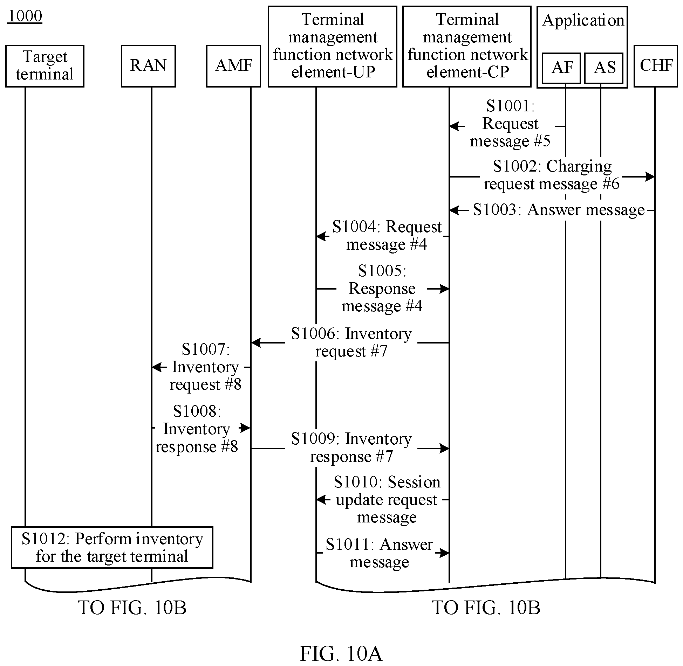

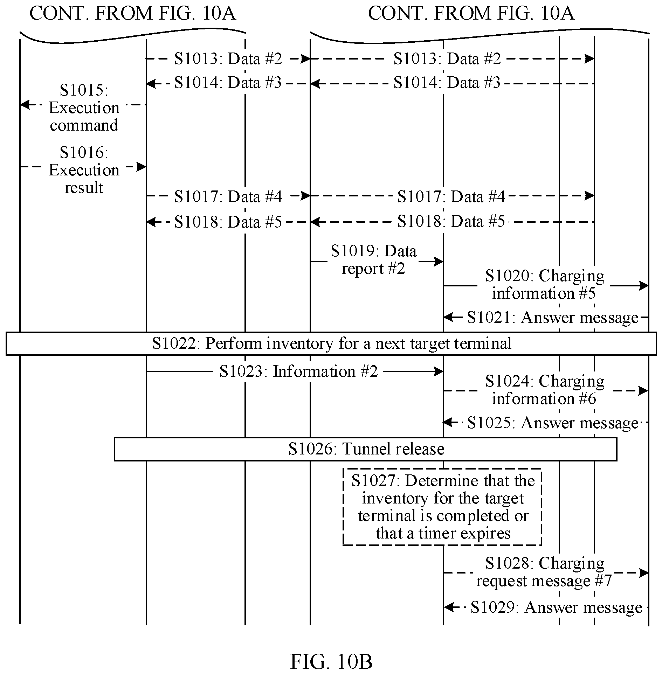

For example, the RAN may further report the inventory result through a tunnel. The following describes in detail a charging procedure in a scenario in which the inventory result is reported through a tunnel with reference to FIG. 9 and FIG. 10A and FIG. 10B.

FIG. 9 is another schematic flowchart of a charging method according to this application. The method 900 shown in FIG. 9 may be considered as another specific implementation of the foregoing method 300. Specifically, the method 900 shown in FIG. 9 describes charging in a scenario in which a terminal management function network element-CP sends an execution command to the RAN, the RAN stores and initiates the execution command, and the RAN reports an inventory result via the terminal management function network element-UP.

S901: The AF of the application sends a request message #3 (another example of the first message) to the terminal management function network element-CP.

Specifically, the request message #3 is similar to the request message #1 shown in S501. The request message #3 is used to request to execute a first operation for a target terminal. A difference between the request message #3 and the request message #1 lies in that: The request message #3 does not include the notification address #1 and the association identifier #1, but includes application server (application server, AS) tunnel information (an example of the first tunnel information).

The AS tunnel information indicates a user plane port or a user plane address used by the application server to receive the inventory result. For example, the AS tunnel information is an address of the AS.

For details, refer to the foregoing descriptions of S310.

S902: The terminal management function network element-CP sends a charging request message #4 (another example of the second message) to the CHF.

Specifically, the charging request message #4 is similar to the charging request message #1 shown in S502, and a difference lies in that the charging request message #4 does not include the notification address #1, but includes the AS tunnel information.

For details, refer to the foregoing descriptions of S320.

S903: The CHF returns an answer message.

Specifically, the CHF starts charging based on the charging request message #4, and sends the answer message to the terminal management function network element-CP. The answer message may be a charging data answer message.

S904: The terminal management function network element-CP sends a request message #4 to the terminal management function network element-UP.

Specifically, in this embodiment, the terminal management function network element-CP needs to determine the terminal management function network element-UP based on information such as identification information of the application. The terminal management function network element-CP stores a correspondence between the identification information of the application and the terminal management function network element-UP.

After determining the terminal management function network element-UP, the terminal management function network element-CP may send the request message #4 to the terminal management function network element-UP. The request message #4 may also be referred to as a tunnel information request message, which is used to obtain tunnel information.

The charging request message #4 includes identification information of the target terminal and the AS tunnel information.

S905: The terminal management function network element-UP sends a response message #4 to the terminal management function network element-CP.

The response message #4 is used to respond to the request message #4 in S904, and the response message #4 may also be referred to as a tunnel information answer message.

The response message #4 includes CN tunnel information #1, and the CN tunnel information #1 is a tunnel endpoint used by the terminal management function network element-UP to receive uplink data.

S906: The terminal management function network element-CP sends an inventory request #5 (another example of the first inventory request) to the AMF.

Specifically, after receiving the request message #3, the terminal management function network element-CP may determine, based on information in the request message #3, the AMF and the RAN corresponding to the AMF. For a specific process, refer to the descriptions of S504. Details are not described herein.

Further, after the terminal management function network element-CP determines the AMF, the terminal management function network element-CP may send the inventory request #5 to the AMF.

For content included in the inventory request #5, refer to the inventory request #1 in S504. A difference lies in that the inventory request #5 does not include the notification address #2 and the association identifier #2, but includes the CN tunnel information #1.

S907: The AMF sends an inventory request #6 (another example of the second inventory request) to the RAN.

For content included in the inventory request #6, refer to the inventory request #2 in S505. A difference lies in that the inventory request #6 does not include the notification address #2 and the association identifier #2, but includes the CN tunnel information #1.

S908: The RAN sends an inventory response #6 to the AMF.

The inventory response #6 may also be referred to as an inventory answer message, and includes the AN tunnel information.

The AN tunnel information is a tunnel endpoint used by the RAN to receive downlink data.

S909: The AMF sends an inventory response #5 to a tag management function-CP.

The inventory response #5 may also be referred to as an inventory answer message, and includes the AN tunnel information.

S910: The tag management function-CP sends a session update request message to a tag management function-UP. The message includes the AN tunnel information.

S911: The tag management function-UP returns an answer message, namely, a session update response message, to the tag management function-CP.

It should be understood that S904 to S911 may also be understood as a tunnel establishment process.

S912: The RAN performs inventory for the target terminal.

S913: The RAN determines that the inventory for a terminal #1 is completed, and the RAN sends a query request for a next tag to all selected tags, to proceed to step S912.

S914: The RAN determines that the inventory for all the selected terminals is completed.

For S912 to S914, refer to S506 to S508.

S915: The RAN sends data #1 (an example of the first data) to the terminal management function network element-UP based on the CN tunnel information #1. Further, the terminal management function network element-UP sends the data #1 to the AS based on the AS tunnel information.

Specifically, after receiving an identifier and an execution result of the target terminal, the RAN may report the identifier and the execution result in two manners.

Manner 1: After determining that step S912 is completed for the terminal #1, the RAN sends the data #1 to the terminal management function network element based on the CN tunnel information #1.

That is, each target terminal reports the identifier and the execution result of the target terminal.

In Manner 1, S915 may be performed after S912.

In Manner 1, the data #1 includes execution information (another example of the first information) of the terminal #1, that is, an identifier of the terminal #1 and/or a quantity. It should be understood that in this case, a value of the quantity is 1.

Optionally, if the RAN sends the execution command and receives the execution result in S907, the execution information of the terminal #1 further includes the execution result.

Optionally, the data #1 further includes an identifier of the RAN.

Optionally, the data #1 further includes information #1, indicating that the inventory for the terminal #1 is completed.

For details, refer to the foregoing descriptions of S341.

Manner 2: After performing step S912 for all target terminals received within a coverage area of the RAN, the RAN sends the data #1 to the terminal management function network element-UP based on the CN tunnel information #1.

That is, all the received target terminals report the identifiers and the execution results of the target terminals in a unified manner.

In Manner 2, S915 may be performed after S914.

In Manner 2, the data #1 includes execution information (an example of the second information) of a terminal that is within the coverage area of the RAN and that is in the target terminal, that is, an identifier list of the terminal obtained by the RAN and/or a quantity of terminals obtained by the RAN. The terminal obtained by the RAN is a terminal that sends an identifier to the RAN, namely, the terminal that is within the coverage area of the RAN and that is in the target terminal.

Optionally, if the RAN sends the execution command and receives the execution result in S907, execution information of the terminal that is within the coverage area of the RAN and that is in the target terminal further includes a list of an execution result corresponding to each terminal.

Optionally, the data #1 further includes an identifier of the RAN.

For details, refer to the foregoing descriptions of S342.

Further, regardless of Manner 1 or Manner 2, the terminal management function network element-UP sends the data #1 to the AS based on the AS tunnel information.

S916: The terminal management function network element-UP sends a data report #1 to the terminal management function network element-CP.

After receiving the data #1, the terminal management function network element-UP may send information in the data #1 to the terminal management function network element-CP.

It should be understood that the terminal management function network element-UP may detect the information in the data #1 according to a policy rule, to send, to the terminal management function network element-CP, the execution information of the terminal #1 in the data #1 or the execution information of the terminal that is within the coverage area of the RAN and that is in the target terminal.

Optionally, if the data report #1 includes the information #1 or information #2, the terminal management function network element-UP may further detect the information #1 or the information #2 according to the policy rule, to send the information #1 or the information #2 to the terminal management function network element-CP.

Specifically, for Manner 1 and Manner 2 in S915, the data report #1 includes different information.

For Manner 1, the data report #1 includes the execution information of the terminal #1, that is, at least one of the identifier of the terminal #1, the quantity 1, and the execution result.

Optionally, the data report #1 further includes the information #1, indicating that the inventory for the terminal #1 is completed.

For Manner 2, the data report #1 includes the execution information of the terminal that is within the coverage area of the RAN and that is in the target terminal, that is, at least one of the identifier list of the terminal obtained by the RAN, the quantity of terminals obtained by the RAN, and the list of the execution result corresponding to each terminal.

Optionally, regardless of Manner 1 or Manner 2, the data report #1 further includes the identifier of the RAN.

S917: The terminal management function network element-CP sends charging information #4 (another example of the first charging information) to the CHF.

After receiving the data report #1, that is, after receiving the execution information of the terminal #1 or the execution information of the terminal that is within the coverage area of the RAN and that is in the target terminal, the terminal management function network element-CP may send the charging information #4 to the CHF.

Specifically, content included in the charging information #4 is similar to that included in the charging information #1 in S511, and includes an interim (interim) indication or an update (update) indication.

In addition, for information included in the data report #1, the charging information #4 may further include the execution information of the terminal #1 in the target terminal, that is, at least one of the identifier of the terminal #1, the quantity 1, and the execution result, or the charging information #4 includes the execution information of the terminal that is within the coverage area of the RAN and that is in the target terminal, that is, at least one of the identifier list of the terminal obtained by the RAN, the quantity of terminals obtained by the RAN, and the list of the execution result corresponding to each terminal.

Optionally, the charging information #4 further includes the identifier of the RAN.

For details, refer to the foregoing descriptions of S330.

S918: The CHF returns an answer message to the terminal management function network element-CP.

Specifically, if a message in the charging information #4 includes the execution information of the terminal #1, the CHF may generate, based on the charging information #4, a charging data record of a process in which the RAN performs the inventory for the terminal #1.

Specifically, if a message in the charging information #4 includes the execution information of the terminal that is within the coverage area of the RAN and that is in the target terminal, the CHF may generate, based on the charging information #4, a charging data record of a process in which the RAN performs the inventory for the terminal within the coverage area of the RAN.

S919: The RAN sends the information #2 to the terminal management function network element-CP.

The RAN determines that inventory for all the selected tags is completed, and sends the information #2 the terminal management function network element. The information #2 indicates that the inventory for the target terminal within the coverage area of the RAN is completed, or that the RAN ends the inventory.

It should be understood that the RAN may send the information #2 to the terminal management function network element-CP via the AMF.

Optionally, the RAN may send the information #2 to the terminal management function network element-CP by using the user plane.

Specifically, the RAN includes the information #2 in the data #1, and the terminal management function network element-UP includes the information #2 in the data report #1.

S920: The terminal management function network element-CP initiates tunnel release.

After receiving the information #2, the terminal management function network element-CP determines that the RAN completes the inventory, to initiate the tunnel release.

S921: The terminal management function network element-CP determines that the inventory for the target terminal is completed or that a timer expires.

A specific manner in which the terminal management function network element-CP determines that the inventory for the target terminal is completed may be that the terminal management function network element-CP determines that all RANs determined in S906 send the information #2.

Optionally, if the terminal management function network element-CP starts the timer in S901, when the terminal management function network element-CP determines that the timer expires, the terminal management function network element-CP performs S922.

For details, refer to the foregoing descriptions of S513.

S922: The terminal management function network element-CP sends a charging request message #5 (another example of the third message) to the CHF.

For details, refer to the foregoing descriptions of S514.

S923: The CHF returns an answer message to the terminal management function network element.

For details, refer to the foregoing descriptions of S515.

It should be understood that S921 to S923 are optional steps. For example, in an always-online charging scenario, the terminal management function network element may not perform S921 and S922. In this case, the CHF does not perform S923 either.

The method 900 shown in FIG. 9 describes charging in an inventory scenario in which the RAN reports the inventory result via the terminal management function network element-UP. In addition, in the inventory scenario, the execution command is initiated by the RAN. Therefore, the charging method provided in this embodiment of this application can be applicable to various different inventory scenarios, and has better compatibility and flexibility.

FIG. 10A and FIG. 10B are another schematic flowchart of a charging method according to this application. The method 1000 shown in FIG. 10A and FIG. 10B may be considered as another specific implementation of the foregoing method 300. Specifically, the method 1000 shown in FIG. 10A and FIG. 10B describes charging in a scenario in which the AF initiates an execution command and a RAN reports an inventory result by using a terminal management function network element-UP.

S1001: The AF of the application sends a request message #5 (another example of the first message) to a terminal management function network element-CP.

Specifically, the request message #5 is similar to the request message #3 shown in S901. The request message #5 is used to request to execute a first operation for a target terminal. A difference between the request message #5 and the request message #3 lies in that the request message #5 does not include the execution command.

S1002: The terminal management function network element-CP sends a charging request message #6 (another example of the second message) to the CHF.

Specifically, the charging request message #6 is similar to the charging request message #5 shown in S902, and a difference lies in that the charging request message #6 does not include the execution command.

S1003: The CHF returns an answer message.

Specifically, the CHF starts charging based on the charging request message #6, and sends the answer message to the terminal management function network element-CP. The answer message may be a charging data answer message.

S1004: The terminal management function network element-CP sends a request message #4 to the terminal management function network element-UP.

S1005: The terminal management function network element-UP sends a response message #4 to the terminal management function network element-CP.

For S1004 and S1005, refer to S904 and S905.

S1006: The terminal management function network element-CP sends an inventory request #7 (another example of the first inventory request) to the AMF.

For content included in the inventory request #7, refer to the inventory request #5 in S906. A difference lies in that the inventory request #7 does not include the execution command.

S1007: The AMF sends an inventory request #8 (another example of the second inventory request) to the RAN.

For content included in the inventory request #8, refer to the inventory request #6 in S907. A difference lies in that the inventory request #8 does not include the execution command.

S1008: The RAN sends an inventory response #8 to the AMF.

S1009: The AMF sends an inventory response #7 to a tag management function-CP.

S1010: The tag management function-CP sends a session update request message to a tag management function-UP. The message includes AN tunnel information.

S1011: The tag management function-UP returns an answer message, namely, a session update response message, to the tag management function-CP.

For S1008 to S1011, refer to S908 to S911.

S1012: The RAN performs inventory for the target terminal.

Similar to S506, an inventory process includes: The RAN sends a radio frequency signal, a selection message, and a query request, and a terminal #1 completes a random access process and sends identification information to the RAN.

A difference lies in that in S1012, the RAN does not send the execution command to the terminal #1, and the terminal #1 does not send an execution result to the RAN either.

S1013: The RAN sends data #2 to the terminal management function network element-UP based on CN tunnel information #1. Further, the terminal management function network element-UP sends the data #2 to an AS based on AS tunnel information.

The data #2 includes execution information of the terminal #1, that is, an identifier of the terminal #1 and/or a quantity. It should be understood that in this case, a value of the quantity is 1.

Optionally, the data #2 further includes an identifier of the RAN.

S1014: If the AF still has a subsequent execution command, the AF sends the execution command to the RAN by using a user plane.

Specifically, the AF sends data #3 to the terminal management function network element-UP via the AS. Further, the terminal management function network element-UP sends the data #3 to the RAN. The data #3 includes the execution command.

S1015: The RAN sends the execution command to the terminal #1.

S1016: The terminal #1 sends the execution result to the RAN.

It should be understood that the execution result is also the execution information of the terminal #1.

S1017: The RAN sends data #4 (an example of the first data) to the terminal management function network element-UP based on the CN tunnel information #1. Further, the terminal management function network element-UP sends the data #4 to the AS based on the AS tunnel information.

The data #4 includes the execution result.

S1018: The AF sends, to the RAN by using the user plane, an indication (another example of the first information) indicating that the inventory for the terminal #1 is completed.

Specifically, if the AF does not have another execution command, the AF sends data #5 to the terminal management function network element-UP via the AS. Further, the terminal management function network element-UP sends the data #5 to the RAN. The data #5 includes the indication indicating that the inventory for the terminal #1 is completed.

In the method 1000, the indication indicating that the inventory for the terminal #1 is completed is the example of the first information, and S1018 may be understood as a process in which the AF determines the first information and sends the first information to the RAN.

S1019: The terminal management function network element-UP sends a data report #2 to the terminal management function network element-CP.

Specifically, after receiving the data #5, the terminal management function network element-UP may send the data report #2 to the terminal management function network element-CP.

The data report #2 includes the execution information of the terminal #1 that is included in the data #2 in S1013, that is, the identifier of the terminal #1 or the quantity 1.

Optionally, if the terminal management function network element-UP receives the data #4, the data #2 sent by the terminal management function network element-UP may further include the execution information of the terminal #1 that is included in the data #4, namely, the execution result.

Optionally, the data report #2 may further include the identifier of the RAN.

Optionally, the data report #2 may further include the execution command included in the data #3.

Optionally, the data report #2 further includes the indication that the inventory for the terminal #1 is completed in S1018.

S1020: The terminal management function network element-CP sends charging information #5 (another example of the first charging information) to the CHF.

Specifically, after receiving the data report #2, that is, after receiving the execution information of the terminal #1 or after receiving the indication indicating that the inventory for the terminal #1 is completed, the terminal management function network element-CP may send the charging information #5 to the CHF. The charging information #5 may include information included in the data report #2, that is, at least one of the identifier of the terminal #1, the quantity 1, the execution command, and the execution result.

The charging information #5 includes an interim (interim) indication or an update (update) indication.

Optionally, the charging information #5 further includes the identifier of the RAN.

Optionally, S1020 may not be performed. In other words, the terminal management function network element-CP stores the received execution information of the terminal #1.

S1021: The CHF returns an answer message to the terminal management function network element-CP.

The CHF may generate, based on the charging information #5, a charging data record of a process in which the RAN performs the inventory for the terminal #1.

It should be understood that if S1020 is not performed, S1021 is not performed either.

S1022: The RAN determines that the inventory for the terminal #1 is completed, and the RAN sends a query request for a next tag to all selected tags, to proceed to step S1012.

Specifically, the RAN may determine, based on information #1 from the terminal management function network element in S1018, that execution of the command for the terminal #1 is completed.

Further, the RAN, the target terminal, the terminal management function network element-CP, the terminal management function network element-UP, the AF, the AS, and the CHF may proceed to S1013 to S1022.

S1023: The RAN determines that inventory for all selected tags is completed, and sends information #2 (an example of the second information) to the terminal management function network element-CP.

The information #2 indicates that the inventory for a target terminal within a coverage area of the RAN is completed, or that the RAN ends the inventory.

For details, refer to S720. Details are not described herein again.

If S1020 and S1021 are not performed, after S1023, the method 1000 further includes S1024 and S1025.

S1024: The terminal management function network element-CP sends charging information #6 (another example of the first charging information) to the CHF.

The charging information #6 includes an interim (interim) indication or an update (update) indication.

The charging information #6 includes execution information that is of a plurality of terminals #1 and that is stored by the terminal management function network element-CP. It should be understood that the execution information of the plurality of terminals #1 is summarized into execution information of the terminal that is within the coverage area of the RAN and that is in the target terminal, that is, at least one of an identifier list of the terminal obtained by the RAN, a quantity of terminals obtained by the RAN, and a list of an execution result corresponding to each terminal.

Optionally, the charging information #6 further includes the identifier of the RAN.

In other words, after receiving the execution information of the terminal #1, the terminal management function network element-CP may not send the charging information #5, but store the execution information of the terminal #1, and send the charging information #6 after receiving the information #2, where the charging information #6 includes the execution information that is of the plurality of terminals #1 and that is stored by the terminal management function network element-CP, to request the CHF to charge for an inventory process of the target terminal within the coverage area of the RAN.

S1025: The CHF returns an answer message to the terminal management function network element-CP.

Specifically, if a message in the charging information #6 includes the execution information of the terminal that is within the coverage area of the RAN and that is in the target terminal, the CHF may generate, based on the charging information #6, a charging data record of a process in which the RAN performs the inventory for the terminal within the coverage area of the RAN.

S1026: The terminal management function network element-CP initiates tunnel release.

S1027: The terminal management function network element-CP determines that the inventory for the target terminal is completed or that a timer expires.

S1028: The terminal management function network element-CP sends a charging request message #7 (another example of the third message) to the CHF.

S1029: The CHF returns an answer message to the terminal management function network element.

For S1026 to S1029, refer to S920 to S923.

The method 1000 shown in FIG. 10A and FIG. 10B describes charging in an inventory scenario in which the RAN reports the inventory result via the terminal management function network element-UP. In addition, in the inventory scenario, the execution command is initiated by the AF. Therefore, the charging method provided in this embodiment of this application can be applicable to various different inventory scenarios, and has better compatibility and flexibility.

Optionally, with reference to the method 600 and the method 1000, this application may further provide charging in a scenario in which the terminal management function network element stores an execution command and initiates the execution command, and the RAN reports an inventory result via the terminal management function network element-UP. Specific steps may be combined with the method 600 and the method 1000, and details are not described herein.

In a possible implementation, the terminal management function network element-CP and the terminal management function network element-UP in FIG. 9 or FIG. 10A and FIG. 10B may be co-located with a NEF, and actions executed by the terminal management function network element-CP and the terminal management function network element-UP may be understood as actions executed by the NEF.

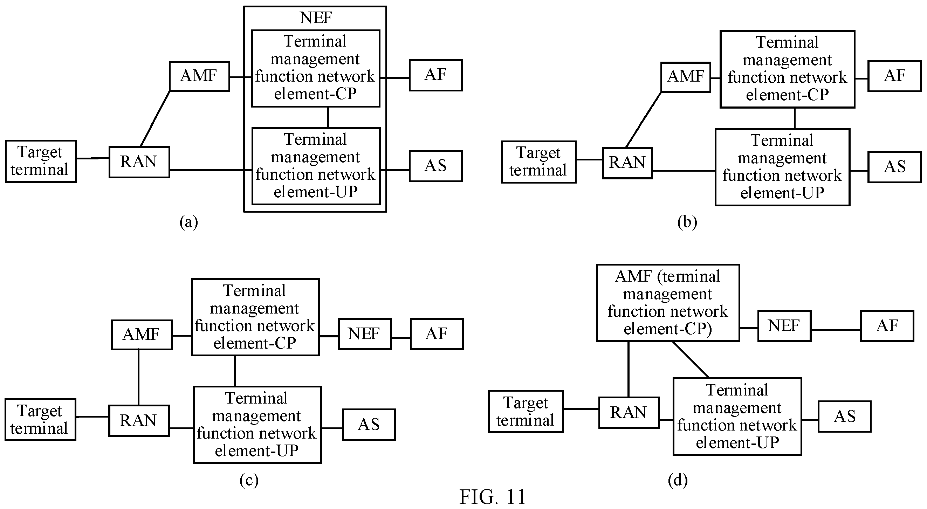

In this implementation, the method procedure shown in FIG. 9 or FIG. 10A and FIG. 10B may be applied to a network architecture shown in (a) in FIG. 11.

In another possible implementation, the terminal management function network element-CP and the terminal management function network element-UP in FIG. 9 or FIG. 10A and FIG. 10B may be new independent function network elements. The terminal management function network element-CP can be configured to forward an inventory request and a response between the AF and the AMF. The terminal management function network element-UP can be configured to forward user plane data between the RAN and the AS.

In this implementation, the method procedure shown in FIG. 9 or FIG. 10A and FIG. 10B may be applied to a network architecture shown in (b) in FIG. 11.

In still another possible implementation, the terminal management function network element-CP and the terminal management function network element-UP in FIG. 9 or FIG. 10A and FIG. 10B may be new independent function network elements. The terminal management function network element-CP can be configured to forward an inventory request and a response between the NEF and the AMF, in other words, the inventory request and the response between the terminal management function network element-CP and the AF shown in FIG. 9 and FIG. 10A and FIG. 10B need to be forwarded via the NEF. The terminal management function network element-UP can be configured to forward user plane data between the RAN and the AS.

In this implementation, the method procedure shown in FIG. 9 or FIG. 10A and FIG. 10B may be applied to a network architecture shown in (c) in FIG. 11.

In still another possible implementation, the terminal management function network element-CP in FIG. 9 or FIG. 10A and FIG. 10B may be co-located with the AMF, and interaction between the AMF and the terminal management function network element-CP may be considered as internal interaction. The terminal management function network element-UP may be a new independent function network element, and can be configured to forward user plane data between the RAN and the AS.

In this implementation, the method procedure shown in FIG. 9 or FIG. 10A and FIG. 10B may be applied to a network architecture shown in (d) in FIG. 11.

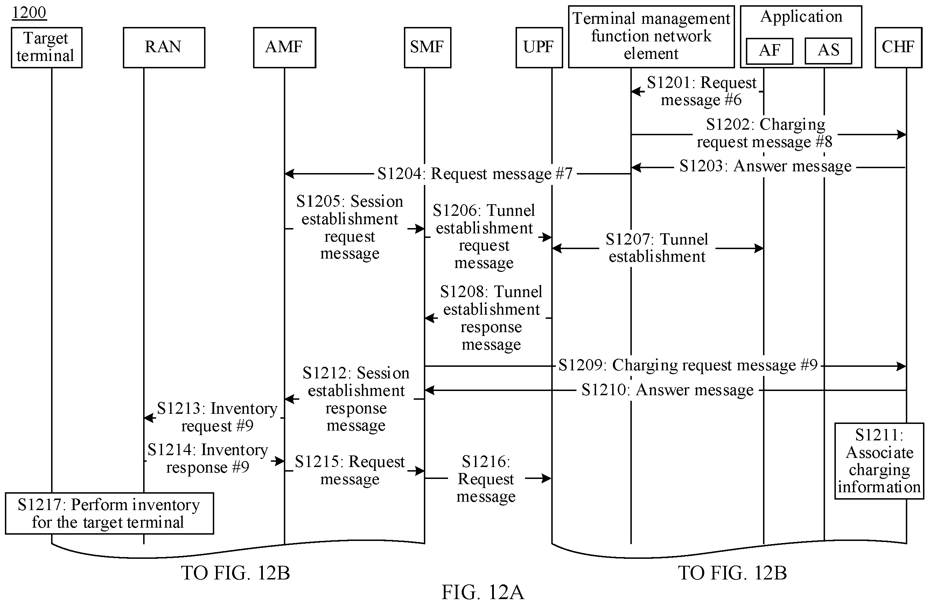

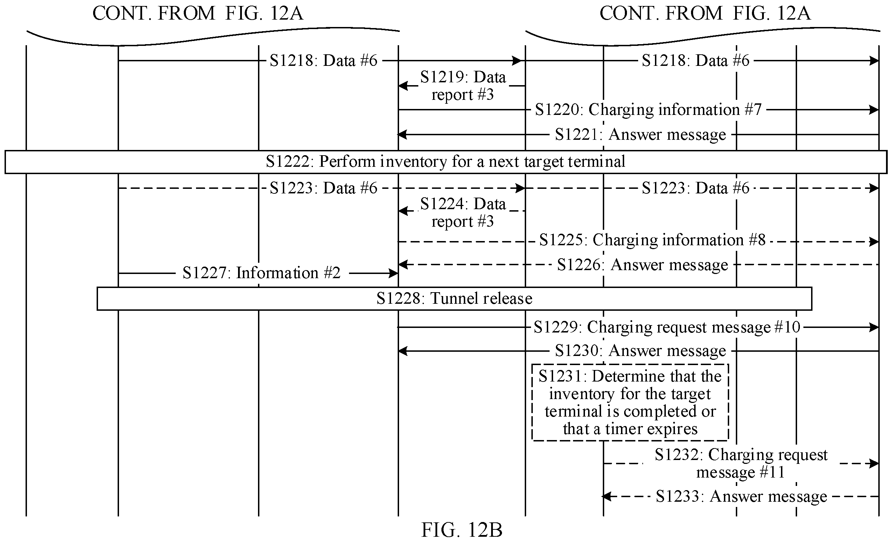

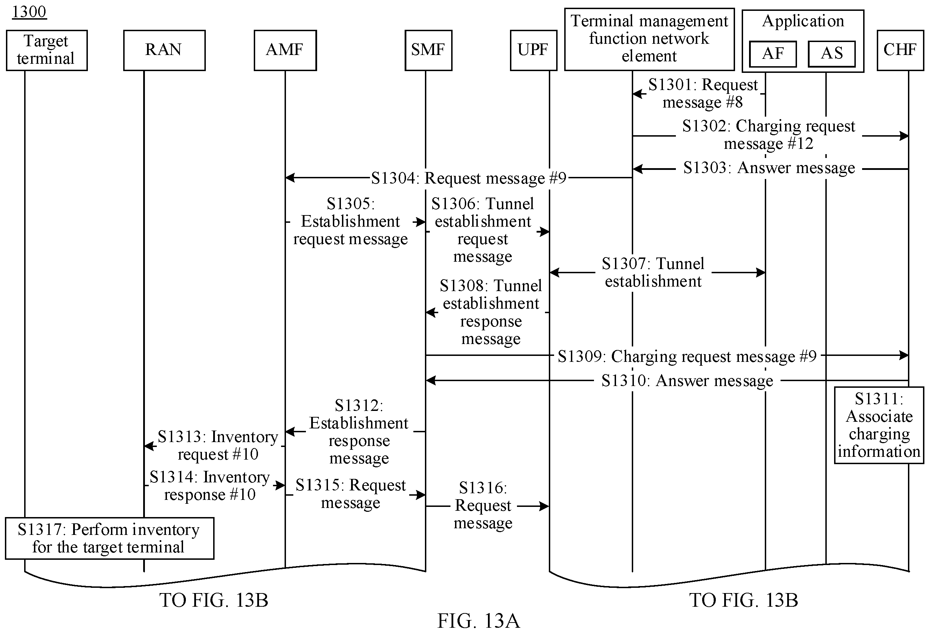

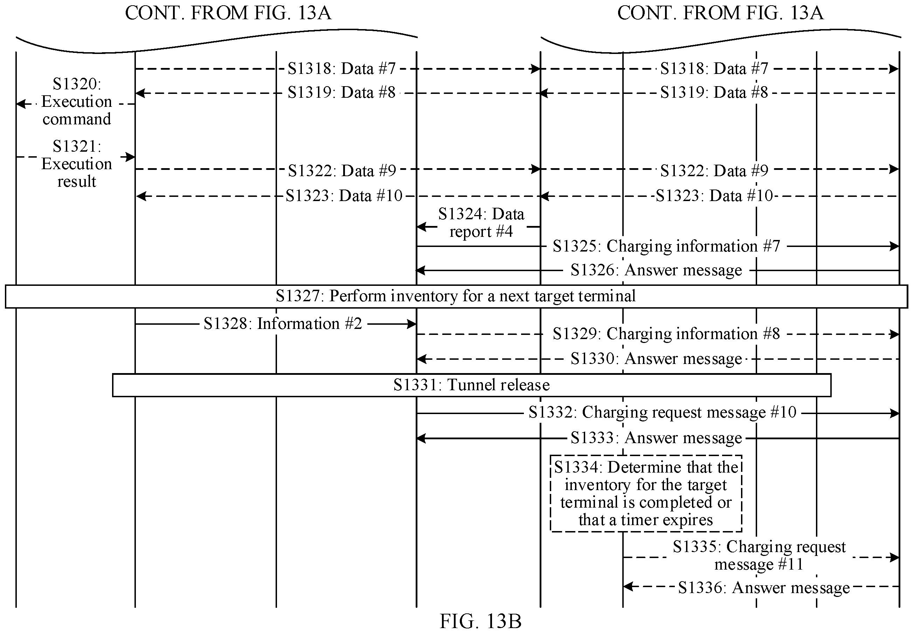

It should be understood that in the methods shown in FIG. 9 and FIG. 10A and FIG. 10B, establishment of a user plane tunnel is initiated by the terminal management function network element-UP. In an implementation, establishment of the user plane tunnel may be initiated by the AMF. With reference to FIG. 12A and FIG. 12B and FIG. 13A and FIG. 13B, the following describes a process in which the AMF initiates tunnel establishment.

FIG. 12A and FIG. 12B are another schematic flowchart of a charging method according to this application. The method 1200 shown in FIG. 12A and FIG. 12B may be considered as a specific implementation of the foregoing method 400. The method 1200 shown in FIG. 12A and FIG. 12B describes charging in a scenario in which the terminal management function network element sends an execution command to the RAN, the RAN stores and initiates the execution command, and the RAN reports an inventory result via a UPF.

S1201: The AF of the application sends a request message #6 (an example of the seventh message) to the terminal management function network element.

Specifically, the request message #6 is used to request to execute a first operation for a target terminal, and the request message #6 includes identification information of the target terminal, indication information of the first operation, and information about the application.

The information about the application includes identification information of the application or data network access identifier information of the application.

In this embodiment, when the request message #6 does not carry the indication information of the first operation, it indicates that the first operation is query (query), that is, querying a terminal identifier. Alternatively, when the request message #6 carries the indication information of the first operation and the indication information of the first operation includes query, it indicates that the first operation is the query (query).

Optionally, when the indication information of the first operation indicates that the first operation is an operation other than querying a terminal identifier, any first operation other than querying a terminal identifier may be referred to as an execution command.

Optionally, a request message #1 further includes first indication information, an operation parameter, and application server (application server, AS) tunnel information.

The AS tunnel information indicates a user plane port or a user plane address used by the application server to receive the inventory result. For example, the AS tunnel information is an address of the AS.

Optionally, when the terminal management function network element receives the request message #6, the terminal management function network element may start a timer.

For details, refer to the foregoing descriptions of S410.

S1202: The terminal management function network element sends a charging request message #8 (an example of the eighth message) to the CHF.

The charging request message #8 includes a start indication.

Optionally, the charging request message #8 may further include the identification information of the target terminal, the indication information of the first operation, the operation parameter, the first indication information, the identification information of the application, and the AS tunnel information.

The charging request message #8 further includes an identifier #1, which is referred to as a charging identifier #1, and identifies a charging request of the terminal management function network element or identifies the charging request message #8.

For details, refer to the foregoing descriptions of S420.

S 1203 : The CHF returns an answer message.

Specifically, the CHF starts charging based on the charging request message #8, and sends the answer message to the terminal management function network element. The answer message may be a charging data answer message.

S1204: The terminal management function network element sends a request message #7 (an example of the ninth message) to the AMF.

The request message #7 is used to request to execute the first operation for the target terminal.

Specifically, after receiving the request message #6, the terminal management function network element may determine, based on information in the request message #6, the AMF and the RAN corresponding to the AMF. For a specific process, refer to the descriptions of S504. Details are not described herein.

Further, after the terminal management function network element determines the AMF, the terminal management function network element may send the request message #7 to the AMF.

Optionally, the request message #7 includes the identification information of the target terminal, the indication information of the first operation, the operation parameter, second indication information, the identification information of the application, and the AS tunnel information.

An area indicated by the second indication information includes an area managed by the AMF, and the second indication information includes 3GPP location information (for example, a TA list or a cell list).

The request message #7 further includes the identifier #1.

For details, refer to the foregoing descriptions of S430.

S1205: The AMF sends a session establishment request message (an example of the fourth message) to the SMF.

Specifically, the AMF determines, based on information such as an identifier of the application, that a user plane tunnel needs to be established for transmission of the inventory result. Therefore, the AMF sends the session establishment request message to the SMF.

The session establishment request message includes the identification information of the target terminal, the identification information of the application, the AS tunnel information, and the identifier #1.

The session establishment request message is used to request to establish a tunnel #1 (an example of the first session). The tunnel #1 is used for transmission of execution information of one or more terminals in the target terminal.

For details, refer to the foregoing descriptions of S440.

S1206: The SMF sends a tunnel establishment request message to the UPF.

Specifically, the SMF selects a proper UPF based on the application identifier.

After selecting the proper UPF, the SMF sends, to the UPF, a request message for requesting to establish a tunnel, namely, the tunnel establishment request message.

The tunnel establishment request message is used to request to establish the user plane tunnel. The tunnel establishment request message includes the AS tunnel information.

S1207: Establish the tunnel #1 between the UPF and the AS.

After the UPF receives the tunnel establishment request message, the user plane tunnel between the UPF and the AS may be established.

S1208: The UPF sends a tunnel establishment response message to the SMF.

The tunnel establishment response message includes CN tunnel information #2. The CN tunnel information #2 is a tunnel endpoint used by the UPF to receive uplink data.

S1209: The SMF sends a charging request message #9 (an example of the fifth message) to the CHF.

Specifically, the SMF sends the charging request message #9 to the CHF. The charging request message #9 is used to request to start charging for the first operation for the target terminal.

The charging request message #9 includes the start indication.

Optionally, the charging request message #9 may further include the identification information of the target terminal, the identification information of the application, and the AS tunnel information.

The charging request message #9 further includes the identifier #1.

For details, refer to the foregoing descriptions of S450.

S1210: The CHF returns an answer message.

Specifically, the CHF starts the charging based on the charging request message #9.

S1211: The CHF associates the charging request message #8 with the charging request message #9.

In other words, the CHF determines, based on the identifier #1, that the charging request message #8 and the charging request message #9 are associated with a same charging request. Therefore, the charging request initiated by the SMF is associated with the charging request initiated by the terminal management function network element. The CHF summarizes information obtained from the terminal management function network element and the SMF, to generate a CDR.

Specifically, the CHF associates, based on the identifier #1, a resource identified by a URI #1 with a resource identified by a URI #3, or associates, based on the identifier #1, a resource identified by a URI #2 with a resource identified by a URI #4.

For details, refer to the foregoing descriptions of S460.

S1212: The SMF sends an establishment response message to the AMF.

The establishment response message includes the CN tunnel information #2.

S1213: The AMF sends an inventory request #9 to the RAN.

The inventory request #9 includes the identification information of the target terminal, the indication information of the first operation, the operation parameter, and the identification information of the application that are received by the AMF in S1204.

The inventory request #9 further includes third indication information. An area indicated by the third indication information includes an area managed by the RAN, and the third indication information includes 3GPP location information (for example, a TA list or a cell list).

The inventory request #9 further includes the CN tunnel information #2.

S1214: The RAN sends an inventory response #9 to the AMF.

The RAN stores the received information such as the identification information of the target terminal, the indication information of the first operation, the operation parameter, the identification information of the application, the third indication information, and the CN tunnel information #2, and sends the response, namely, the inventory response #9, to the AMF.

The inventory response #9 may also be referred to as an inventory answer message, and includes AN tunnel information.

The AN tunnel information is a tunnel endpoint used by the RAN to receive downlink data.

S1215: The AMF sends a request message to the SMF.

The request message includes the AN tunnel information.

S1216: The SMF sends the request message to the UPF.

The request message includes the AN tunnel information.

S1217: The RAN performs inventory for the target terminal.

Specifically, the RAN sends a radio frequency signal to all terminals within a coverage area, to provide an excitation signal for the terminals within the coverage area of the RAN, so that the terminal devices send signals to the RAN.

Further, the RAN sends a selection message to the terminals within the coverage area of the RAN.

Subsequently, the RAN sends a query request to all selected terminals. Any target terminal within the coverage of the RAN, denoted as a terminal #1 (an example of the first terminal), sends the identification information to the RAN.

It should be understood that this step is a random access process of the terminal #1. Any one of the target terminal performs the random access process.

Further, if the RAN receives another execution command in S1213, the RAN sends the execution command to the terminal #1.

After completing the execution command, the terminal #1 sends an execution result to the RAN. For example, if the execution command is read, the execution result includes read data; or if the execution command is write, the execution result is an indication of a success or a failure and the execution result.

S1218: The RAN sends data #6 (another example of the first data) to the UPF based on the CN tunnel information #2. Further, the UPF sends the data #6 to the AS based on the AS tunnel information.

After determining that the inventory for the terminal #1 ends, the RAN may send the data #6 to the UPF.

The data #6 includes execution information of the terminal #1, that is, an identifier of the terminal #1 and/or a quantity. It should be understood that in this case, a value of the quantity is 1.

If the RAN sends the execution command to the terminal #1 in S1217, the execution information of the terminal #1 in the data #6 further includes the execution result.

Optionally, the data #6 further includes information #1, indicating that the inventory for the terminal #1 is completed.

Optionally, S1218 may not be performed. In other words, the RAN may first store the execution information of the terminal #1.

S1219: The UPF sends a data report #3 to the SMF.

After receiving the data #6, the UPF may send the data report #3 to the SMF.

The data report #3 includes the execution information of the terminal #1 in the data #6, that is, at least one of the identifier of the terminal #1, the quantity 1, and the execution result.

Optionally, the data report #3 further includes the information #1, indicating that the inventory for the terminal #1 is completed.

Optionally, the data report #3 further includes the identifier of the RAN.

It should be understood that the UPF may detect the execution information of the terminal #1 according to a policy rule, to send the execution information of the terminal #1 to the SMF.

Optionally, the UPF may further detect the information #1 according to the policy rule, to send the information #1 to the SMF.

For specific content of S1218 and S1219, refer to the foregoing descriptions of S481.

S1220: The SMF sends charging information #7 (another example of the second charging information) to the CHF.

After receiving the data report #3, that is, after receiving the execution information of the terminal #1, the SMF may send the charging information #7 to the CHF.

The charging information #7 includes the execution information of the terminal #1 in the data report #3, that is, at least one of the identifier of the terminal #1, the quantity 1, and the execution result.

Optionally, the charging information #7 further includes the identifier of the RAN.

For details, refer to the foregoing descriptions of S470.

S1221: The CHF returns an answer message.

Specifically, the CHF may generate a CDR based on the charging information #7 and information carried in the charging request message #9, and send the CDR to an accounting system.

The CHF may generate one CDR after receiving each piece of charging information #7, or generate one CDR based on a plurality of pieces of charging information #7 after receiving a plurality of pieces of second charging information according to the network policy or the like.

Optionally, if S1218 is not performed, S1219 to S1221 are not performed either.

Optionally, if S1218 and S1219 are performed, S1220 and S1221 may not be performed. In other words, the SMF may first store the information in the data report #3.

S1222: The RAN determines that the inventory for the terminal #1 is completed, and the RAN sends a query request for a next tag to all selected tags, to proceed to step S1217.

Specifically, that the RAN determines that the inventory for the terminal #1 is completed may be determining that execution of both the indication information of the first operation and the operation parameter in S1213 has been completed for the terminal #1.

Further, the RAN, the target terminal, the UPF, the SMF, the terminal management function network element, the AS, and the CHF may proceed to S1218 to S1222.

If S1218 to S1221 are not performed, the method 1200 further includes S1223 to S1225.

S1223: The RAN determines that inventory for all selected tags is completed, and sends the data #6 to the UPF. Further, the UPF sends the data #6 to the AS based on the AS tunnel information.

The data #6 includes execution information (an example of the second information) of the terminal that is within the coverage area of the RAN and that is in the target terminal, that is, an identifier list of the terminal obtained by the RAN and/or a quantity of terminals obtained by the RAN. The terminal obtained by the RAN is a terminal that sends an identifier to the RAN, namely, the terminal that is within the coverage area of the RAN and that is in the target terminal.

Optionally, if the RAN sends the execution command to the terminal #1 in S1217, the information #2 further includes a list of an execution result corresponding to each terminal.

Optionally, the data #6 further includes the identifier of the RAN.

S1224: The UPF sends the data report #3 to the SMF.

After receiving the data #6, the UPF may send the data report #3 to the SMF.

The data report #3 includes the execution information of the terminal that is within the coverage area of the RAN and that is in the target terminal, that is, at least one of the identifier list of the terminal obtained by the RAN, the quantity of terminals obtained by the RAN, and the list of the execution result corresponding to each terminal.

Optionally, the data report #3 further includes the identifier of the RAN.

It should be understood that the UPF may detect information in the data #1 according to the policy rule, to send, to the SMF, the execution information that is in the data #1 and that is of the terminal that is within the coverage area of the RAN and that is in the target terminal.

Optionally, if the data #6 includes the information #2, the UPF may further detect the information #2 according to the policy rule, to send the information #2 to the SMF.

S1225: The SMF sends charging information #8 (another example of the second charging information) to the CHF.

The SMF may send the charging information #8 to the CHF after receiving the data report #3, that is, after receiving the execution information of the terminal that is within the coverage area of the RAN and that is in the target terminal.

The charging information #8 includes the execution information of the terminal that is within the coverage area of the RAN and that is in the target terminal, that is, at least one of the identifier list of the terminal obtained by the RAN, the quantity of terminals obtained by the RAN, and the list of the execution result corresponding to each terminal.

Optionally, the charging information #8 further includes the identifier of the RAN.

S1226: The CHF returns an answer message to the SMF.

The CHF may generate, based on the charging information #8 and the charging request message #9, a charging data record of a process in which the RAN performs the inventory for the terminal within the coverage area of the RAN.

S1227: The RAN sends information #2 (an example of the second information) to the SMF. The information #2 indicates that the inventory for the target terminal within the coverage area of the RAN is completed, or that the RAN ends the inventory.

It should be understood that if S1218 and S1219 are performed, and S1220 and S1221 are not performed, the SMF may perform S1225 after receiving the information #2, that is, sending the charging information #8 to the CHF.

It should be further understood that the RAN may send the information #2 to the SMF via the AMF.

It should be understood that after receiving the information #2, the AMF may send the information #2 to the SMF, or may send a release request message (an example of the eleventh message) to the SMF, to request to release the tunnel #1.

For details, refer to the foregoing descriptions of S490.

S1228: The SMF initiates tunnel release.

The SMF may trigger the tunnel release after receiving the information #2 or the release request message.

S1229: The SMF sends a charging request message #10 (an example of the sixth message) to the CHF.

After receiving the information #2, the SMF may further send the charging request message #10 to the CHF.

The charging request message #10 includes a stop indication, and the stop indication indicates the CHF to stop the charging for the charging request message #9.

For details, refer to the foregoing descriptions of S4100.

S1230: The CHF returns an answer message to the terminal management function network element.

Specifically, the CHF may stop current charging of the SMF based on the stop indication.

S1231: The terminal management function network element determines that the inventory for the target terminal is completed or that a timer expires.

A specific manner in which the terminal management function network element determines that the inventory for the target terminal is completed may be that the terminal management function network element receives the information #2 of each RAN determined in S 1204.

It should be understood that after receiving the information #2, the AMF may further send the information #2 to the terminal management function network element.

Optionally, if the terminal management function network element starts the timer in S1201, when the terminal management function network element determines that the timer expires, the terminal management function network element performs S1232.

For details, refer to the foregoing descriptions of S513.

S1232: The terminal management function network element sends a charging request message #11 (an example of the tenth request message) to the CHF.

The charging request message #11 includes a stop indication, and the stop indication indicates the CHF to stop the charging for the charging request message #8.

For details, refer to the descriptions of S514 and S4121.

S1233: The CHF returns an answer message to the terminal management function network element.

Specifically, the CHF may stop current charging based on the stop indication. If the CHF still has a CDR that is not stopped, the CHF sends the CDR to the accounting system.

For details, refer to the foregoing descriptions of S514.

It should be understood that S1231 to S1233 are optional steps. For example, in an always-online charging scenario, the terminal management function network element may not perform S1231 and S1232. In this case, the CHF does not perform S1233 either.

The method 1200 shown in FIG. 12A and FIG. 12B describes charging in an inventory scenario in which the RAN reports the inventory result via the UPF. In addition, in the inventory scenario, the execution command is initiated by the RAN. Therefore, the charging method provided in this embodiment of this application can be applicable to various different inventory scenarios, and has better compatibility and flexibility.

FIG. 13A and FIG. 13B are another schematic flowchart of a charging method according to this application. The method 1300 shown in FIG. 13A and FIG. 13B may be considered as a specific implementation of the foregoing method 400. The method 1300 shown in FIG. 13A and FIG. 13B describes charging in a scenario in which the AF determines an execution command and initiates the execution command, and the RAN reports an inventory result via a UPF.

S1301: The AF of the application sends a request message #8 (another example of the seventh message) to the terminal management function network element.

Specifically, the request message #8 is similar to the request message #6 shown in S1201. The request message #8 is used to request to execute a first operation for a target terminal. A difference between the request message #8 and the request message #6 lies in that the request message #8 does not include the execution command.

S1302: The terminal management function network element sends a charging request message #12 (an example of the eighth message) to the CHF.

Specifically, the charging request message #12 is similar to the charging request message #9 shown in S1202, and a difference lies in that the charging request message #12 does not include the execution command.

S1303: The CHF returns an answer message.

Specifically, the CHF starts charging based on the charging request message #12, and sends the answer message to the terminal management function network element. The answer message may be a charging data answer message.

S1304: The terminal management function network element sends a request message #9 (an example of the ninth message) to the AMF.

Specifically, the request message #9 is similar to the request message #7 shown in S1204, and a difference lies in that the request message #9 does not include the execution command.

S1305: The AMF sends a session establishment request message to the SMF.

S1306: The SMF sends a tunnel establishment request message to the UPF.

S1307: Establish a tunnel between the UPF and the AS.

S1308: The UPF sends a tunnel establishment response message to the SMF.

S1309: The SMF sends a charging request message #9 to the CHF.

S1310: The CHF returns an answer message.

S1311: The CHF associates a charging request message #8 with the charging request message #9.

S1312: The SMF sends a session establishment response message to the AMF.

For S1305 to S1312, refer to S1205 to S1212. Details are not described herein again.

S1313 : The AMF sends an inventory request # 10 to the RAN.

Specifically, the inventory request #10 is similar to the inventory request #9 shown in S1213, and a difference lies in that the inventory request #10 does not include the execution command.

S1314: The RAN sends an inventory response #10 to the AMF.

S1315: The AMF sends a request message to the SMF.

S1316: The SMF sends the request message to the UPF.

For S1314 to S1316, refer to S1214 to S1216. Details are not described herein again.

S1317: The RAN performs inventory for the target terminal.

Similar to S1217, an inventory process includes: The RAN sends a radio frequency signal, a selection message, and a query request, and a terminal #1 completes a random access process and sends identification information to the RAN.

A difference lies in that in S1317, the RAN does not send the execution command to the terminal #1, and the terminal #1 does not send an execution result to the RAN either.

S1318: The RAN sends data #7 (another example of the first data) to the UPF based on CN tunnel information #2. Further, the UPF sends the data #7 to the AS based on the AS tunnel information.

The data #7 includes execution information of the terminal #1, that is, an identifier of the terminal #1 and/or a quantity. It should be understood that in this case, a value of the quantity is 1.

S1319: If the AF still has a subsequent execution command, the AF sends the execution command to the RAN by using a user plane.

Specifically, the AF sends data #8 to the UPF via the AS. Further, the UPF sends the data #8 to the RAN. The data #8 includes the execution command.

S1320: The RAN sends the execution command to the terminal #1.

S1321: The terminal #1 sends the execution result to the RAN.

S1322: The RAN sends data #9 (another example of the first data) to the UPF based on the CN tunnel information #2. Further, the UPF sends the data #9 to the AS based on the AS tunnel information.

The data #9 includes the execution information of the terminal #1, namely, the execution result.

S1323: The AF sends, to the RAN by using the user plane, an indication (another example of the first information) indicating that the inventory for the terminal #1 is completed.

Specifically, the AF sends data #10 to the UPF via the AS. Further, the UPF sends the data #10 to the RAN. The data #10 includes information #1, and the information #1 indicates that inventory for the terminal #1 is completed.

S1324: The UPF sends a data report #4 to the SMF.

The data report #4 includes the execution information of the terminal #1 in the data #7, that is, at least one of the identifier of the terminal #1 and/or the quantity 1.

Optionally, the data report #4 further includes the execution information of the terminal #1 in the data 9, namely, the execution result of the terminal #1.

Optionally, the data report #4 may further include information about the terminal #1 that is included in the data #8, namely, the execution command.

Optionally, the data report #4 further includes information in the data #10, namely, the information #1.

Optionally, the data report #4 further includes the identifier of the RAN.

S1325: The SMF sends charging information #7 (another example of the second charging information) to the CHF.

The charging information #7 includes information in the data report #4, that is, at least one of the identifier of the terminal #1, the quantity 1, the execution command, and the execution result.

Optionally, the charging information #7 further includes the identifier of the RAN.

Optionally, S1325 may not be performed. In other words, the SMF may first store the execution information of the terminal #1 in the data report #4, and send the execution information to the CHF in a centralized manner after the RAN completes the inventory. For details, refer to S1330 and S1331.

S1326: The CHF returns an answer message.

Optionally, if S1225 is not performed, S1226 is not performed either.

S1327: The RAN determines that the inventory for the terminal #1 is completed, and the RAN sends a query request for a next tag to all selected tags, to proceed to step S1317.

Further, the RAN, the target terminal, the UPF, the SMF, the terminal management function network element, the AS, and the CHF may proceed to S1318 to S13227.

S1328: The RAN determines that inventory for all the selected tags is completed, and sends information #2 (an example of the second information) to the SMF. The information #2 indicates that the inventory for a target terminal within a coverage area of the RAN is completed, or that the RAN ends the inventory.

It should be understood that the RAN may send the information #2 to the SMF via the AMF.

It should be understood that after receiving the information #2, the AMF may send the information #2 to the SMF, or may send a release request message to the SMF, to request to release a tunnel #1.

If S1325 and S1326 are not performed, the method 1300 further includes S1329 and S1330.

S1329: The SMF sends charging information #8 (another example of the second charging information) to the CHF.

The charging information #8 includes execution information that is of a plurality of terminals #1 and that is stored by the SMF. It should be understood that the execution information of the plurality of terminals #1 is summarized into execution information of the terminal that is within the coverage area of the RAN and that is in the target terminal, that is, at least one of an identifier list of the terminal obtained by the RAN, a quantity of terminals obtained by the RAN, and a list of an execution result corresponding to each terminal.

Optionally, the charging information #8 further includes the identifier of the RAN.

In other words, after receiving the execution information of the terminal #1, the SMF may not send the charging information #7, but store the execution information of the terminal #1, and send the charging information #8 after receiving the information #2, where the charging information #8 includes the execution information that is of the plurality of terminals #1 and that is stored by the SMF, to request the CHF to charge for an inventory process of the target terminal within the coverage area of the RAN.

S1330: The CHF returns an answer message to the SMF.

The CHF may generate, based on the charging information #8, a charging data record of a process in which the RAN performs the inventory for the terminal within the coverage area of the RAN.

S1331: The SMF initiates tunnel release.

S1332: The SMF sends a charging request message #10 to the CHF.

S1333: The CHF returns an answer message to the terminal management function network element.

S1334: The terminal management function network element determines that the inventory for the target terminal is completed or that a timer expires.

S1335: The terminal management function network element sends a charging request message #11 (another example of the eighth message) to the CHF.

The charging request message #11 includes a stop indication, and the stop indication indicates the CHF to stop charging for the charging request message #8.

S1336: The CHF returns an answer message to the terminal management function network element.

For S1331 to S1336, refer to S1228 to S1233. Details are not described herein again.

The method 1300 shown in FIG. 13A and FIG. 13B describes charging in an inventory scenario in which the RAN reports the inventory result via the UPF. In addition, in the inventory scenario, the execution command is initiated by the AF. Therefore, the charging method provided in this embodiment of this application can be applicable to various different inventory scenarios, and has better compatibility and flexibility.

Optionally, with reference to the method 600 and the method 1300, this application may further provide charging in a scenario in which the terminal management function network element stores an execution command and initiates the execution command, and the RAN reports an inventory result via the UPF. Specific steps may be combined with the method 600 and the method 1300, and details are not described herein.

In a possible implementation, the terminal management function network element in FIG. 12A and FIG. 12B or FIG. 13A and FIG. 13B may be co-located with a NEF, and an action executed by the terminal management function network element may be understood as an action executed by the NEF.

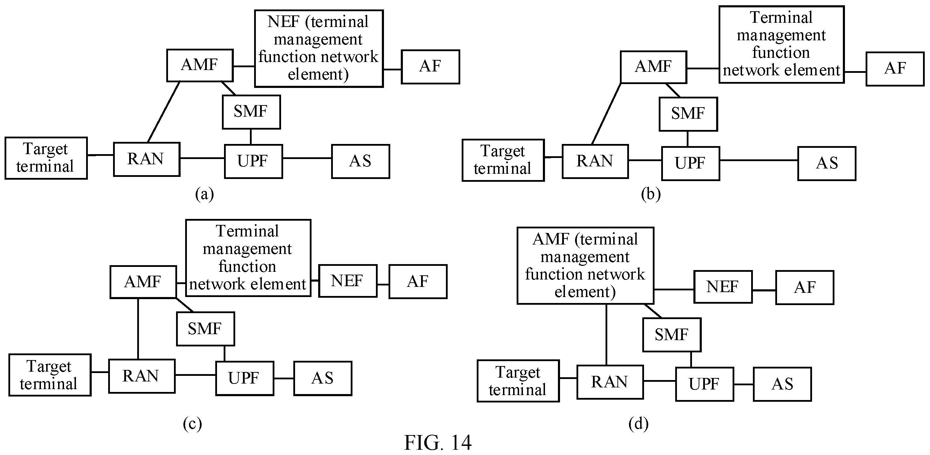

In this implementation, the method procedure shown in FIG. 12A and FIG. 12B or FIG. 13A and FIG. 13B may be applied to a network architecture shown in (a) in FIG. 14.

In another possible implementation, the terminal management function network element in FIG. 12A and FIG. 12B or FIG. 13A and FIG. 13B may be a new independent function network element, and can be configured to forward an inventory request and a response between the AF and the AMF.

In this implementation, the method procedure shown in FIG. 12A and FIG. 12B or FIG. 13A and FIG. 13B may be applied to a network architecture shown in (b) in FIG. 14.

In still another possible implementation, the terminal management function network element in FIG. 12A and FIG. 12B or FIG. 13A and FIG. 13B may be a new independent function network element, and can be configured to forward an inventory request and a response between the NEF and the AMF. In other words, the inventory request and the response between the terminal management function network element and the AF shown in FIG. 4 needs to be forwarded via the NEF.

In this implementation, the method procedure shown in FIG. 12A and FIG. 12B or FIG. 13A and FIG. 13B may be applied to a network architecture shown in (c) in FIG. 14.

In still another possible implementation, the terminal management function network element in FIG. 12A and FIG. 12B or FIG. 13A and FIG. 13B may be co-located with the AMF, and interaction between the AMF and the terminal management function network element may be considered as internal interaction.

In this implementation, the method procedure shown in FIG. 12A and FIG. 12B or FIG. 13A and FIG. 13B may be applied to a network architecture shown in (d) in FIG. 14.

It should be understood that the specific examples shown in FIG. 3 to FIG. 14 in embodiments of this application are merely intended to help a person skilled in the art better understand embodiments of this application, but are not intended to limit the scope of embodiments of this application. It should be understood that sequence numbers of the foregoing processes do not mean an execution sequence of the processes. The execution sequence of the processes should be determined based on functions and internal logic of the processes, and should not be construed as any limitation on the implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a network element (for example, an AF, an AMF, or an SMF) in an existing network architecture is mainly used as an example for description. It should be understood that a specific form of the network element is not limited in embodiments of this application. For example, all network elements that can implement a same function in the future are applicable to embodiments of this application.

It may be understood that, in the foregoing method embodiments, methods and operations implemented by a network device (for example, each network element) may alternatively be implemented by a component (for example, a chip or a circuit) that can be used in the network device.

The foregoing describes in detail the charging method provided in this application with reference to FIG. 3 to FIG. 14. The following describes a communication apparatus provided in this application. It should be understood that descriptions of apparatus embodiments correspond to the descriptions of the method embodiments. Therefore, for content that is not described in detail, refer to the foregoing method embodiments. For brevity, a part of the content is not described again.

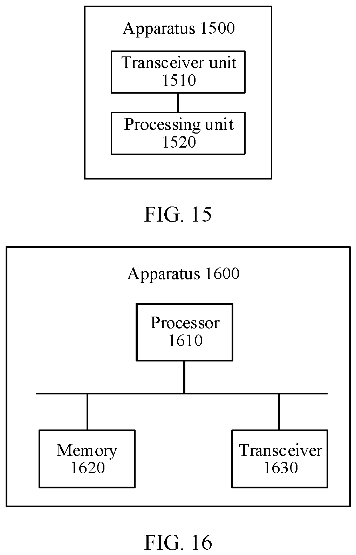

FIG. 15 is a schematic block diagram of a communication apparatus 1500 according to this application. The apparatus 1500 includes a transceiver unit 1510 and a processing unit 1520. The transceiver unit 1510 may implement a corresponding communication function, and the processing unit 1520 is configured to process data. The transceiver unit 1510 may also be referred to as a communication interface or a communication unit.

Optionally, the apparatus 1500 may further include a storage unit. The storage unit may be configured to store instructions and/or data. The processing unit 1520 may read the instructions and/or the data in the storage unit, so that the apparatus implements the foregoing method embodiments.

The apparatus 1500 may be configured to execute actions executed by a network device (for example, each of the foregoing network elements) in the foregoing method embodiments. In this case, the apparatus 1500 may be the network device or a component that can be configured in the network device. The transceiver unit 1510 is configured to execute receiving-related and sending-related operations of the network device in the foregoing method embodiments. The processing unit 1520 is configured to execute processing-related operations of the network device in the foregoing method embodiments.

In a design, the apparatus 1500 is configured to execute actions executed by the terminal management function network element in the embodiment of the foregoing method 300.

Specifically, the transceiver unit 1510 is configured to: receive a first message from an application network element of an application, where the first message is used to request to execute a first operation for a target terminal; send a second message, where the second message is used to request to start charging for the first operation for the target terminal; and send first charging information, where the first charging information includes execution information of one or more terminals in the target terminal, and the first charging information is used to charge for a process in which the first operation is executed for the one or more terminals.

Optionally, the one or more terminals include a first terminal, and the transceiver unit 1510 is further configured to obtain first information.

The first information indicates that execution of the first operation for the first terminal is completed, or the first information includes execution information of the first terminal.

Optionally, the first information is from a first access network device or the application network element. The first access network device is configured to execute the first operation for the first terminal.

Optionally, the execution information of the first terminal includes at least one of the following: an identifier of the first terminal and an execution result of executing the first operation for the first terminal.

Optionally, the one or more terminals include a terminal within a coverage area of the first access network device, and the transceiver unit 1510 is further configured to receive second information from the first access network device. The second information indicates that execution of the first operation for the terminal, in the target terminal, within the coverage area of the first access network device is completed; or the second information includes execution information of the terminal, in the target terminal, within the coverage area of the first access network device.

Optionally, the execution information of the terminal, in the target terminal, within the coverage area of the first access network device includes at least one of the following: an identifier list of the terminal obtained by the first access network device, a quantity of terminals obtained by the first access network device, and an execution result of executing the first operation for the terminal obtained by the first access network device.

Optionally, the processing unit 1520 is configured to determine that execution of the first operation for the target terminal is completed. The transceiver unit 1510 is further configured to send a third message. The third message is used to request to stop charging for the first operation for the target terminal.

Optionally, the processing unit 1520 is further configured to determine one or more access network devices based on the first message. The processing unit 1520 is specifically configured to determine, based on second information of the one or more access network devices, that the execution of the first operation for the target terminal is completed. The second information indicates that execution of the first operation for terminals, in the target terminal, within coverage areas of the one or more access network devices is completed.

Optionally, the processing unit 1520 is further configured to: when the first message is received, start a timer for executing the first operation for the target terminal; and when the timer expires, send a third message, where the third message is used to request to stop charging for the first operation for the target terminal.

The apparatus 1500 may implement steps or procedures corresponding to the terminal management function network element in the method embodiments according to embodiments of this application. The apparatus 1500 may include a unit configured to perform the method performed by the terminal management function network element in the method 300, 500, 600, or 700, a unit configured to perform the method performed by the terminal management function network element-CP in the method 900 or 1000, or a unit configured to perform the method performed by the terminal management function network element in the method 400, 1200, or 1300. In addition, the units in the apparatus 1500 and the foregoing other operations and/or functions are intended to implement corresponding procedures in the method embodiments.

It should be understood that a specific process in which the units perform the foregoing corresponding steps is described in detail in the foregoing method embodiments. For brevity, details are not described herein.

In another design, the apparatus 1500 is configured to execute actions executed by the session management network element in the foregoing method embodiments.

Specifically, the transceiver unit 1510 is configured to: receive a fourth message, where the fourth message is used to request to establish a first session, the first session is used for transmission of execution information of executing a first operation for one or more terminals in a target terminal, the fourth message includes a first identifier, and the first identifier identifies charging initiated by a terminal management function network element for the first operation for the target terminal; send a fifth message, where the fifth message is used to request to start the charging for the first operation for the target terminal, and the fifth message includes the first identifier; and send second charging information, where the second charging information includes the execution information of the one or more terminals in the target terminal, and the second charging information is used to charge for a process in which the first operation is executed for the one or more terminals.

Optionally, the one or more terminals include a first terminal, and the transceiver unit 1510 is further configured to receive first information. The first information indicates that execution of the first operation for the first terminal is completed, or the first information includes execution information of the first terminal.

Optionally, the first information is from a first access network device or an application network element. The first access network device is configured to execute the first operation for the first terminal.

Optionally, the execution information of the first terminal includes at least one of the following: an identifier of the first terminal and an execution result of executing the first operation for the first terminal.

Optionally, the one or more terminals include a terminal within a coverage area of the first access network device, and the transceiver unit 1510 is further configured to: receive second information from the first access network device. The second information indicates that execution of the first operation for the terminal within the coverage of the first access network device is completed, or the second information includes execution information of the terminal, in the target terminal, within the coverage area of the first access network device.

Optionally, the execution information of the terminal, in the target terminal, within the coverage area of the first access network device includes at least one of the following: an identifier list of the terminal obtained by the first access network device, a quantity of terminals obtained by the first access network device, and an execution result of executing the first operation for the terminal obtained by the first access network device.

Optionally, the transceiver unit 1510 is further configured to send a sixth message. The sixth message is used to request to stop the charging for the first operation for the target terminal.

The apparatus 1500 may implement steps or procedures corresponding to the session management network element in the method embodiments according to embodiments of this application. The apparatus 1500 may include a unit configured to perform the method performed by the session management network element in the method 400, or include a unit configured to perform the method performed by SMF in the method 1200 or 1300. In addition, the units in the apparatus 1500 and the foregoing other operations and/or functions are intended to implement corresponding procedures in the method embodiments.

It should be understood that a specific process in which the units perform the foregoing corresponding steps is described in detail in the foregoing method embodiments. For brevity, details are not described herein.

In another design, the apparatus 1500 is configured to execute actions executed by the first user plane network element in the foregoing method embodiments.

Specifically, the transceiver unit 1510 is configured to: receive first data, where the first data includes first information or second information; and send the first information or the second information.

The first information indicates that execution of a first operation for a first terminal is completed, or the first information includes execution information of the first terminal.

The second information indicates that execution of the first operation for a terminal within a coverage area of a first access network device is completed, or the second information includes execution information of the terminal within the coverage of the first access network device.

Optionally, the apparatus 1500 is a terminal management user plane function network element or a user plane network element.

Optionally, the execution information of the first terminal includes at least one of the following: an identifier of the first terminal and an execution result of executing the first operation for the first terminal.

Optionally, the execution information of the terminal within the coverage area of the first access network device includes at least one of the following:
an identifier list of the terminal obtained by the first access network device, a quantity of terminals obtained by the first access network device, and an execution result of executing the first operation for the terminal obtained by the first access network device.

Optionally, the transceiver unit 1510 is further configured to receive a policy rule. The policy rule is used to detect the first information or the second information.

The apparatus 1500 may implement steps or procedures corresponding to the first user plane network element in the method embodiment according to embodiments of this application. The apparatus 1500 may include a unit configured to perform the method performed by the user plane network element in the method 300, include a unit configured to perform the method performed by the terminal management user plane network element in the method 400, include a unit configured to perform the method performed by the UPF in the method 900 or 1000, or include a unit configured to perform the method performed by the terminal management function network element-UP in the method 1200 or 1300. In addition, the units in the apparatus 1500 and the foregoing other operations and/or functions are intended to implement corresponding procedures in the method embodiments.

It should be understood that a specific process in which the units perform the foregoing corresponding steps is described in detail in the foregoing method embodiments. For brevity, details are not described herein.

The processing unit 1220 in the foregoing embodiment may be implemented by at least one processor or a processor-related circuit. The transceiver unit 1210 may be implemented by a transceiver or a transceiver-related circuit. The storage unit may be implemented by at least one memory.

FIG. 16 is another diagram of a communication apparatus according to this application. As shown in FIG. 16, the apparatus 1600 includes a processor 1610, and may further include one or more memories 1620. The processor 1610 is coupled to the memory 1620. The memory 1620 is configured to store a computer program or instructions and/or data. The processor 1610 is configured to execute the computer program or the instructions and/or the data stored in the memory 1620, so that the method in the foregoing method embodiment is performed. Optionally, the apparatus 1600 includes one or more processors 1610.

Optionally, the memory 1620 may be integrated with the processor 1610, or the memory 1620 and the processor 1610 are separately disposed.

Optionally, as shown in FIG. 16, the apparatus 1600 may further include a transceiver 1630. The transceiver 1630 is configured to receive and/or send a signal. For example, the processor 1610 is configured to control the transceiver 1630 to receive and/or send the signal.

In a solution, the apparatus 1600 is configured to implement operations executed by the network device (for example, each of the foregoing network elements) in the foregoing method embodiments.

An embodiment of this application further provides a computer-readable storage medium. The computer-readable storage medium stores computer instructions used to implement the method performed by the network device (for example, each network element) in the foregoing method embodiments.

For example, when the computer program is executed by a computer, the computer is enabled to implement the method performed by the network device in the foregoing method embodiments.

An embodiment of this application further provides a computer program product including instructions. When the instructions are executed by a computer, the computer is enabled to implement the method performed by the network device (for example, each network element) in the foregoing method embodiments.

An embodiment of this application further provides a communication system. The communication system includes the network device (for example, each network element) in the foregoing embodiments, for example, includes the terminal management function network element and the charging network element.

For explanations and beneficial effects of related content of any one of the apparatuses provided above, refer to the corresponding method embodiments provided above. Details are not described herein again.

It should be understood that, the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In embodiments of this application, the word "example" or "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be understood that sequence numbers of the foregoing processes do not mean execution sequences in various embodiments of this application. The execution sequence of the processes should be determined based on functions and internal logic of the processes, and should not be construed as any limitation on the implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, and the UE or the base station do not need to perform a determining action during implementation, and do not mean another limitation either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." or "at least one type of..." in this specification represents all or any combination of listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information. The terms "include", "contain", "have", and their variants all mean "include but are not limited to", unless otherwise specifically emphasized in another manner.

It should be understood that, "first", "second", and various numerical numbers (for example, "#1" and "#2") shown in this application are merely for ease of description, and are used to distinguish between objects, but are not intended to limit the scope of embodiments of this application, for example, are used to distinguish between different messages, but are not for describing a particular order or sequence. It should be understood that the objects described in such a way are interchangeable in a proper circumstance, so that a solution other than embodiments of this application can be described.

A person of ordinary skill in the art may be aware that, in combination with the examples described in embodiments disclosed in this specification, units and algorithm steps may be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging method, comprising:
receiving, by a terminal management function network element, a first message from an application network element of an application, wherein the first message is used to request to execute a first operation for a target terminal;
sending, by the terminal management function network element, a second message, wherein the second message is used to request to start charging for the first operation for the target terminal; and
sending, by the terminal management function network element, first charging information, wherein the first charging information comprises execution information of one or more terminals in the target terminal, and the first charging information is used to charge for a process in which the first operation is executed for the one or more terminals.

2. The method according to claim 1, wherein the one or more terminals comprise a first terminal, and before the sending, by the terminal management function network element, first charging information, the method further comprises:
obtaining, by the terminal management function network element, first information, wherein
the first information indicates that execution of the first operation for the first terminal is completed; or
the first information comprises execution information of the first terminal.

3. The method according to claim 2, wherein the first information is from a first access network device or the application network element, wherein
the first access network device is configured to execute the first operation for the first terminal.

4. The method according to claim 2 or 3, wherein the execution information of the first terminal comprises at least one of the following:
an identifier of the first terminal and an execution result of executing the first operation for the first terminal.

5. The method according to claim 1, wherein the one or more terminals comprise a terminal within a coverage area of a first access network device, and before the sending, by the terminal management function network element, first charging information, the method further comprises:
receiving, by the terminal management function network element, second information from the first access network device, wherein
the second information indicates that execution of the first operation for the terminal, in the target terminal, within the coverage area of the first access network device is completed; or
the second information comprises execution information of the terminal, in the target terminal, within the coverage area of the first access network device.

6. The method according to claim 5, wherein the execution information of the terminal, in the target terminals, within the coverage area of the first access network device comprises at least one of the following:
an identifier list of the terminal obtained by the first access network device, a quantity of terminals obtained by the first access network device, and an execution result of executing the first operation for the terminal obtained by the first access network device.

7. The method according to any one of claims 1 to 6, wherein the method further comprises:
determining, by the terminal management function network element, that execution of the first operation for the target terminal is completed; and
sending, by the terminal management function network element, a third message, wherein the third message is used to request to stop the charging for the first operation for the target terminal.

8. The method according to claim 7, wherein the method further comprises:
determining, by the terminal management function network element, one or more access network devices based on the first message; and
the determining, by the terminal management function network element, that execution of the first operation for the target terminal is completed comprises:
determining, by the terminal management function network element based on second information of the one or more access network devices, that the execution of the first operation for the target terminal is completed, wherein the second information indicates that execution of the first operation for terminals, in the target terminal, within coverage areas of the one or more access network devices is completed.

9. The method according to any one of claims 1 to 6, wherein the method further comprises:
when receiving the first message, starting, by the terminal management function network element, a timer for executing the first operation for the target terminal; and
when the timer expires, sending, by the terminal management function network element, a third message, wherein the third message is used to request to stop the charging for the first operation for the target terminal.

10. A charging method, comprising:
receiving, by a session management network element, a fourth message, wherein the fourth message is used to request to establish a first session, the first session is used for transmission of execution information of executing a first operation for one or more terminals in a target terminal, the fourth message comprises a first identifier, and the first identifier identifies charging initiated by a terminal management function network element for the first operation for the target terminal;
sending, by the session management network element, a fifth message, wherein the fifth message is used to request to start the charging for the first operation for the target terminal, and the fifth message comprises the first identifier; and
sending, by the session management network element, second charging information, wherein the second charging information comprises the execution information of the one or more terminals in the target terminal, and the second charging information is used to charge for a process in which the first operation is executed for the one or more terminals.

11. The method according to claim 10, wherein the one or more terminals comprise a first terminal, and before the sending, by the session management network element, second charging information, the method further comprises:
receiving, by the session management network element, first information, wherein the first information indicates that execution of the first operation for the first terminal is completed, or the first information comprises execution information of the first terminal.

12. The method according to claim 11, wherein the first information is from a first access network device or an application network element, wherein
the first access network device is configured to execute the first operation for the first terminal.

13. The method according to claim 14 or 12, wherein the execution information of the first terminal comprises at least one of the following: an identifier of the first terminal and an execution result of executing the first operation for the first terminal.

14. The method according to claim 10, wherein the one or more terminals comprise a terminal within a coverage area of a first access network device, and before the sending, by the session management network element, second charging information, the method further comprises:
receiving, by the session management network element, second information from the first access network device, wherein the second information indicates that execution of the first operation for the terminal within the coverage of the first access network device is completed, or the second information comprises execution information of the terminal, in the target terminal, within the coverage area of the first access network device.

15. The method according to claim 14, wherein the execution information of the terminal, in the target terminal, within the coverage area of the first access network device comprises at least one of the following:
an identifier list of the terminal obtained by the first access network device, a quantity of terminals obtained by the first access network device, and an execution result of executing the first operation for the terminal obtained by the first access network device.

16. The method according to any one of claims 10 to 15, wherein the method further comprises:
sending, by the session management network element, a sixth message, wherein the sixth message is used to request to stop the charging for the first operation for the target terminal.

17. A charging method, comprising:
receiving, by a first user plane network element, first data, wherein the first data comprises first information or second information; and
sending, by the first user plane network element, the first information or the second information, wherein
the first information indicates that execution of a first operation for a first terminal is completed, or the first information comprises execution information of the first terminal; and
the second information indicates that execution of the first operation for a terminal within a coverage area of a first access network device is completed, or the second information comprises execution information of the terminal within the coverage of the first access network device.

18. The method according to claim 17, wherein the first user plane network element is a terminal management user plane function network element or a user plane network element.

19. The method according to claim 17 or 18, wherein the execution information of the first terminal comprises at least one of the following:
an identifier of the first terminal and an execution result of executing the first operation for the first terminal.

20. The method according to claim 17 or 18, wherein the execution information of the terminal within the coverage of the first access network device comprises at least one of the following:
an identifier list of the terminal obtained by the first access network device, a quantity of terminals obtained by the first access network device, and an execution result of executing the first operation for the terminal obtained by the first access network device.

21. The method according to any one of claims 17 to 20, wherein the method further comprises:
receiving, by the first user plane network element, a policy rule, wherein the policy rule is used to detect the first information or the second information.

22. A charging method, comprising:
receiving, by a terminal management function network element, a seventh message from an application network element of an application, wherein the seventh message is used to request to execute a first operation for a target terminal;
sending, by the terminal management function network element, an eighth message to a charging network element, wherein the eighth message is used to request to start charging for the first operation for the target terminal, the eighth message comprises a first identifier, and the first identifier identifies the charging initiated by the terminal management function network element for the first operation for the target terminal;
sending, by the terminal management function network element, a ninth message to an access and mobility management network element, wherein the ninth message is used to request to execute the first operation for the target terminal, and the ninth message comprises the first identifier;
sending, by the access and mobility management network element, a fourth message to a session management network element, wherein the fourth message is used to request to establish a first session, the first session is used for transmission of execution of the target terminal, and the fourth message comprises the first identifier;
sending, by the session management network element, a fifth message to the charging network element, wherein the fifth message is used to request to start the charging for the first operation for the target terminal, and the fifth message comprises the first identifier; and
associating, by the charging network element, the eighth message with the fifth message based on the first identifier.

23. The method according to claim, wherein the target terminal comprises a first terminal, and the method further comprises:
receiving, by the session management network element, first information, wherein the first information indicates that execution of the first operation for the first terminal is completed, or the first information comprises execution of the first terminal;
sending, by the session management network element, second charging information, wherein the second charging information comprises information about the first terminal; and
generating, by the charging network element based on the second charging information, a charging data record for executing the first operation for the first terminal.

24. The method according to claim 23, wherein the information about the first terminal comprises an identifier of the first terminal and an execution result of executing the first operation for the first terminal.

25. The method according to claim 22, wherein one or more terminals comprise a terminal within a coverage area of a first access network device, and the method further comprises:
sending, by the first access network device, second information to the session management network element, wherein the second information indicates that execution of the first operation for the terminal, in the target terminal, within the coverage area of the first access network device is completed, or the second information comprises execution information of the terminal, in the target terminal, within the coverage area of the first access network device;
sending, by the session management network element, second charging information, wherein the second charging information comprises the execution information of the terminal within the coverage area of the first access network device; and
generating, by the charging network element based on the second charging information, a charging data record for executing the first operation for the terminal, in the target terminal, within the coverage area of the first access network device.

26. The method according to claim 25, wherein the execution information of the terminal within the coverage area of the first access network device comprises at least one of the following:
an identifier list of the terminal obtained by the first access network device, a quantity of terminals obtained by the first access network device, and an execution result of executing the first operation for the terminal obtained by the first access network device.

27. The method according to any one of claims 22 to 26, wherein the method further comprises:
sending, by the session management network element, a sixth message to the charging network element, wherein the sixth message is used to request to stop the charging for the first operation for the target terminal.

28. The method according to any one of claims 22 to 27, wherein the method further comprises:
determining, by the terminal management function network element, that execution of the first operation for the target terminal is completed; and
sending, by the terminal management function network element, a tenth request message to the charging network element, wherein the tenth request message is used to request to stop the charging for the first operation for the target terminal.

29. The method according to any one of claims 22 to 27, wherein the method further comprises:
when receiving the seventh message, starting, by the terminal management function network element, a timer for executing the first operation for the target terminal; and
when the timer expires, sending, by the terminal management function network element, a tenth request message to the charging network element, wherein the tenth request message is used to request to stop the charging for the first operation for the target terminal.

30. A communication apparatus, comprising units or modules configured to perform the method according to any one of claims 1 to 9, comprising units or modules configured to perform the method according to any one of claims 10 to 16, or comprising units or modules configured to perform the method according to any one of claims 17 to 21.

31. A communication system, comprising a device configured to perform the method according to any one of claims 22 to 29.

32. A computer-readable storage medium, wherein the computer-readable storage medium stores computer instructions, and when the computer instructions are run on a computer, the method according to any one of claims 1 to 21 is performed.

33. A computer program product, comprising instructions, wherein when the computer instructions are run on a computer, the method according to any one of claims 1 to 21 is performed.
